(19) Europäisches Patentamt
European Patent Office
Office européen des brevets

(11) **EP 4 738 731 A1**

(12) **EUROPEAN PATENT APPLICATION**

(43) Date of publication:
06.05.2026 Bulletin 2026/19

(21) Application number: 25212787.3

(22) Date of filing: 31.10.2025

(51) International Patent Classification (IPC):
*H04B 17/12* (2015.01)    *H04W 56/00* (2009.01)
*H04B 7/06* (2006.01)

(52) Cooperative Patent Classification (CPC):
**H04B 17/12**; H04B 7/0617

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 01.11.2024  US 202463715434 P

(71) Applicant: Space Exploration Technologies Corp.
Hawthorne, California 90250 (US)

(72) Inventors:
• **PEPIN, Eric**
  **HAWTHORNE, 90250 (US)**
• **PARTRIDGE, David**
  **HAWTHORNE, 90250 (US)**
• **SMITH, Hui**
  **HAWTHORNE, 90250 (US)**

(74) Representative: **Mewburn Ellis LLP**
**Aurora Building**
**Counterslip**
**Bristol BS1 6BX (GB)**

(54) **TEMPERATURE DRIFT COMPENSATION FOR LOCAL OSCILLATORS IN PHASED ARRAY ANTENNAS**

(57)    A phased array antenna system may include a measurement network. A phased array antenna system may include a first digital beamformer (DBF) coupled to the measurement network and configured to transmit a first radio frequency (RF) calibration signal onto the measurement network. A phased array antenna system may include a second DBF coupled to the measurement network and configured to receive a first RF signal, derived from the first RF calibration signal, from the measurement network, the second DBF comprising a processor configured to: compute, based on the first RF signal, a phase difference between the first RF signal and a second RF signal; and compute a phase compensation to be applied by at least one of the first DBF or the second DBF based on the phase difference.

900

| TRANSMIT, FROM A FIRST DBF, A FIRST RF SIGNAL TO A MEASUREMENT NETWORK | 910 |
| TRANSMIT, FROM A SECOND DBF, A SECOND RF SIGNAL TO THE MEASUREMENT NETWORK | 920 |
| OBTAIN A FIRST SAMPLE OF THE FIRST RF SIGNAL AND A SECOND SAMPLE OF THE SECOND RF SIGNAL | 930 |
| RECEIVE THE FIRST SAMPLE AND THE SECOND SAMPLE AT THE FIRST DBF | 940 |
| COMPUTE A PHASE DIFFERENCE BETWEEN THE FIRST RF SIGNAL AND THE SECOND RF SIGNAL | 950 |
| APPLY A PHASE COMPENSATION, BASED ON THE DIFFERENCE, BY AT LEAST ONE OF THE FIRST DBF OR THE SECOND DBF | 960 |

FIG. 9

EP 4 738 731 A1

**Description**

CROSS-REFERENCE TO RELATED APPLICATIONS

This application claims priority to U.S. Provisional Patent Application No. 63/715,434 titled Temperature Drift Compensation for Local Oscillators in Phased Array Antennas, filed on November 1, 2024.

TECHNICAL FIELD

The present disclosure pertains to phased array antennas for satellite communication systems and, more particularly, systems and methods for temperature drift compensation for local oscillators in phased array antennas.

BACKGROUND

An antenna (such as a dipole antenna) typically generates radiation in a pattern that has a preferred direction. For example, the generated radiation pattern is stronger in some directions, i.e., the main lobes, and weaker in other directions, i.e., the side lobes. Likewise, when receiving electromagnetic signals, the antenna has the same preferred direction. Signal quality (e.g., signal to noise ratio or SNR), whether in transmitting or receiving scenarios, can be improved by aligning the preferred direction of the antenna with a direction of the target or source of the signal. However, it is often impractical or inefficient to physically reorient the antenna with respect to the target or source of the signal, i.e., to mechanically scan. Additionally, the exact location of the source/target may not be known. To overcome some of the above shortcomings of a mechanically scanned antenna, a phased array antenna can be composed of an array of antenna elements, each having an electronically controlled phase and amplitude. An advantage of a phased array antenna is its ability to transmit and/or receive signals in a preferred direction (e.g., the antenna's beamforming ability) by adjusting each antenna element's phase shift and amplitude to direct the resulting wavefront, that is, without mechanically repositioning or reorientating the array.

It would be advantageous to configure phased array antennas and associated circuitry having improved accuracy, stable performance over temperature, reduced weight, reduced size, lower manufacturing cost, and/or lower power requirements. Accordingly, embodiments of the present disclosure are directed to these and other improvements in phased array antennas or portions thereof.

SUMMARY

In some examples, systems and techniques are described for compensating for temperature dependent phase drift in phased array antenna systems having multiple digital beamformers.

In some aspects, the techniques described herein relate to a phased array antenna system including: a measurement network; a first digital beamformer (DBF) coupled to the measurement network and configured to transmit a first radio frequency (RF) calibration signal onto the measurement network; and a second DBF coupled to the measurement network and configured to receive a first RF signal, derived from the first RF calibration signal, from the measurement network, the second DBF including a processor configured to: compute, based on the first RF signal, a phase difference between the first RF signal and a second RF signal; and compute a phase compensation to be applied by at least one of the first DBF or the second DBF based on the phase difference.

In some aspects, the techniques described herein relate to a digital beamformer (DBF) including: a first radio frequency input/output (RFIO) channel electrically coupled to a measurement network and configured to receive a first radio frequency (RF) signal over the measurement network; and a processor configured to: compute, based on the first RF signal, a phase difference between the first RF signal and a second RF signal; and apply a phase compensation based on the phase difference to a third signal to be transmitted or received.

In some aspects, the techniques described herein relate to a method of compensating for phase drift in a phased array antenna system, the method including: transmitting, from a first digital beamformer (DBF) of the phased array antenna system, a first RF signal to a measurement network; In some aspects, the techniques described herein relate to a phased array antenna system including: a measurement network; a first digital beamformer (DBF) coupled to the measurement network and configured to transmit a first radio frequency (RF) calibration signal onto the measurement network; and a second DBF coupled to the measurement network and configured to receive a first RF signal, derived from the first RF calibration signal, from the measurement network, the second DBF including a processor configured to: compute, based on the first RF signal, a phase difference between the first RF signal and a second RF signal; and compute a phase compensation to be applied by at least one of the first DBF or the second DBF based on the phase difference. In some aspects, the techniques described herein relate to a digital beamformer (DBF) including: a first radio frequency input/output (RFIO) channel electrically coupled to a measurement network and configured to receive a first radio frequency (RF) signal over the measurement network; and a processor configured to: compute, based on the first RF signal, a phase difference between the first RF signal and a second RF signal; and apply a phase compensation based on the phase difference to a third signal to be transmitted or received. In some aspects, the techniques described herein relate to a method of compensating for phase drift in a phased array antenna system, the method including: transmitting, from a first digital beamformer (DBF) of the phased array antenna system, a first RF signal to a measurement network; transmitting, from a second DBF of the phased array antenna system, a second RF signal to the measurement network; obtaining, by the measurement network, a first sample of the first RF signal and a second sample of the second RF signal; receiving the first sample and the second sample at the first DBF; computing a phase difference between the first RF signal and the second RF signal; and applying a phase compensation, based on the phase difference, by at least one of the first DBF or the second DBF. transmitting, from a second DBF of the phased array antenna system, a second RF signal to the measurement network; obtaining, by the measurement network, a first sample of the first RF signal and a second sample of the second RF signal; receiving the first sample and the second sample at the first DBF; computing a phase difference between the first RF signal and the second RF signal; and applying a phase compensation, based on the phase difference, by at least one of the first DBF or the second DBF.

This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings, and each claim.

The foregoing, together with other features and aspects, will become more apparent upon referring to the following specification, claims, and accompanying drawings.

DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:

FIG. 1 is a block diagram of a portion of an example phased array antenna system in accordance with some examples of the present disclosure;

FIG. 2 is top view of an example_antenna lattice in accordance with some examples of the present disclosure;

FIG. 3 is a block diagram of another example phased array antenna system shown in having a plurality of digital beamformer (DBF) chips in accordance with some examples of the present disclosure;

FIG. 4a is a schematic diagram of an example embodiment of a measurement network for use with a phased array antenna system in accordance with some examples of the present disclosure.

FIG. 4b is a schematic diagram of another example embodiment of a measurement network for use with a phased array antenna system in accordance with some examples of the present disclosure;

FIG. 5a is a schematic diagram of another example embodiment of a measurement network for use with a phased array antenna system in accordance with some examples of the present disclosure;

FIG. 5b is a schematic diagram of another example embodiment of a measurement network for use with a phased array antenna system in accordance with some examples of the present disclosure;

FIG. 6 is a functional block diagram of an example front end module for use in the phased array antenna shown in FIG. 1 and FIG. 3 in accordance with some examples of the present disclosure;

FIG. 7 is a functional block diagram of an example DBF in accordance with some examples of the present disclosure;

FIG. 8 illustrates an example computing device architecture, in accordance with some examples of the present disclosure; and

FIG. 9 is a flowchart illustrating an example method of compensating for phase drift in a phased array antenna system having multiple DBFs.

DETAILED DESCRIPTION

Embodiments of the disclosed apparatuses and methods relate to phased array antenna systems employing numerous digital beamformers and the phase synchronization of those digital beamformers. Examples of the devices, systems, and/or methods of various embodiments are provided below. An embodiment of the devices, systems, and/or methods can include any one or more, and any combination of, the examples described below.

References in the specification to "one embodiment," "an embodiment," "an illustrative embodiment," "an example," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. Additionally, it should be appreciated that items included in a list in the form of "at least one of A, B, and C" means one or more of A, one or more of B, and one or more of C. Conversely, items listed in the form of "at least one of A, B, or C" can mean one or more of (A); (B); (C); (A and B); (B and C); (A and C); or (A, B, and C).

Language such as "top surface", "bottom surface", "vertical", "horizontal", and "lateral" in the present disclosure is meant to provide orientation for the reader with reference to the drawings and is not intended to be the required orientation of the components or to impart orientation limitations into the claims.

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, it may not be included or may be combined with other features.

In a phased array antenna, each antenna element is driven by a dedicated radio frequency (RF) transmitter, or transmit circuit, and/or a dedicated RF receiver, or receive circuit. The terms "RF transmitter" and "RF receiver" are generally used herein to refer to the end-to-end collection of components operating between a digital system, i.e., a modem, and an antenna, or antenna element, for transmitting and receiving signals, respectively, including, for example and without limitation, digital baseband beamforming components, RF waveform generators/receivers, and analog beamforming components. In some implementations, all such components are packaged together in a beamformer chip. In the disclosed phased array antenna systems, digital baseband beamforming components and RF waveform generators/receivers are packaged together for one or more given antenna elements in a digital beamformer (DBF). The DBF communicates with a modem, for example, to exchange digital data for transmitting and receiving. When transmitting, the DBF's digital baseband beamforming components construct phase encoded beams to carry the digital data. The DBF's RF waveform generator components convert the phase encoded beams from digital to analog, up-convert to RF, and amplify for transmission by the array of antenna elements. When receiving, the DBF's RF waveform receiver components amplify beams received by the array of antenna elements, down-convert to baseband, and digitize analog signals (e.g., convert from analog to digital). The digital beams are then recombined, phase decoded, and digitally filtered before communicating the received digital data to the modem.

The DBF utilizes a local oscillator (LO) signal as its reference signal for performing up-conversion or down-conversion; the other input being a baseband (or intermediate frequency (IF)) signal for up-conversion or a received RF signal (or an IF signal) for down-conversion. In some implementations, the LO signal can be generated by a phase lock loop (PLL) circuit. In some implementations, the LO signal can be derived based on a frequency reference. For example, the LO signal may be generated by applying a frequency multiplication or division to a frequency reference (e.g., the output of a PLL). When transmitting, the baseband signal can be up-converted based on a transmit LO signal, and a phase of the resulting up-converted RF signal can be a function of a phase of the transmit LO signal. Likewise, when receiving, the RF signal can be down-converted based on a receive LO signal, and a phase of the resulting down-converted baseband (or IF) signal can be a function of a phase of the receive LO signal.

In the disclosed phased array antenna systems, the DBF is paired with one or more "front end module" (FEM), generally incorporating analog beamforming components. The FEM could be a distinct FEM device, or chip, driving one or more antenna elements; or the FEM could be a component grouping within a DBF device, or chip, in which the RF transmitter and/or RF receiver are packaged. A DBF package, or a DBF and FEM pair, may include numerous RF transmitters and/or RF receivers for corresponding antenna elements. Alternatively, each DBF and FEM could be packaged independently for a single antenna element.

When transmitting, each antenna element in the phased array transmits an RF signal with a respective desired phase and amplitude to emit a desired directional beam. In some cases, a desired phase and amplitude are achieved by applying a particular phase shift and/or gain at the FEM for each antenna element. In certain embodiments, the particular gain and/or phase shift to be applied can be based on an instruction from the DBF or other controller. The phase shifts and gains can be selected for each antenna element to produce constructive interference in a transmit direction (e.g., a beam steering direction). One or more RF signals can be distributed to each FEM from a DBF. In phased array antennas having a large number of antenna elements, there may be numerous DBFs, each driving a network of FEMs, and each FEM driving one or more antenna elements. Accordingly, a baseband digital signal is distributed to each DBF, conditioned and/or upconverted to RF or IF, and then distributed to each FEM.

When receiving, the phased array is configured to receive from a particular beam steering direction. The FEM for each antenna element applies desired phase shifts and gains to produce constructive interference of signals received over the air from the particular beam steering direction (e.g., a receive direction). Each antenna element in the phased array receives the same over the air RF signal at a different position on the array, generally resulting in a different phase and amplitude of the received RF signals at different antenna elements depending on a transmission location of the over the air RF signal, the relative position of the transmitter and the receiving phased array, and the position of the antenna element in the antenna lattice of the phased array. The desired phase shift and gain associated with the particular beam steering direction can be applied at the respective FEMs for each antenna element. In some cases, the particular gain and/or phase shift to be applied can be based on an instruction from a DBF or other controller. In some cases, by carefully applying gain and/or phase shifts to the received signals from the antenna elements, the received signals from different antenna elements can interfere constructively for signals received from the beam steering direction. The phase shifted and/or gain adjusted received RF signals are then routed to the DBF for recombination and/or down-conversion to a baseband or IF signal. As described above, in phased array antennas having a large number of antenna elements, there may be numerous DBFs, each receiving RF signals from a network of FEMs, and each FEM receiving from one or more antenna elements. Accordingly, the received RF signal is routed through each FEM to a corresponding DBF.

RF signals for transmission are distributed by each DBF to FEMs for transmission in a manner that preserves a known phase relationship between RF signals received at the FEMs. Similarly, RF signals received over the air must be routed through each FEM and to each DBF in a manner that preserves the phase relationships among all FEM outputs. Relative phase relationships can be maintained in transmitting by generating the RF signal within the DBF and distributing the RF signal along equidistant RF signal paths to each FEM. Relative phase relationships can be maintained in receiving by routing the received RF signal along equidistant RF signal paths between each FEM and a corresponding DBF. The RF signal paths may include, for example, hierarchical distribution through a chain of multiple beamformers and FEMs. The distribution chain may alternatively assume any other suitable architecture.

As the RF signals pass through each component in the RF signal path, the component imparts some amount of signal delay and/or phase shift. Equidistant RF signal paths carrying the RF signals generally means each RF signal path includes identical components imparting the same phase shift. Similarly, the LO signal generation and distribution to or within each DBF also imparts some amount of phase shift to the LO signal that can be exhibited in the up-converted RF signals or down-converted baseband signals. Equidistant LO signal paths generally mean each LO signal path to or within the DBF includes identical components imparting the same phase shift. However, it is realized herein, those identical components, whether in the LO signal path or the RF signal path, operate at disparate locations within a given system or subsystem and utilize potentially asymmetric circuits for generating and/or distributing the LO signals. For example, the components may be disposed on multiple printed circuit boards, mounted in multiple assemblies or subassemblies, or an asymmetric distance apart on a single printed circuit board. Consequently, within a phased array antenna system, the RF signals transmitted by each DBF or received and down-converted by each DBF may accumulate a unique phase shift along each permutation of the LO signal path and the RF signal path, relative to each other DBF. Moreover, the unique phase shift changes over time as component temperatures fluctuate along the LO signal path and the RF signal path. The temperature dependent phase shift changes over time are referred to herein as temperature drift or, more specifically for the RF signals generated based on an LO signal, "LO temperature drift." Generally, LO temperature drift cannot be resolved at initial calibration because it varies uniquely over time with each component's temperature over time. In at least some embodiments, LO temperature drift can be resolved with periodic calibration.

The disclosed communication systems and methods measure the actual phase difference between signal paths for each DBF over time and compensate for it at run time. In some cases, measured phase differences can be compared to initial calibration phase differences measured at an initial calibration temperature. For example, in certain embodiments, phase difference is measured for transmit modes and/or receive modes during idle time slots during run time, i.e., while operating. The new measurements are then compared to the corresponding initial calibration for transmit and/or receive and employed in computing, or adjusting, an LO temperature drift compensation for transmitting and/or receiving. The LO temperature drift compensation can be applied (a) within the DBF at baseband or RF or, alternatively, (b) included in instructions from the DBF, e.g., encoded with the RF signal or over a digital communication channel, to the FEMs for application to RF signals within the FEM. How the LO temperature drift compensation is applied may be the same or may differ for receive LO temperature drift compensation versus transmit LO temperature drift compensation. For example, in certain embodiments, transmit LO temperature drift compensation can be applied at the FEM while receive LO temperature drift compensation can be applied by the DBF at baseband.

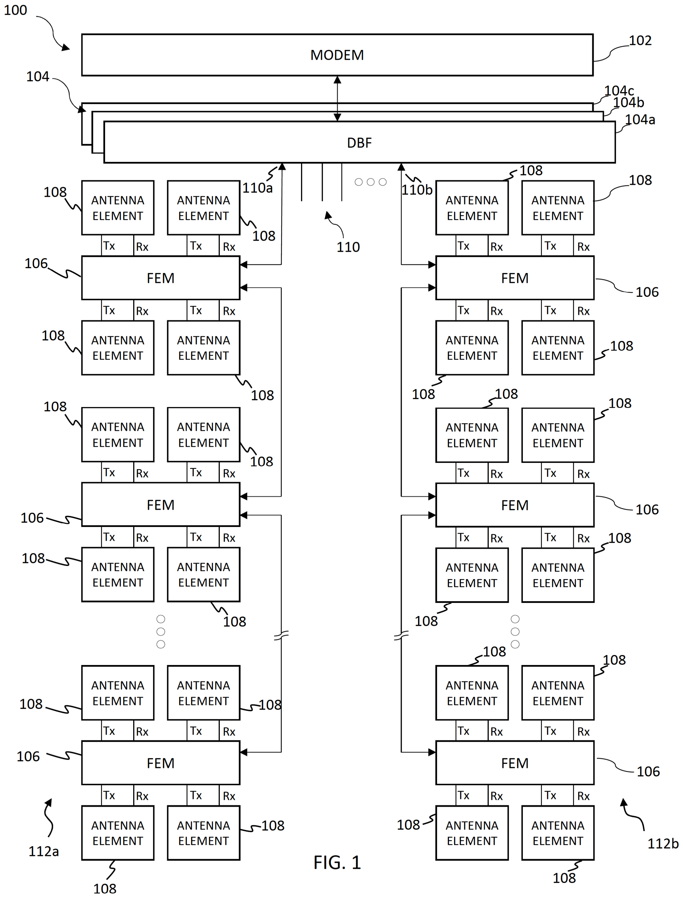

FIG. 1 is a block diagram of an example phased array antenna system 100 in accordance with some embodiments of the present disclosure. Phased array antenna system 100, also referred to as a node, communication device, device, and/or the like, is a component of a larger communications system. In some embodiments, phased array antenna system 100 is included in a wireless communications system, a wideband communications system, a satellite-based communications system, a terrestrial-based communications system, a non-geostationary (NGO) satellite communications system, a low Earth orbit (LEO) satellite communications system, and/or the like. For example, without limitation, phased array antenna system 100 can comprise a satellite, a user terminal associated with user device(s), a gateway, a repeater, or other device capable of receiving and transmitting signals with another device of a satellite communications system.

Phased array antenna system 100 includes a modem 102, a plurality of DBF chips 104 (referred to herein as DBFs), a plurality of FEMs 106, and a plurality of antenna elements 108. Modem 102 electrically couples, for example, to a first DBF 104a of the plurality of DBFs 104. Each DBF chip of the plurality of DBFs 104 electrically couples with a respective subset, or "chain," of the plurality of FEMs 106. Each DBF chip of the plurality of DBFs 104 is similarly configured and associated with a respective subset of the plurality of FEMs 106. The plurality of DBFs 104 may also be referred to as DBF chips, transmit/receive (Tx/Rx) DBF chips, Tx/Rx chips, transceivers, DBF transceivers, and/or the like.

Each FEM of the plurality of FEMs 106 electrically couples with a respective subset of the plurality of antenna elements 108. Each FEM of the plurality of FEMs 106 is similarly configured and associated with a respective subset of the plurality of antenna elements 108. A same subset of antenna elements can be used for transmit and receive signal paths within phased array antenna system 100. As an example, without limitation, each DBF chip of the plurality of DBFs 104 supports up to 4 FEMs 106 and up to 16 antenna elements (M=16) of the plurality of antenna elements 108. Alternatively, DBFs 104 may support more or fewer antenna elements without departing from the scope of the present disclosure.

The plurality of DBFs 104 within the phased array antenna system 100 includes a number, L, of DBF chips (individually referred to by, for example, 104a, 104b, 104c, etc.). Each of the plurality of DBFs 104 is electrically coupled to another in a daisy chain arrangement, i.e., the ith DBF of the plurality of DBFs 104 is electrically coupled with the (*ith+1*) DBF. For example, DBF 104a is electrically coupled between modem 102 and DBF 104b. DBF 104b is electrically coupled between the DBF 104a and DBF 104c, and so on.

Each of the plurality of DBFs 104 includes an IC chip or IC chip package including a plurality of pins, in which at least a first subset of the plurality of pins is configured to communicate signals with its electrically coupled DBF chip(s) (and/or modem 102 in the case of DBF 104a). In certain embodiments, a second subset of the plurality of pins of a DBF 104 is configured to receive, for example, a global LO signal (or reference clock signal) from a distribution network (not shown). The global LO signal is generated by a global LO (not shown) supporting the plurality of DBFs 104, rather than each DBF 104 being supported by a dedicated LO. In certain embodiments, the LO is itself incorporated within one DBF of the plurality of DBFs 104. Cost savings are achieved by having a reduced number of electrical components within and supporting each DBF chip, space savings are achieved with fewer electrical components, and/or power savings are achieved by not continuously fully powering transmit and receive components, or from the reduced number of electrical components. In one illustrative example, the LO supports up to 100 DBF chips synchronized with the LO signal. In addition, in some cases, the LO may support more or fewer than 100 DBF chips without departing from the scope of the present disclosure. In alternative embodiments, the plurality of DBFs 104 each incorporate a LO for generating a LO signal within a given DBF.

In certain embodiments, the LO is an integrated circuit (IC) chip. In some embodiments, the LO is included within an IC chip with one or more additional components, e.g., a DBF 104 such as DBF 104a. The LO signal is supplied to each DBF chip of the plurality of DBFs 104 and, more specifically, to mixers included in the plurality of DBFs 104 to facilitate performance of frequency up-conversion to radio frequency (RF) signals to be transmitted and/or down-conversion of received RF signals. The LO may include, for example and without limitation, a transmit phase-locked loop (Tx PLL), a receive phase-locked loop (Rx PLL), a multiplexer (MUX) for selecting between transmit and receiver, and a power amplifier (PA).

The LO signal, in certain embodiments, is hierarchically distributed to each DBF chip of the plurality of DBFs 104 as a global LO. In some embodiments, the LO signal is generated and distributed within each of the plurality of DBFs 104. Generally, the signal pathway length from the LO to each mixer within the plurality of DBFs 104 is equal to each other. In other words, all of the LO signal pathway lengths are length matched to each other. The length matching ensures that there is no propagation delay difference, and thus, introduction of phase differences, in the LO signal delivered to the respective mixers within the plurality of DBFs 104. The precision of LO signal phase synchronization among the DBFs 104 facilitates synchronizing operations of all of the DBFs 104. In some embodiments, the LO signal is distributed to, or within, each DBF chip of the plurality of DBFs 104 with the same phase (or same phase range). Alternatively, the LO signal distribution to, or within, the plurality of DBFs 104 can have different phases that are synchronized to each other or otherwise addressed using calibration or compensation techniques.

A third subset of the plurality of pins is configured for transmitting or receiving RF signals (or IF signals or baseband signals). DBF 104a, for example, includes a plurality of RF input/output (RFIO) channels 110. Among the plurality of RFIO channels 110 is at least one RFIO channel electrically coupled with a daisy chain of serially coupled FEMs 106. FIG. 1 illustrates a first chain, or FEM series 112a, electrically coupled with a first RFIO channel 110a, and a second chain, or FEM series 112b, electrically coupled with a second RFIO channel 110b. The FEM series 112a and 112b may each include any number of serially fed, or daisy chained, FEMs 106. For example, first FEM series 112a and second FEM series 112b may include one, two, three, or more FEMs 106 electrically coupled in series to RFIO channel 110a and RFIO channel 110b, respectively.

RFIO channels 110a and 110b, when transmitting, are configured to feed an RF signal to FEM series 112a and 112b, respectively. The RF signal is the result of frequency up-conversion performed within DBF 104a based on, or as a function of, the LO signal, i.e., the RF signal for transmission has a phase that is a function of the phase of the transmit LO signal. In alternative embodiments, there may be a single daisy chain of FEMs 106 or more than two daisy chains of FEMs 106. Referring to the embodiment shown in FIG. 1, the RF signal is distributed to each of FEM series 112a and 112b over an equal length signal path to minimize phase shift differences between signals arriving at the inputs of FEM series 112a and 112b, which may result in phase errors in the RF signals provided to corresponding antenna elements 108 that emit the RF signals. Each FEM 106 may perform additional analog beamforming including, for example, phase shifting and/or amplification, before feeding each antenna element 108.

Referring again to the embodiment shown in FIG. 1, RFIO channels 110a and 110b, when receiving, are configured to receive an RF signal from FEM series 112a and 112b, respectively. The RF signal is received over the air at antenna elements 108 for each of the FEM series 112a and 112b. Each FEM 106 may perform analog beamforming on the received RF signal, including, for example, phase shifting and/or amplification. In certain embodiments, each FEM 106 may also perform down-conversion to baseband or an IF. The RF (or IF or baseband) signals are then combined and propagated through the respective FEM series 112a and 112b toward DBF 104a at RFIO channels 110a and 110b. DBF 104a, upon receipt of the RF signal, performs frequency down-conversion to a baseband or IF for further signal processing including, for example, analog to digital conversion.

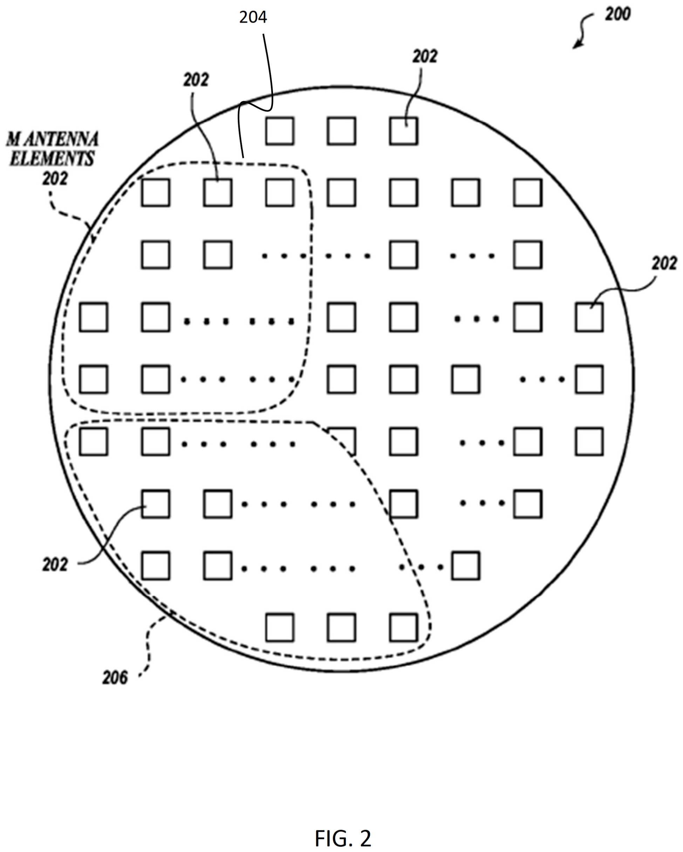

FIG. 2 is an example illustration of a top view of an antenna lattice 200 in accordance with some embodiments of the present disclosure. Antenna lattice 200 may be used, for example, in phased array antenna system 100 and, more specifically, for the plurality of antenna elements 108 shown in FIG. 1. Antenna lattice 200 includes a plurality of antenna elements 202 arranged in a particular pattern to define a particular antenna aperture. The antenna aperture is the area through which power is radiated by or to the plurality of antenna elements 202. Antenna lattice 200 defines a phased array antenna. A phased array antenna synthesizes a specified electric field (phase and amplitude) across an aperture.

Referring to FIG. 1 and FIG. 2, a subset 204 of the plurality of antenna elements 202 shown in FIG. 2 can form the M antenna elements 108 corresponding to a particular DBF 104, e.g., DBF 104a. Likewise, a subset 206 of the plurality of antenna elements 202 shown in FIG. 2 can form the M antenna elements 108 corresponding to another of the plurality of DBFs 104, e.g., 104b. The remaining subsets of antenna elements of the plurality of antenna elements 202 may be similarly associated with another remaining DBFs, e.g., 104c, of the plurality of DBFs 104.

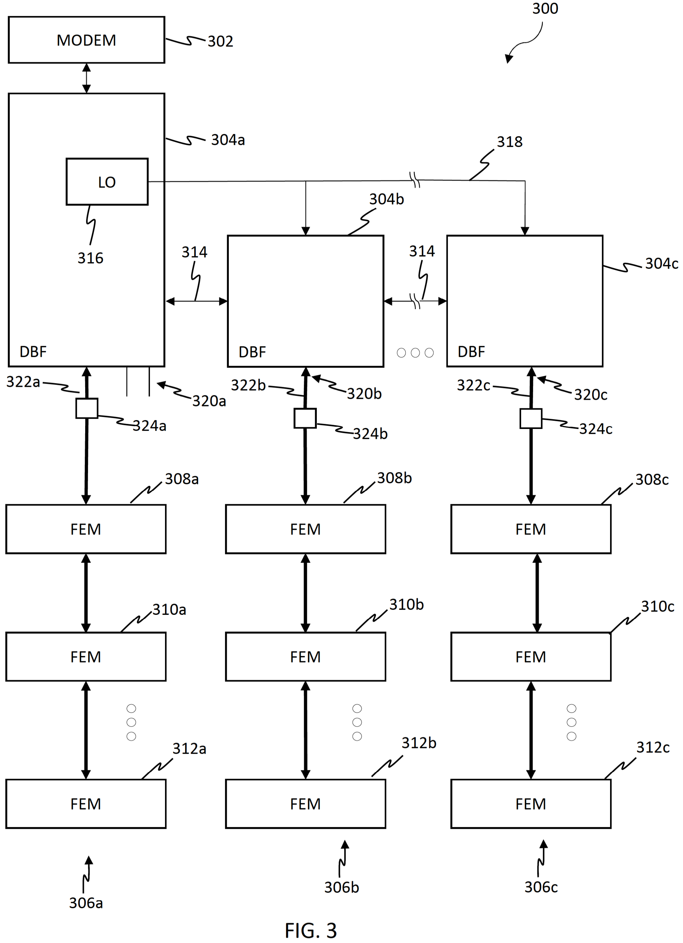

FIG. 3 is a block diagram of another example phased array antenna system 300. Phased array antenna system 300 can be similar to and perform similar functions to phased array antenna system 100 shown in FIG. 1. Phased array antenna system 300 includes a modem 302 and a plurality of DBFs 304, including DBFs 304a, 304b, and 304c. DBF 304a is electrically coupled to modem 302. Modem 302 can be similar to and perform similar functions to modem 102 shown in FIG. 1. DBFs 304 can be similar to and perform similar functions to DBFs 104 shown in FIG. 1.

When phased array antenna system 300 is transmitting, modem 302 sends digital signals to DBF 304a, including, for example, and without limitation, digital signals for up-conversion to RF and transmission by, for example, the plurality of antenna elements 108 shown in FIG. 1. Modem 302 may also send control signals to DBF 304a instructing DBF 304a how to direct beams (e.g., by controlling phase and/or amplitude of signals transmitted by antenna elements) emitted by phased array antenna system 300. Each DBF of the plurality of DBFs 304 is electrically coupled with one or more FEM series 306, including, for example, an FEM series 306a electrically coupled to DBF 304a, an FEM series 306b electrically coupled to DBF 304b, and an FEM series 306c electrically coupled to DBF 304c. Each of the one or more FEM series 306 includes a plurality of FEMs, e.g., FEM 308, FEM 310, FEM 312, where FEM 308a is a first FEM in FEM series 306a, FEM 310a is a second FEM in FEM series 306a, and FEM 312a is an Nth FEM in FEM series 306a; FEM 308b is a first FEM in FEM series 306b, FEM 310b is a second FEM in FEM series 306b, and FEM 312b is an Nth FEM in FEM series 306b; and FEM 308c is a first FEM in FEM series 306c, FEM 310c is a second FEM in FEM series 306c, and FEM 312c is an Nth FEM in FEM series 306c, where N is an integer. FIG. 3 illustrates each of the FEM series 306 having equal length with N FEMs. However, it should be understood that FEM series of differing lengths may be used without departing from the scope of the present disclosure. Each of the plurality of FEMs 308, 310, 312 can be similar to and perform similar functions to the plurality of FEMs 106 shown in FIG. 1. More specifically, each of the plurality of FEMs 308, 310, 312 apply the determined phase and amplitude of the RF signal emitted, for example, by each of the plurality of antenna elements 108.

Digital signals from modem 302 may be distributed directly to each DBF of the plurality of DBFs 304 or, alternatively, digital signals may be distributed hierarchically or serially among the plurality of DBFs 304. For example, DBF 304a may distribute digital signals serially, i.e., daisy chained, over a digital communication channel 314. Digital communication channel 314 extends, for example, between DBF 304a and DBF 304b, between DBF 304b and a subsequent DBF chip of the plurality of DBFs 304, e.g., between DBF 304b and DBF 304c.

When phased array antenna system 300 is receiving, modem 302 receives digital signals from DBF 304a, including, for example, and without limitation, digital signals down-converted from RF signals that were received, for example, over the air by the plurality of antenna elements 108 shown in FIG. 1. Digital signals may be routed directly to modem 302 by each DBF of the plurality of DBFs 304 or, alternatively, digital signals may be routed hierarchically or serially among the plurality of DBFs 304. For example, DBF 304a may receive digital signals serially, i.e., daisy chained, over digital communication channel 314, extending, for example, between DBF 304a and DBF 304b, between DBF 304b and a subsequent DBF chip of the plurality of DBFs 304, e.g., between DBF 304b and DBF 304c.

In certain embodiments, communications among the DBFs of the plurality of DBFs 304 also includes distribution of a global LO signal over a hierarchical or serial distribution network. In such embodiments, LO signal may be generated by an LO 316 implemented within one of the plurality of DBFs 304, e.g., DBF 304a. FIG. 3 illustrates a hierarchical distribution of the LO signal to each DBF of the plurality of DBFs 304 over a hierarchical distribution network 318. In certain embodiments, LO 316 may generate a receive (Rx) LO signal that is separate and distinct from a transmit (Tx) LO signal. The Rx LO signal and Tx LO signal may be generated at the same or different frequencies.

In certain embodiments, communications among the plurality of DBFs 304 also includes instructions for calibrating and compensating for phase shifts in LO distribution paths to, and/or within, each DBF of the plurality of DBFs 304 and respective RF distribution paths to the plurality of FEMs 308 and, for example, the plurality of antenna elements 108 shown in FIG. 1. In particular, each DBF of the plurality of DBFs 304 serially feeds an RF signal to FEM series 306, or serially routes a received RF signal from one or more FEM series 306 to a corresponding DBF chip of the plurality of DBFs 304, over a signal path electrically coupled to one RFIO channel of a plurality of RFIO channels 320. That signal path between a given DBF chip and the first FEM in a given FEM series 306, whether transmitting or receiving, introduces a phase shift. For example, when transmitting, DBF 304a transmits the RF signal over a signal path 322a to a first FEM 308a in FEM series 306a. Likewise, DBF 304b transmits the RF signal over a signal path 322b to a first FEM 308b in FEM series 306b, and DBF 304c transmits the RF signal over a signal path 322c to a first FEM 308c in FEM series 306c. Conversely, when receiving, DBF 304a receives the RF signal over signal path 322a from first FEM 308a in FEM series 306a. Likewise, DBF 304b receives the RF signal over signal path 322b from first FEM 308b in FEM series 306b, and DBF 304c receives the RF signal over signal path 322c from first FEM 308c in FEM series 306c.

As noted above, each signal path, among FEM series 306a, 306b, and 306c, is conventionally equidistant, i.e., the signal paths each include identical components that impart the same phase shift. However, the imparted phase shift can vary over temperature and, consequently, over time as temperature changes. Each element within the signal path, e.g., a microstrip trace, an active component, or a passive component, is disposed at a unique position within the phased array antenna system, and therefore can vary uniquely in temperature over time. Likewise, the signals paths for LO signals distributed to, or generated within, each DBF of the plurality of DBFs 304 are conventionally equidistant, but the imparted phase shift can vary over temperature and time. Consequently, although equidistant, the LO and RF signal paths to, from, and within the plurality of DBFs 304 introduce a continuously variable phase shift over time, and also variable among the disparately located signal paths. The temperature dependent phase shift changes over time for the RF signals, which are generated based on, or as a function of, the LO signal, are the LO temperature drift.

Temperature dependent LO phase shifts accumulate over the LO and RF signal paths for each DBF of the plurality of DBFs 304 and can be measured at an output of each DBF of the plurality of DBFs 304, e.g., at RFIO channels 320a, 320b, and 320c. For example, in the embodiment shown in FIG. 3, a coupler 324a is inserted along signal path 322a between DBF 304a and first FEM 308a of FEM series 306a. Likewise, a coupler 324b is inserted along signal path 322b between DBF 304b and first FEM 308b of FEM series 306b, and a coupler 324c is inserted along signal path 322c between DBF 304c and first FEM 308c of FEM series 306c. Couplers 324a, 324b, and 324c direct a fraction, or a sample, of the signal power transmitted from DBFs 304a, 304b, and 304c, respectively, to a measurement network for determining phase shift differences among the plurality of DBFs 304. In certain embodiments, couplers 324a, 324b, and 324c each couple approximately -15 decibels (dB) of the transmitted RF signal into the measurement network. In alternative embodiments, couplers 324a, 324b, 324c may couple more or less power without departing from the disclosed systems and methods. As temperatures vary for the plurality of DBFs 304 and their respective LO and RF signal paths, the accumulated phase shifts observed at couplers 324a, 324b, and 324c vary, and they do not necessarily vary together or at the same rate. Phase shift differences may occur over time that can result ultimately in poor synchronization in the RF signals emitted or received by phased array antenna system 300 through, for example, different DBFs of the plurality of DBFs.

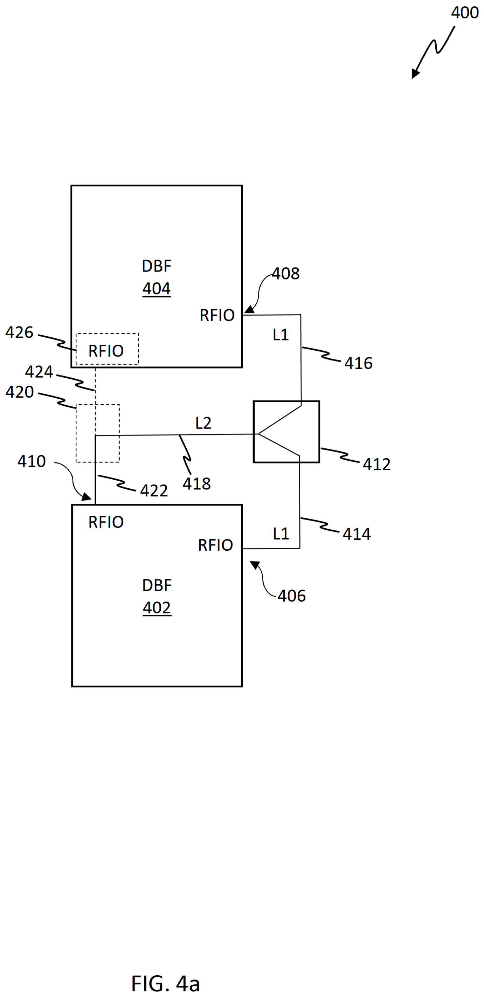

FIG. 4a is a schematic diagram of an example embodiment of a measurement network 400 for use with a phased array antenna system, such as phased array antenna system 100 shown in FIG. 1 or phased array antenna system 300 shown in FIG. 3. FIG. 4a illustrates, for example, and without limitation, two DBFs: a DBF 402 and a DBF 404. DBFs 402 and 404 can be similar to and perform similar functions as DBFs of the plurality of DBFs 104 shown in FIG. 1 or DBFs of the plurality of DBFs 304 shown in FIG. 3.

DBF 402 and DBF 404, although they generally include identical components, the components may exhibit different phase coefficients versus temperature, i.e., they affect phase differently as a function of temperature at which the phased array is operating. More specifically, LO signal generation and/or distribution paths within DBF 402 and DBF 404 may be asymmetric and/or exhibit different phase-coefficient versus temperature. Consequently, RF signals up-converted to RF and transmitted by DBF 402 and DBF 404, or RF signals received over the air and down-converted by DBF 402 and DBF 404, may exhibit different and varying phase shifts introduced by DBF 402, DBF 404, or the respective LO distribution paths to or within DBF 402 and DBF 404.

DBF 402 includes an RFIO channel 406 electrically coupled to measurement network 400. DBF 404 includes an RFIO channel 408 electrically coupled to measurement network 400. DBF 402 includes an RFIO measurement channel 410 electrically coupled to measurement network 400. Measurement network 400 includes an RF splitter/combiner 412 configured to combine RF calibration signals transmitted from RFIO channel 406 of DBF 402 and from RFIO channel 408 of DBF 404. Conversely, RF splitter/combiner 412 is configured to split an RF calibration signal that is, in certain embodiments, transmitted from RFIO measurement channel 410. RF splitter/combiner 412 may be, for example, a Wilkinson splitter/combiner.

During a calibration operation, DBF 402 transmits an RF calibration signal into measurement network 400 over a signal path 414 extending between RFIO channel 406 of DBF 402 and RF splitter/combiner 412, and DBF 404 transmits an RF calibration signal into measurement network 400 over a signal path 416 extending between RFIO channel 408 of DBF 404 and RF splitter/combiner 412.

In some cases, the RF calibration signal transmitted from DBF 402 is distinct from the RF calibration signal transmitted from DBF 404 to enable distinguishing the two RF signals, or samples, that are coupled into measurement network 400. For example, the RF calibration signal transmitted from DBF 402 through RFIO channel 406 may be a first coded calibration signal that is up-converted to RF using a LO signal distributed to or within DBF 402. Likewise, the RF calibration signal transmitted from DBF 404 through RFIO channel 408 may be a second coded calibration signal that is up-converted to RF using a LO signal distributed to or within DBF 404.

In some implementations, the RF calibration signal transmitted from DBF 402 and the RF calibration signal transmitted from DBF 404 may be transmitted at different times to enable distinguishing the two RF calibration signals.

Notably, the distribution of the LO signals to or within DBF 402 and DBF 404 may be asymmetric, and/or may have different phase coefficients versus temperature. In certain embodiments, the RF calibration signal transmitted from DBF 402 and the RF calibration signal transmitted from DBF 404 may be orthogonal, or 90 degrees out of phase, to enable distinguishing the two RF signals.

RF splitter/combiner 412 receives the two RF calibration signals and couples each RF calibration signal into a measurement path 418 coupled to RFIO measurement channel 410 of DBF 402. RF splitter/combiner 412 introduces a small, but non-zero, power loss to the combined signal relative to the original RF calibration signals transmitted by DBF 402 and DBF 404. For example, RF splitter/combiner 412 may perform a nearly lossless combination of signals from each input port to the combined output port. Alternative RF splitter/combiners 412 may be employed with higher or lower loss without departing from the disclosed measurement network. The combined signal, which is a combination of a first RF signal, or first sample, derived from the RF calibration signal transmitted by DBF 402 and a second RF signal, or second sample, derived from the RF calibration signal transmitted by DBF 404, is received at RFIO measurement channel 410. The first sample and the second sample may be, for example, versions of the RF calibration signals transmitted by DBF 402 and DBF 404, respectively, that are reduced in power.

DBF 402 down-converts the RF signals received at RFIO measurement channel 410 and separates them by, for example, identifying the first and second coded calibration signals from which they were derived. Once separated, DBF 402 determines the relative phase of the two RF calibration signals. In some cases, the determined phases of the down-converted RF signals may be directly compared to determine the relative phase. In some cases, a phase of each down-converted RF signal can be compared to a known phase reference, e.g., the original transmitted RF calibration signals.

In alternative embodiments, measurement network 400 may reverse the transmit direction of RF calibration signals through measurement network 400. For example, in alternative embodiments, DBF 402 is configured to transmit the RF calibration signal from RFIO measurement channel 410 into measurement path 418 and toward RF splitter/combiner 412, which divides the RF calibration signal between signal paths 414 and 416. Dividing the RF calibration signal transmitted from RFIO measurement channel 410 introduces a non-zero power loss to the divided signals relative to the original RF calibration signal transmitted by DBF 402. For example, RF splitter/combiner 412 may exhibit a -3 dB loss from the input port to each of the divided output ports, i.e., effectively dividing the original signal power between the two output ports. Alternative RF splitter/combiners 412 may be employed with higher or lower loss without departing from the disclosed measurement network. The divided signals, or samples, derived from the RF calibration signal transmitted by DBF 402, are versions of the RF calibration signal transmitted by DBF 402 that are reduced in power. The divided RF signals, or samples, are received at RFIO channel 406 of DBF 402 and RFIO channel 408 of DBF 404, respectively.

In such alternative embodiments, DBF 404 receives a second divided RF signal and down-converts it to baseband or IF using a LO signal distributed to or within DBF 404. DBF 404 digitizes the baseband or IF signal to and extracts phase information for the second divided RF signal that is then communicated to DBF 402. DBF 402 receives a first divided RF signal and down-converts it to baseband or IF using a LO signal distributed to or within DBF 402. DBF 402 digitizes the baseband or IF signal and extracts phase information for the first divided RF signal.

In another alternative embodiment, measurement network 400 distributes the combined RF calibration signal from RF splitter/combiner 412 to both DBF 402 and DBF 404 in a symmetric manner. For example, in such an alternative embodiment, measurement network 400 includes a second RF splitter combiner 420 that divides the combined RF signal, coupling, for example, half the signal power into a measurement path 422 to RFIO measurement channel 410 of DBF 402 and half the signal power into a measurement path 424 to an RFIO measurement channel 426 of DBF 404. DBF 404, in such an embodiment, is similar to and performs similar calibration functions as DBF 402.

In the embodiment shown in FIG. 4a, measurement network 400 captures the samples of the RF calibration signals during idle time (i.e., when the phased array antenna system is not otherwise transmitting or receiving) and DBF 402 compares the phase of the sample from DBF 402 to the phase of the sample from DBF 404, both received at RFIO measurement channel 410. The phase of each sample of the RF calibration signals is an accumulation of the phase shift introduced by a given signal path's elements, including both active components like DBF 402, DBF 404, and LOs, and passive elements like transmission lines, e.g., signal paths 414 and 416, propagating the RF signals and LO signal distribution networks to or within DBF 402 and DBF 404. The phase of each sample of the RF signal also accumulates the phase shift introduced along measurement network 400 itself. In particular, measurement path 418 introduces a phase shift in the combined RF calibration signals coupled into RFIO measurement channel 410.

DBF 402 determines a phase difference between the sample of the RF calibration signal transmitted by DBF 402 and the sample of the RF calibration signal transmitted by DBF 404. Once the phase difference is known, a phase compensation can be applied to synchronize later RF signals transmitted or received by DBF 402 and by DBF 404. Such phase compensations can be determined during initial calibration (e.g., park and measure); however, the phase differences can drift over time during operation due to temperature fluctuations in the phased array antenna system. Notably, samples of the RF calibration signals are captured and compared during idle time when operating, enabling DBF 402 to adjust the phase compensation as temperatures fluctuate among DBF 402 and DBF 404, along LO distribution paths to or within DBF 402 and DBF 404, and along measurement paths 414, 416, and 418, which approximates phase drift among future RF signals (e.g., during active transmission) transmitted from and received by DBF 402 and DBF 404. Because the RF signals are generated based on, or as a function of, a LO signal, the temperature dependent phase drift is referred to as LO temperature drift. Moreover, in certain embodiments where a Tx LO signal is distinct from a Rx LO signal, the above-described process is performed and phase compensations are computed for each LO channel frequency, e.g., for a transmit frequency and for receive frequency.

The phase difference between the RF calibration signal transmitted by DBF 402 and the RF calibration signal transmitted by DBF 404 are approximated by subtracting the phase of one from the phase of the other. Each phase can be modeled as a sum of the phase contributions of each element in that signal's signal path through DBF 402 or DBF 404 and through measurement network 400. For the purpose of modeling the measured phases, DBF 402 is referred to as a first DBF and DBF 404 is referred to as a second DBF. The measurement network is segmented into a series of lengths, e.g., L1 and L2. The phase of the RF calibration signal transmitted by DBF 402 at RFIO channel 406 and coupled into RFIO measurement channel 410 of DBF 402, $\theta_{DBF1 \to meas}$, is modeled as:

$$\theta_{DBF1 \to meas} = \theta_{LO} + \theta_{DBF1} + \theta_{L1} + \theta_{L2} + \theta_{LO} + \theta_{meas}$$

Where,

$\theta_{L01}$ is the phase contribution of the LO signal distributed to or within DBF 402 and employed in up-converting a coded calibration signal to RF and/or down-converting a received RF signal to baseband or IF,

$\theta_{DBF1}$ is the phase contribution of a transmit section, or "slice," for RFIO channel 406 in DBF 402,

$\theta_{L1}$ is the phase contribution of a first segment, L1, of measurement network 400 corresponding to signal path 414 electrically coupling DBF 402 to RF splitter/combiner 412,

$\theta_{L2}$ is the phase contribution of a second segment, L2, of measurement network 400 corresponding to measurement signal path 418 coupling RF splitter/combiner 412 to RFIO measurement channel 410, and

$\theta_{meas}$ is the phase contribution of a receive section, or slice, for RFIO measurement channel 410 that receives the sample of the RF calibration signal in DBF 402.

Notably, the phase contribution of the LO signal, $\theta_{L01}$, occurs twice because it contributes both on the transmission of the RF calibration signal from RFIO channel 406 of DBF 402 and the receiving of the RF signal, or sample, on RFIO measurement channel 410 of DBF 402.

Likewise, the phase of the RF calibration signal transmitted by DBF 404 at RFIO channel 408 and coupled into RFIO measurement channel 410 of DBF 402, $\theta_{DDBF2\rightarrow meas}$, is modeled as:

$$\theta_{DBF2\rightarrow meas} = \theta_{LO2} + \theta_{DBF2} + \theta_{L1} + \theta_{L2} + \theta_{LO1} + \theta_{meas}$$

Where,

$\theta_{LO}$ is the phase contribution of the LO signal distributed to or within DBF 404 and employed in up-converting a coded calibration signal to RF and/or down-converting a received RF signal to baseband or IF,

$\theta_{DBF2}$ is the phase contribution of a transmit section, or slice, for RFIO channel 408 in DBF 404, and

$\theta_{L1}$ is the phase contribution of a first segment, L1, of measurement network 400 corresponding to signal path 416 electrically coupling DBF 404 to RF splitter/combiner 412.

The phase difference, $\theta_{\Delta12}$, between the RF calibration signal transmitted by DBF 402 and the RF calibration signal transmitted by DBF 404 is therefore:

$$\theta_{\Delta12} = \theta_{DBF1\rightarrow meas} - \theta_{DBF2\rightarrow meas}$$

OR

$$\theta_{\Delta12} = (\theta_{LO1} - \theta_{LO}) + (\theta_{DBF1} - \theta_{DBF2})$$

Notably, the segments of measurement network 400 are presumed to be equal in path length and similar enough in phase coefficient versus temperature, and therefore cancel each other out when computing the phase difference. Likewise, the phase contribution of RFIO measurement channel 410, $\theta_{meas}$, and the phase of the LO signal distributed to or within DBF 402 and employed in down-converting received RF signals, $\theta_{LO1}$, cancel out when computing the phase difference. Accordingly, the remaining terms reduce to a difference in the phases of the respective LO signals in DBF 402 and DBF 404, and a difference in the phases of the respective transmit sections for RFIO channels on DBF 402 and DBF 404.

Each of the phase components (e.g., $\theta_{LO}$, $\theta_{LO2}$, $\theta_{DBF1}$, $\theta_{DBF2}$) listed above has a temperature-dependent phase value such that each phase component is a function of temperature (e.g., $\theta_{LO1}(t)$, $\theta_{LO2}(t)$, $\theta_{DBF1}(t)$, $\theta_{DBF2}(t)$.

During initial calibration, the phase differences can be measured at an initial calibration temperature ($t_{CAL}$). Accordingly, the phase differences $\theta_{\Delta12}$ and $\theta_{\Delta13}$ can be expressed for both the initial calibration temperature $t_{CAL}$ and at an operating temperature t.

A system of equations for determining a phase compensation for the relative LO phases $\theta_{LO1}(t)$, $\theta_{LO2}(t)$ at temperature t is shown below:

$$\theta_{\Delta12}(t) = (\theta_{LO1}(t) - \theta_{LO2}(t)) + (\theta_{DBF1}(t) - \theta_{DBF2}(t))$$

$$\theta_{\Delta12}(t_{CAL}) = (\theta_{LO1}(t_{CAL}) - \theta_{LO2}(t_{CAL})) + (\theta_{DBF1}(t_{CAL}) - \theta_{DBF}(t_{CAL}))$$

The measured phase difference $\theta_{\Delta12}(t_{CAL})$ for DBF 402 and DBF 404 at temperature $t_{CAL}$ can be subtracted from the measured phase difference $\theta_{\Delta12}(t)$ for DBF 402 and DBF 404 at temperature t is shown below:

$$\theta_{\Delta12}(t) - \theta_{\Delta12}(t_{CAL}) = \theta_{LO1}(t) - \theta_{LO2}(t) - (\theta_{LO1}(t_{CAL}) - \theta_{LO}(t_{CAL})) +$$
$$(\theta_{DBF1}(t) - \theta_{DBF2}(t)) - (\theta_{DBF1}(t_{CAL}) - \theta_{DBF2}(t_{CAL}))$$

The terms of the above equation can be re-arranged as follows:

$$\theta_{\Delta12}(\mathrm{t}) - \theta_{\Delta12}(t_{CAL}) = \theta_{LO}\ (\mathrm{t}) - \theta_{LO}\ (\mathrm{t}) - \theta_{LO}\ (t_{CAL}) + \theta_{LO}\ (t_{CAL}) +$$

$$(\theta_{DBF1}(\mathrm{t}) - \theta_{DBF1}(t_{CAL})) - (\theta_{DBF2}(\mathrm{t}) - \theta_{DBF2}(t_{CAL}))$$

Given physical proximity and efforts to match the measurement paths for DBF 402 and DBF 404, the transmit paths may be assumed to have the same temperature coefficients such that $\theta_{DBF1}$(t) - $\theta_{DBF1}$($t_{CAL}$) $\approx$ ($\theta_{DBF2}$(t) - $\theta_{DBF2}$($t_{CAL}$)). This assumption can be used to simplify $\theta_{\Delta12}$(t) - $\theta_{\Delta12}$($t_{CAL}$) to remove the phase contributions of the measurement paths for DBF1 and DBF2 as shown below:

$$\theta_{\Delta12}(\mathrm{t}) - \theta_{\Delta12}(t_{CAL}) \approx \theta_{LO}\ (\mathrm{t}) - \theta_{LO}\ (\mathrm{t}) - \theta_{LO}\ (t_{CAL}) + \theta_{LO}\ (t_{CAL})$$

Accordingly, the change in measured phase difference at temperature t relative to the measured phased difference at temperature $t_{CAL}$ (e.g., phase drift $\theta_{\Delta12,drift}$(t)) approximates a net phase shift to be applied to the LO phases $\theta_{LO}$,$\theta_{LO2}$.

DBF 402 can apply the net phase shift within DBF 402 directly to the RF signal DBF 402 transmits from other RFIO channels (not shown). For example, DBF 402 may apply the phase shift digitally at baseband or with an analog phase shifter.

In certain embodiments, DBF 402 and DBF 404 are electrically coupled to one or more FEMs, e.g., hierarchically fed or serially fed, by one or more beam forming signal paths. The one or more FEMs fed by DBFs 402 and 404 can be, for example, the plurality of FEMs 106 shown in FIG. 1 or the plurality of FEMs 308 shown in FIG. 3. DBF 402, in certain embodiments, instructs, via a digital communication channel, each of its FEMs to apply the net phase shift within each FEM. Similarly, DBF 402 instructs, via a digital communication channel, such as digital communication channel 314 shown in FIG. 3, DBF 404 to apply the net phase shift either directly within DBF 404 or by further instructing their corresponding FEMs.

In certain embodiments, one or more of the beam forming signal paths may include, in certain embodiments, RFIO channel 406 of DBF 402 and/or RFIO channel 408 of DBF 404. In such embodiments, RFIO channel 406 and RFIO channel 408 can be configurable for beamforming operation or for the disclosed calibration function. In other embodiments, RFIO channel 406 of DBF 402 and RFIO channel 408 of DBF 404 are dedicated channels for performing the disclosed calibration function.

In certain embodiments, measurement network 400 may be expanded to a third or fourth DBF (not shown) positioned, for example, adjacent to DBF 402 and or DBF 404. In such embodiments, DBF 402 performs similar functions to determine a phase difference between RF calibration signals transmitted by DBF 402 and/or DBF 404 and by the third or fourth DBF. Furthermore, measurement network 400 may be expanded to any number of DBF.

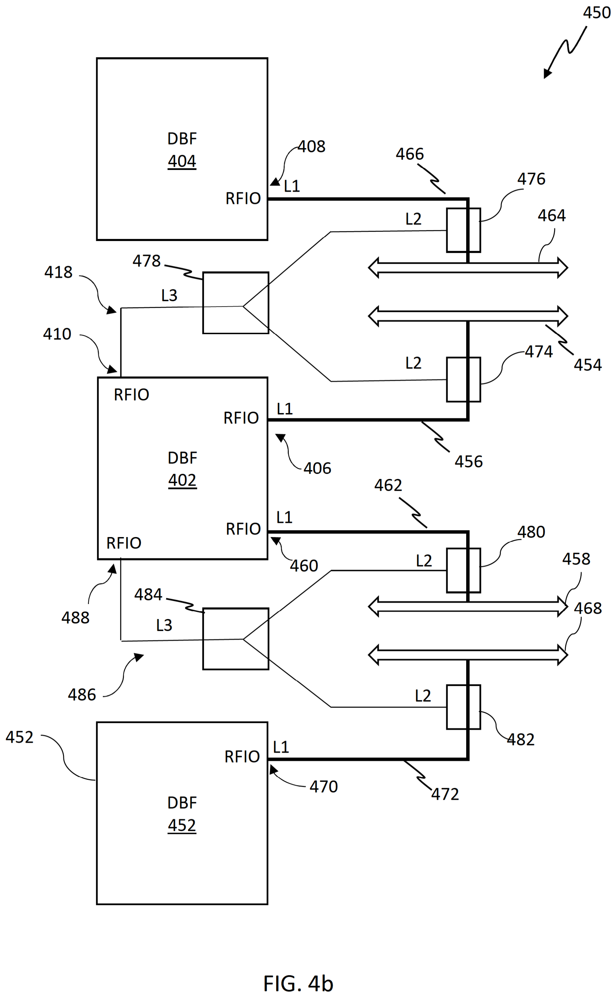

FIG. 4b is a schematic diagram of an example embodiment of a measurement network 450 for use with a phased array antenna system, such as phased array antenna system 100 shown in FIG. 1 or phased array antenna system 300 shown in FIG. 3. Measurement network 450 is a variation of measurement network 400 shown in FIG. 4a. More specifically, FIG. 4b illustrates, for example, and without limitation, three DBFs: DBF 402, DBF 404, and a third DBF, DBF 452. DBF 452 can be similar to and perform similar functions as DBF 402 and DBF 404 shown in FIG. 4a.

DBF 402 is electrically coupled to a first plurality of FEMs serially fed, or daisy chained, over a serial distribution network 454. DBF 402 feeds or receives from serial distribution network 454 on RFIO measurement channel 410 over a signal path 456. DBF 402 is electrically coupled to a second plurality of FEMs serially fed, or daisy chained, over a serial distribution network 458. DBF 402 feeds or receives from serial distribution network 458 on an RFIO channel 460 over a signal path 462.

DBF 404 is electrically coupled to a plurality of FEMs serially fed, or daisy chained, over a serial distribution network 464. DBF 404 feeds or receives from serial distribution network 464 on RFIO channel 408 over a signal path 466. Similarly, DBF 452 is electrically coupled to a plurality of FEMs serially fed, or daisy chained, over a serial distribution network 468. DBF 452 feeds or receives from serial distribution network 468 on an RFIO channel 470 over a signal path 472. The pluralities of FEMs fed by DBFs 402, 404, and 452 can be, for example, the plurality of FEMs 106 shown in FIG. 1 or the plurality of FEMs 308 shown in FIG. 3.

DBFs 402, 404, and 452, although they generally include identical components, the components may exhibit different phase coefficients versus temperature, i.e., they affect phase differently as a function of temperature at which the phased array is operating. More specifically, LO signal generation and/or distribution paths within DBF 402, DBF 404, and DBF 452 may be asymmetric and/or exhibit different phase-coefficient versus temperature. Consequently, LO signal generation and/or distribution paths within DBFs 402, 404, and 452, as well as signal paths 456, 462, 466, and 472, although they are equal in path length, can introduce different phase shifts relative to each other, because each element in the path length, including DBFs 402, 404, and 452, exhibits a unique phase-coefficient versus temperature.

Measurement network 450 includes a coupler 474 electromagnetically coupled to signal path 456. Coupler 474, in certain embodiments, is a capacitive coupler. In alternative embodiments, coupler 474 is an RF beam splitter or power divider, or a directional coupler. In the embodiment shown in FIG. 4b, RFIO channel 406 is shared by serial distribution network 454 and measurement network 450. When DBF 402 calibrates during operation, DBF 402 transmits an RF calibration signal over signal path 456 toward serial distribution network 454. Coupler 474 directs a portion of the RF calibration signal's power (e.g., -15 dB) into measurement network 450, capturing a sample of the RF calibration signal. The sample is itself an RF signal, i.e., a first RF signal, derived from the RF calibration signal, e.g., a version of the RF calibration signal that is reduced in power.

In alternative embodiments, RFIO channel 406 may be a dedicated channel for calibration, as is shown in FIG. 4a. In such embodiments, coupler 474 may be omitted and the RF calibration signal may be transmitted directly into measurement network 450.

In the embodiment shown in FIG. 4b, measurement network 450 includes a coupler 476 electromagnetically coupled to signal path 466. Coupler 476 can be similar to and perform similar functions as coupler 474 described above. RFIO channel 408, in the embodiment illustrated in FIG. 4b, is shared by serial distribution network 464 and measurement network 450. When DBF 404 calibrates during operation, DBF 404 transmits an RF calibration signal over signal path 466 toward serial distribution network 464. Coupler 476 directs a portion of the RF calibration signal's power (e.g., -15 dB) into measurement network 450, capturing a sample of the RF calibration signal. The sample is itself another RF signal, i.e., a second RF signal, derived from the RF calibration signal, e.g., a version of the RF calibration signal that is reduced in power.

In some embodiments, the RF calibration signal transmitted from DBF 402 is distinct from the RF calibration signal transmitted from DBF 404 to enable distinguishing the two RF signals, or samples, that are coupled into measurement network 450 by coupler 474 and coupler 476. For example, the RF calibration signal transmitted from DBF 402 through RFIO channel 406 may be a first coded calibration signal that is up-converted to RF using a LO signal distributed to or within DBF 402. Likewise, the RF calibration signal transmitted from DBF 404 through RFIO channel 408 may be a second coded calibration signal that is up-converted to RF using a LO signal distributed to or within DBF 404.

In some embodiments, the RF calibration signal transmitted from DBF 402 and the RF calibration signal transmitted from DBF 404 may be transmitted at different times to enable distinguishing the two RF calibration signals.

Notably, the generation and/or distribution of the LO signals to or within DBF 402 and DBF 404 may be asymmetric and/or may exhibit different phase coefficients versus temperature.

Measurement network 450 includes an RF splitter/combiner 478 that combines the RF calibration signals and couples the samples into first measurement path 418 that routes the combined RF signals, or samples, to first RFIO measurement channel 410 on DBF 402. RF splitter/combiner 478 may be similar to and perform similar functions as RF splitter/combiner 412 shown in FIG. 4a. DBF 402 down-converts the RF signals received at first RFIO measurement channel 410 and separates them by identifying the first and second coded calibration signals from which they were derived. Once separated, DBF 402 determines the phase of each either relative to each other or relative to a known phase reference.

In alternative embodiments, measurement network 450 may reverse the transmit direction of RF calibration signals through measurement network 450. For example, in alternative embodiments, DBF 402 is configured to transmit the RF calibration signal from first RFIO measurement channel 410 via first measurement path 418 to RF splitter/combiner 478, which divides the RF calibration signal between coupler 474 and coupler 476. Coupler 474 couples the RF calibration signal into signal path 456, where it propagates, as another RF signal, i.e., the first RF signal, to RFIO channel 406 of DBF 402. Coupler 476 couples the RF calibration signal into signal path 466, where it propagates, as yet another RF signal, i.e., the second RF signal, to RFIO channel 408 of DBF 404. DBF 404 receives the second RF signal and down-converts it to baseband or IF using a LO signal distributed to or within DBF 404. DBF 404 digitizes the baseband or IF signal and extracts phase information for the second RF signal that is then communicated to DBF 402. DBF 402 receives the first RF signal and down-converts it to baseband or IF using a LO signal distributed to or within DBF 402. DBF 402 the baseband or IF signal and extracts phase information for the first RF signal.

In the embodiment shown in FIG. 4b, measurement network 450 includes a coupler 480 electromagnetically coupled to signal path 462. Coupler 480 is similar to and performs similar functions as couplers 474 and 476. RFIO channel 460 is shared by serial distribution network 458 and measurement network 450. When DBF 402 calibrates during operation, DBF 402 transmits an RF calibration signal over signal path 462 toward serial distribution network 458. Coupler 480 couples a portion of RF calibration signal's power (e.g., -15 dB) into measurement network 450, capturing a sample of the RF calibration signal. The sample is itself an RF signal, i.e., a third RF signal, derived from the RF calibration signal, e.g., a version of the RF calibration signal that is reduced in power.

In the embodiment shown in FIG. 4b, measurement network 450 includes a coupler 482 electromagnetically coupled to signal path 472. Coupler 482 can be similar to and perform similar functions as couplers 474, 476, and 480 described above. RFIO channel 470, in the embodiment illustrated in FIG. 4b, is shared by serial distribution network 468 and measurement network 450. During a calibration operation, DBF 452 transmits an RF calibration signal over signal path 472 toward serial distribution network 468. Coupler 482 couples the RF calibration signal's power (e.g., -15 dB) into measurement network 450, capturing a sample of the RF calibration signal. The sample is itself another RF signal, i.e., a fourth RF signal, derived from the RF calibration signal, e.g., a version of the RF calibration signal that is reduced in power.

The RF calibration signal transmitted from RFIO channel 460 of DBF 402 is distinct from the RF calibration signal transmitted from DBF 452 to enable distinguishing the two RF signals, or samples, that are coupled into measurement network 450 by coupler 480 and coupler 482. For example, the RF calibration signal transmitted from DBF 402 through RFIO channel 460 may be a first coded calibration signal that is up-converted to RF using a LO signal distributed to or within DBF 402. Likewise, the RF calibration signal transmitted from DBF 452 through RFIO channel 470 may be a second coded calibration signal that is up-converted to RF using a LO signal distributed to or within DBF 452. Notably, the generation and/or distribution of the LO signals to or within DBF 402 and DBF 452 may be asymmetric and/or may exhibit different phase coefficients versus temperature.

In some embodiments, the RF calibration signal transmitted from DBF 402 and the RF calibration signal transmitted from DBF 452 may be transmitted at different times to enable distinguishing the two RF calibration signals.

Measurement network 450 includes an RF splitter/combiner 484 that combines the RF calibration signals and couples the samples into a second measurement path 486 that combines and routes the coupled RF signals, or samples, from couplers 480 and 482 to a second RFIO measurement channel 488 on DBF 402. DBF 402 down-converts the RF signals received at second RFIO measurement channel 488 and separates them by identifying the first and second coded calibration signals from which they were derived. Once separated, DBF 402 determines the relative phase of the two RF calibration signals. In some embodiments, the determined phases of the down-converted RF signals may be directly compared to determine the relative phase. In some embodiments, a phase of each down-converted RF signal can be compared to a known phase reference.

In certain alternative embodiments, RFIO channel 460 may be a dedicated channel for calibration. In such embodiments, coupler 480 may be omitted, as shown in the embodiment of FIG. 4a, and the RF calibration signal may be transmitted directly into measurement network 450. Moreover, either of RFIO channel 460 or RFIO channel 406 may be eliminated and the other dedicated for calibration and shared for transmitting a single RF calibration signal from DBF 402 into measurement network 450. Measurement network 450, in such embodiments, divides the RF calibration signal into first measurement path 418 and second measurement path 486.

In alternative embodiments, DBF 402 is configured to transmit the RF calibration signal from second RFIO measurement channel 488 into second measurement path 486, which divides the RF calibration signal between coupler 480 and coupler 482. Coupler 480 couples the RF calibration signal into signal path 462, where it propagates, as another RF signal, i.e., the third RF signal, to RFIO channel 460 of DBF 402. Coupler 482 couples the RF calibration signal into signal path 472, where it propagates, as yet another RF signal, i.e., the fourth RF signal, to RFIO channel 470 of DBF 452. DBF 452 receives the second RF signal and down-converts it to baseband or IF using a LO signal distributed to or within DBF 452. DBF 452 digitizes the baseband or IF signal and extracts phase information for the fourth RF signal that is then communicated to DBF 402. DBF 402 receives the third RF signal and down-converts it to baseband or IF using a LO signal distributed to or within DBF 402. DBF 402 digitizes the baseband or IF signal and extracts phase information for the first RF signal.

In the embodiment shown in FIG. 4b, measurement network 450 captures the samples of the RF calibration signals from couplers 474, 476, 480, and 482 during idle time (i.e., when the phased array antenna system is not otherwise transmitting or receiving) and compares the phase of the sample captured from coupler 474 to the phase of the sample captured from coupler 476, both received at RFIO measurement channel 410. Likewise, DBF 402 compares the phase of the sample captured from coupler 480 to the phase of the sample capture from coupler 482, both received at RFIO measurement channel 488. The phase of each sample of the RF signal is an accumulation of the phase shift introduced by a given signal path's elements, including both active components like DBFs 402, 404, 452, and LOs, and passive elements like transmission lines propagating the RF signals or distributing LO signals. The phase of each sample of the RF signal also accumulates the phase shift introduced along the *measurement network 450 itself. In particular, measurement paths 418 and 486 each introduce a phase shift in the samples captured by couplers 474, 476, 480, and 482.

DBF 402, in comparing the phase of the sample captured from coupler 474 to the phase of the sample captured from coupler 476, determines a phase difference between the RF signal transmitted by DBF 402 from RFIO channel 406 and the RF signal transmitted by DBF 404 from RFIO channel 408. If the phase difference is known, a phase compensation can be applied to synchronize later RF signals transmitted or received by DBF 402 and by DBF 404. Likewise, in comparing the phase of the sample captured from coupler 480 to the phase of the sample captured from coupler 482, DBF 402 determines a phase difference between the RF signal transmitted by DBF 402 from RFIO channel 460 and the RF signal transmitted by DBF 452 from RFIO channel 470. DBF 402 can then determine a phase compensation to be applied to synchronize later RF signals transmitted or received by DBF 402 and by DBF 452. Such phase compensations can be determined during initial calibration (e.g., park and measure); however, the phase differences can drift over time during operation due to temperature fluctuations in the phased array antenna system. Notably, samples of the RF signal are captured and compared during idle time when operating, enabling DBF 402 to adjust the phase compensation as temperatures fluctuate among DBFs 402, 404, and 452, and along signal paths 456, 462, 466, and 472, which results in phase drift among the RF signals transmitted and received from serial distribution networks 454, 458, 464, and 468, respectively. Because the RF signals are generated based on, or as a function of, a LO signal, the temperature dependent phase drift is referred to as LO temperature drift. Moreover, in certain embodiments where a Tx LO signal is distinct from a Rx LO signal, the above-described process is repeated and phase compensations are computed for each LO channel frequency, e.g., for transmit and for receive.

The phase difference between the RF calibration signal transmitted by DBF 402 and the RF calibration signal transmitted by DBF 404, or the phase difference between the RF calibration signal transmitted by DBF 402 and the RF calibration signal transmitted by DBF 452, are approximated by subtracting the phase of one from the phase of the other. Each phase can be modeled as a sum of the phase contributions of each element in that phase's respective measurement path, e.g., measurement paths 418 or 486. For the purpose of modeling the measured phases, DBF 402 is referred to as a first DBF, DBF 404 is referred to as a second DBF, and DBF 452 is referred to as a third DBF; and measurement paths 418 and 486 are segmented into a series of lengths, L1, L2, and L3. The phase of the RF signal sampled by coupler 474 on signal path 456, $\theta_{DBF1 \rightarrow meas}$, is modeled as:

$$\theta_{DBF1 \rightarrow meas1} = \theta_{LO} + \theta_{DBF1} + \theta_{L1} + \theta_{L2} + \theta_{L3} + \theta_{LO1} + \theta_{meas}$$

Where,

$\theta_{LO}$ is the phase contribution of the LO signal distributed to or within DBF 402 and employed in up-converting a coded calibration signal to RF and/or down-converting a received RF signal to baseband or IF,

$\theta_{DBF1}$ is the phase contribution of a transmit section, or "slice," for RFIO channel 406 in DBF 402,

$\theta_{L1}$ is the phase contribution of a first segment of measurement network 450, corresponding to signal path 456, L1,

$\theta_{L2}$ is the phase contribution of a second segment of measurement path 418, L2,

$\theta_{L3}$ is the phase contribution of a third segment of measurement path 418, L3, and

$\theta_{meas1}$ is the phase contribution of a receive section, or slice, for RFIO measurement channel 410 that receives the sample of the RF signal in DBF 402.

Notably, the phase contribution of the LO signal, $\theta_{LO}$, occurs twice because it contributes both on the transmission of the RF calibration signal from RFIO channel 406 of DBF 402 and the receiving of the RF signal, or sample, on RFIO measurement channel 410 of DBF 402. Likewise, the phase of the RF calibration signal sampled by coupler 476 on signal path 466, $\theta_{DBF2 \rightarrow meas1}$, is modeled as:

$$\theta_{DBF2 \rightarrow meas1} = \theta_{LO} + \theta_{DBF2} + \theta_{L1} + \theta_{L2} + \theta_{L3} + \theta_{LO1} + \theta_{meas1}$$

Where,

$\theta_{LO2}$ is the phase contribution of the LO signal distributed to or within DBF 404 and employed in up-converting a coded calibration signal to RF and/or down-converting a received RF signal to baseband or IF,

$\theta_{L1}$ is the phase contribution of a first segment of measurement network 450, corresponding to signal path 466, L1, and

$\theta_{DBF2}$ is the phase contribution of a transmit section, or slice, for RFIO channel 408 in DBF 404.

The phase difference, $\theta_{\Delta12}$, between the RF calibration signal transmitted by DBF 402 and the RF calibration signal transmitted by DBF 404 is therefore:

$$\theta_{\Delta12} = \theta_{DBF1 \rightarrow meas} - \theta_{DBF2 \rightarrow meas1}$$

OR

$$\theta_{\Delta 12} = (\theta_{LO} - \theta_{LO2}) + (\theta_{DBF1} - \theta_{DB})$$

Notably, the segments of, and components on, measurement path 418 are presumed to be equal in path length and similar enough in phase coefficient versus temperature, and therefore cancel each other out when computing the phase difference. Likewise, the phase contribution of RFIO measurement channel 410, $\theta_{meas1}$, and the phase of the LO signal distributed to or within DBF 402 and employed in down-converting received RF signals, $\theta_{LO1}$, cancel out when computing the phase difference. Accordingly, the remaining terms reduce to a difference in the phases of the respective LO signals in DBF 402 and DBF 404, and a difference in the phases of the respective transmit sections for RFIO channels on DBF 402 and DBF 404.

The phase of the RF calibration signal sampled by coupler 480 on signal path 462, $\theta_{DBF1 \to meas2}$, is modeled as:

$$\theta_{DBF1 \to meas} = \theta_{LO1} + \theta_{DBF1} + \theta_{L1} + \theta_{L2} + \theta_{L3} + \theta_{LO1} + \theta_{meas2}$$

Where,

$\theta_{LO}$ is the phase contribution of the LO signal distributed to or within DBF 402 and employed in up-converting a coded calibration signal to RF and down-converting received RF signals to baseband or IF,

$\theta_{DBF1}$ is the phase contribution of a transmit section, or slice, for RFIO channel 460 in DBF 402,

$\theta_{L1}$ is the phase contribution of a first segment of measurement network 450, L1, corresponding to signal path 462,

$\theta_{L2}$ is the phase contribution of a second segment of measurement path 486, L2,

$\theta_{L3}$ is the phase contribution of a third segment of measurement path 486, L3, and

$\theta_{meas}$ is the phase contribution of a receive section, or slice, for RFIO measurement channel 488 that receives the sample of the RF calibration signal in DBF 402.

Notably, the phase contribution of the LO signal, $\theta_{LO1}$, occurs twice because it contributes both on the transmission of the RF signal from RFIO channel 460 of DBF 402 and the receiving of the RF sample on RFIO measurement channel 488 of DBF 402. Likewise, the phase of the RF calibration signal sampled by coupler 482 on signal path 472, $\theta_{DBF3 \to meas2}$, is modeled as:

$$\theta_{DBF3 \to meas} = \theta_{LO} + \theta_{DBF3} + \theta_{L1} + \theta_{L2} + \theta_{L3} + \theta_{LO} + \theta_{me}$$

Where,

$\theta_{LO}$ is the phase contribution of the LO signal distributed to or within DBF 452 and employed in up-converting a coded calibration signal to RF and down-converting received RF signals to baseband or IF,

$\theta_{L1}$ is the phase contribution of a first segment of measurement network 450, L1, corresponding to signal path 472, and

$\theta_{DBF3}$ is the phase contribution of a transmit section, or slice, for RFIO channel 470 in DBF 452.

The phase difference, $\theta_{\Delta 13}$, between the RF calibration signal transmitted by DBF 402 and the RF calibration signal transmitted by DBF 452 is therefore:

$$\theta_{DBF1 \to meas2} - \theta_{DBF3 \to meas}$$

OR

$$\theta_{\Delta 13} = (\theta_{LO} - \theta_{LO3}) + (\theta_{DBF1} - \theta_{DBF3})$$

Notably, the segments of, and the components on, measurement path 486 are presumed to be equal in path length and similar enough in phase coefficient versus temperature, and therefore cancel each other out when computing the phase difference. Likewise, the phase contribution of RFIO measurement channel 488, $\theta_{meas2}$, and the phase of the LO signal distributed to or within DBF 402 for down-converting the received RF signals, $\theta_{LO1}$, cancel out when computing the phase difference. Accordingly, the remaining terms reduce to a difference in the phases of the respective LO signals in DBF 402 and DBF 452, and a difference in the phases of the respective transmit sections for RFIO channels on DBF 402 and DBF 452.

Each of the phase components (e.g., $\theta_{LO}$, $\theta_{LO2}$, $\theta_{LO}$, $\theta_{DBF1}$, $\theta_{DBF2}$, $\theta_{DBF3}$) listed above has a temperature-dependent phase value such that each phase component is a function of temperature (e.g., $\theta_{LO}(t)$, $\theta_{LO2}(t)$, $\theta_{LO}(t)$, $\theta_{DBF1}(t)$, $\theta_{DBF2}(t)$, $\theta_{DBF3}(t)$.

During initial calibration, the phase differences can be measured at an initial calibration temperature ($t_{CAL}$). Accordingly, the phase differences $\theta_{\Delta 12}$ and $\theta_{\Delta 13}$ can be expressed for both the initial calibration temperature $t_{CAL}$ and at an operating temperature t.

A system of equations for determining a phase compensation for the relative LO phases $\theta_{LO1}(t)$, $\theta_{LO2}(t)$ at temperature t is shown below:

$$\theta_{\Delta 12}(t) = (\theta_{LO}(t) - \theta_{LO2}(t)) + (\theta_{DB}(t) - \theta_{DBF2}(t))$$

$$\theta_{\Delta 12}(t_{CAL}) = (\theta_{LO1}(t_{CAL}) - \theta_{LO2}(t_{CAL})) + (\theta_{DBF1}(t_{CAL}) - \theta_{DBF2}(t_{CAL}))$$

The measured phase difference $\theta_{\Delta 12}(t_{CAL})$ for DBF 402 and DBF 404 at temperature $t_{CAL}$ can be subtracted from the measured phase difference $\theta_{\Delta 12}(t)$ for DBF 402 and DBF 404 at temperature t is shown below:

$$\theta_{\Delta 12}(t) - \theta_{\Delta 12}(t_{CAL}) = (\theta_{LO1}(t) - \theta_{LO}(t)) - (\theta_{LO1}(t_{CAL}) - \theta_{LO2}(t_{CAL})) +$$
$$(\theta_{DB}(t) - \theta_{DB}(t)) - (\theta_{DBF1}(t_{CAL}) - \theta_{DBF2}(t_{CAL}))$$

The terms of the above equation can be re-arranged as follows:

$$\theta_{\Delta 12}(t) - \theta_{\Delta 12}(t_{CAL}) = \theta_{LO1}(t) - \theta_{LO}(t) - \theta_{LO}(t_{CAL}) + \theta_{LO2}(t_{CAL}) +$$
$$(\theta_{DBF1}(t) - \theta_{DBF1}(t_{CAL})) - (\theta_{DBF2}(t) - \theta_{DB}(t_{CAL}))$$

Given physical proximity and efforts to match the measurement paths for DBF 402 and DBF 404, the transmit paths may be assumed to have the same temperature coefficients such that $(\theta_{DBF1}(t) - \theta_{DBF1}(t_{CAL})) \approx (\theta_{DBF2}(t) - \theta_{DBF2}(t_{CAL}))$. This assumption can be used to simplify $\theta_{\Delta 12}(t) - \theta_{\Delta 12}(t_{CAL})$ to remove the phase contributions of the measurement paths for DBF 402 and DBF 404 as shown below:

$$\theta_{\Delta 12}(t) - \theta_{\Delta 12}(t_{CAL}) \approx \theta_{LO1}(t) - \theta_{LO2}(t) - \theta_{LO1}(t_{CAL}) + \theta_{LO}(t_{CAL})$$

Accordingly, the change in measured phase difference at temperature t relative to the measured phased difference at temperature $t_{CAL}$ (e.g., phase drift $\theta_{\Delta 12,drift}(t)$) approximates a net phase shift to be applied to the LO phases $\theta_{LO}$, $\theta_{LO}$.

Similarly, a system of equations for determining a phase compensation for the relative LO phases $\theta_{LO1}(t)$, $\theta_{LO}(t)$ is shown below:

$$\theta_{\Delta 13}(t) = \theta_{LO1}(t) - \theta_{LO3}(t)) + \theta_{DBF1}(t) - \theta_{DBF3}(t)$$

$$\theta_{\Delta 13}(t_{CAL}) = (\theta_{LO}\ (t_{CAL}) - \theta_{LO3}(t_{CAL})) + (\theta_{DBF1}(t_{CAL}) - \theta_{DBF3}(t_{CAL}))$$

The measured phase difference $\theta_{\Delta 13}(t_{CAL})$ for DBF 402 and DBF 452 at temperature $t_{CAL}$ can be subtracted from the measured phase difference $\theta_{\Delta 13}(t)$ for DBF 402 and DBF 452 at temperature t is shown below:

$$\theta_{\Delta 13}(t) - \theta_{\Delta 13}(t_{CAL}) = (\theta_{LO}\ (t) - \theta_{LO3}(t)) - (\theta_{LO}\ (t_{CAL}) - \theta_{LO}\ (t_{CAL})) +$$
$$(\theta_{DBF1}(t) - \theta_{DBF3}(t)) - (\theta_{DBF1}(t_{CAL}) - \theta_{DBF3}(t_{CAL}))$$

The terms of the above equation can be re-arranged as follows:

$$\theta_{\Delta 13}(t) - \theta_{\Delta 13}(t_{CAL}) = \theta_{LO}\ (t) - \theta_{LO}\ (t) - \theta_{LO}\ (t_{CAL}) + \theta_{LO}\ (t_{CAL}) +$$
$$(\theta_{DBF1}(t) - \theta_{DBF1}(t_{CAL})) - (\theta_{DBF3}(t)\ - \theta_{DB}\ \ (t_{CAL}))$$

Given physical proximity and efforts to match the measurement paths for DBF 402 and DBF 452, the transmit paths may be assumed to have the same temperature coefficients such that $(\theta_{DBF1}(t) - \theta_{DBF1}(t_{CAL})) \approx (\theta_{DBF3}(t) - \theta_{DB}(t_{CAL}))$, which simplifies $\theta_{\Delta 13}(t) - \theta_{\Delta 13}(t_{CAL})$ as shown below:

$$\theta_{\Delta 13}(t) - \theta_{\Delta 13}(t_{CAL}) \approx \theta_{LO}\ (t) - \theta_{LO}\ (t) - \theta_{LO}\ (t_{CAL}) + \theta_{LO}\ (t_{CAL})$$

Accordingly, the change in measured phase difference at temperature t relative to the measured phased difference at temperature $t_{CAL}$ (e.g., phase drift $\theta_{13,drift}(t)$) approximates a net phase shift to be applied to the LO phases $\theta_{LO1}, \theta_{LO3}$.

DBF 402 can apply the net phase shifts within DBF 402 directly to the RF signal DBF 402 transmits from RFIO channels 406 and 460. For example, DBF 402 may apply the phase shift digitally at baseband or with an analog phase shifter. Alternatively, DBF 402, in certain embodiments, instructs, via a digital communication channel, each of its FEM series electrically coupled to serial distribution networks 454 and 468 to apply the net phase shift within each FEM. Similarly, DBF 402 instructs, via a digital communication channel, such as digital communication channel 314 shown in FIG. 3, DBFs 404 and 452 to apply the net phase shift either directly within DBF 404 and DBF 452, or by further instructing their corresponding FEM series electrically coupled to serial distribution networks 464 and 468, respectively.

In certain embodiments, measurement network 450 may be expanded to a fourth DBF (not shown) positioned, for example, adjacent to DBF 452. In such embodiments, DBF 452 performs similar functions as DBF 402 to determine a phase difference between RF calibration signals transmitted by DBF 452 and by the fourth DBF. Furthermore, measurement network 450 may be expanded to any number of DBF.

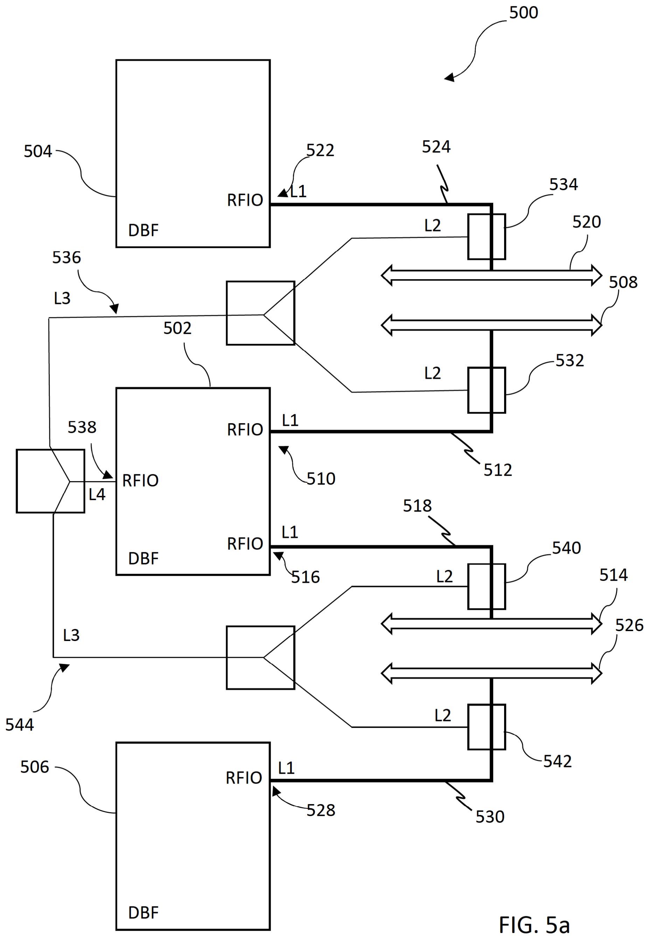

FIG. 5a is a schematic diagram of another example embodiment of a measurement network 500 for use with a phased array antenna system, such as phased array antenna system 100 shown in FIG. 1 or phased array antenna system 300 shown in FIG. 3. FIG. 5a illustrates, for example, and without limitation, three DBF chips: a DBF 502, a DBF 504, and a DBF 506. DBFs 502, 504, and 506 can be similar to and perform similar functions as the plurality of DBFs 104 shown in FIG. 1, the plurality of DBFs 304 shown in FIG. 3, or DBFs 402, 404, and 452 shown in FIG. 4a or 4b.

DBF 502 is electrically coupled to a first plurality of FEMs serially fed, or daisy chained, over a serial distribution network 508. DBF 502 feeds or receives from serial distribution network 508 on an RFIO channel 510 over a signal path 512. DBF 502 is electrically coupled to a second plurality of FEMs serially fed, or daisy chained, over a serial distribution network 514. DBF 502 feeds or receives from serial distribution network 514 on an RFIO channel 516 over a signal path 518.

DBF 504 is electrically coupled to a plurality of FEMs serially fed, or daisy chained, over a serial distribution network 520. DBF 504 feeds or receives from serial distribution network 520 on an RFIO channel 522 over a signal path 524. Similarly, DBF 506 is electrically coupled to a plurality of FEMs serially fed, or daisy chained, over a serial distribution network 526. DBF 506 feeds or receives from serial distribution network 526 on an RFIO channel 528 over a signal path 530. The pluralities of FEMs fed by DBFs 502, 504, and 506 can be, for example, the plurality of FEMs 106 shown in FIG. 1 or the plurality of FEMs 308 shown in FIG. 3.

DBFs 502, 504, and 506, although they generally include identical components, the components may exhibit different phase coefficients versus temperature, i.e., they affect phase differently as a function of temperature at which the phased array is operating. More specifically, LO signal generation and/or distribution paths within DBF 502, DBF 504, and DBF 506 may be asymmetric and/or exhibit different phase-coefficient versus temperature. Consequently, LO signal generation and/or distribution paths within DBFs 502, 504, and 506, as well as their respective signal paths 512, 518, 524, and 530, although they are equal in path length, can introduce different phase shifts relative to each other, because each element in the path length, including DBFs 502, 504, and 506, exhibits a unique phase-coefficient versus temperature.

Measurement network 500 includes a coupler 532 electromagnetically coupled to signal path 512. Coupler 532, in certain embodiments, is a capacitive coupler. In alternative embodiments, coupler 532 is an RF beam splitter or power divider, or a directional coupler. Coupler 532 is similar to and performs similar functions as couplers 474, 476, 480, and 482 shown in FIG. 4b. In the embodiment shown in FIG. 5a, RFIO channel 510 is shared by serial distribution network 508 and measurement network 500. During a calibration operation, DBF 502 transmits an RF calibration signal over signal path 512 toward serial distribution network 508. Coupler 532 receives the RF calibration signal and directs a portion of its power (e.g., -15 dB) into measurement network 500, capturing a sample of the RF calibration signal. The sample is itself an RF signal, i.e., a first RF signal, derived from the RF calibration signal, e.g., a version of the RF calibration signal that is reduced in power.

In alternative embodiments, RFIO channel 510 may be a dedicated channel for calibration. In such embodiments, coupler 532 may be omitted and the RF calibration signal may be transmitted directly into measurement network 500.

In the embodiment shown in FIG. 5a, measurement network 500 includes a coupler 534 electromagnetically coupled to signal path 524. Coupler 534 can be similar to and perform similar functions as coupler 532 described above. RFIO channel 522, in the embodiment illustrated in FIG. 5a, is shared by serial distribution network 520 and measurement network 500. When DBF 504 calibrates during operation, DBF 504 transmits an RF calibration signal over signal path 524 toward serial distribution network 520. Coupler 534 receives the RF calibration signal and directs a portion of its power (e.g., -15 dB) into measurement network 500, capturing a sample of the RF calibration signal. The sample is itself another RF signal, i.e., a second RF signal, derived from the RF calibration signal, e.g., a version of the RF calibration signal that is reduced in power.

Measurement network 500 includes a coupler 540 electromagnetically coupled to signal path 518. Coupler 540 is similar to and performs similar functions as couplers 532 and 534. RFIO channel 516 is shared by serial distribution network 514 and measurement network 500. During a calibration operation, DBF 502 transmits an RF calibration signal over signal path 518 toward serial distribution network 514. Coupler 540 receives the RF calibration signal and directs a portion of its power (e.g., -15 dB) into measurement network 500, capturing a sample of the RF calibration signal. The sample is itself an RF signal, i.e., a third RF signal, derived from the RF calibration signal, e.g., a version of the RF calibration signal that is reduced in power.

In the embodiment shown in FIG. 5a, measurement network 500 includes a coupler 542 electromagnetically coupled to signal path 530. Coupler 542 can be similar to and perform similar functions as couplers 532, 534, and 540 described above. RFIO channel 528, in the embodiment illustrated in FIG. 5a, is shared by serial distribution network 526 and measurement network 500. During a calibration operation, DBF 506 transmits an RF calibration signal over signal path 530 toward serial distribution network 526. Coupler 542 receives the RF calibration signal and directs a portion of its power (e.g., -15 dB) into measurement network 500, capturing a sample of the RF calibration signal. The sample is itself another RF signal, i.e., a fourth RF signal, derived from the RF calibration signal, e.g., a version of the RF calibration signal that is reduced in power.

Measurement network 500 includes a first measurement path 536 that combines, e.g., employing a beam combiner/splitter, and routes the coupled RF signals, or samples, from couplers 532 and 534 to an RFIO measurement channel 538 on DBF 502. Measurement network 500 includes a second measurement path 544 that combines, e.g., employing a beam combiner/splitter, and routes the coupled RF signals, or samples, from couplers 540 and 542 to RFIO measurement channel 538 on DBF 502.

The RF calibration signals transmitted from RFIO channel 510 of DBF 502, from RFIO channel 516 of DBF 502, from RFIO channel 522 of DBF 504, and RFIO channel 528 of DBF 506 are distinct from each other to enable distinguishing the four RF signals, or samples, that are coupled into measurement network 500 by couplers 532, 534, 540 and 542. In certain embodiments, for example, RF calibration signals transmitted from RFIO channel 510 of DBF 502 and RFIO channel 522 of DBF 504 may be orthogonal (i.e., 90 degrees phase shift) relative to the RF calibration signals transmitted from RFIO channel 516 of DBF 502 and RFIO channel 528 of DBF 506. The RF calibration signals may also employ different coding. For example, the RF calibration signal transmitted from DBF 502 through RFIO channel 510 may be a first coded calibration signal that is up-converted to RF using a LO signal distributed to or within DBF 502. Likewise, the RF calibration signal transmitted from DBF 504 through RFIO channel 522 may be a second coded calibration signal that is up-converted to RF using a LO signal distributed to or within DBF 504, the RF calibration signal transmitted from DBF 502 through RFIO channel 516 may be a third coded calibration signal that is up-converted to RF using the LO signal distributed to or within DBF 502, and the RF calibration signal transmitted from DBF 506 through RFIO channel 528 may be a fourth coded calibration signal that is up-converted to RF using an LO signal distributed to or within DBF 506. Notably, the generation and/or distribution of the LO signals to or within DBF 502, DBF 504, and DBF 506 may be asymmetric and/or exhibit different phase coefficients versus temperature.

In some embodiments, the RF calibration signals transmitted from DBF 502, the RF calibration signal transmitted from DBF 504, and the RF calibration signal transmitted from DBF 506 may be transmitted at different times to enable distinguishing the four RF calibration signals.

DBF 502 down-converts the RF signals received at RFIO measurement channel 538 and separates them by identifying the coded calibration signals from which they were derived. Once separated, DBF 502 determines the relative phase of the four RF calibration signals. In some embodiments, the determined phases of the down-converted RF signals may be directly compared to determine the relative phase. In some embodiments, a phase of each down-converted RF signal can be compared to a known phase reference.

In certain alternative embodiments, RFIO channel 516 may be a dedicated channel for calibration. In such embodiments, coupler 540 may be omitted and the RF calibration signal may be transmitted directly into measurement network 500. Moreover, either of RFIO channel 516 or RFIO channel 510 may be eliminated and the other dedicated for calibration and shared for transmitting a single RF calibration signal from DBF 502 into measurement network 500.

In alternative embodiments, measurement network 500 may reverse the transmit direction of RF calibration signals through measurement network 500. For example, in alternative embodiments, DBF 502 is configured to transmit the RF calibration signal from RFIO measurement channel 538 into first measurement path 536 and second measurement path 544. First measurement path 536 divides the RF calibration signal between coupler 532 and coupler 534. Coupler 532 receives the RF calibration signal and couples it into signal path 512, where it propagates, as another RF signal, i.e., the first RF signal, to RFIO channel 510 of DBF 502. Coupler 534 receives the RF calibration signal and couples it into signal path 524, where it propagates, as yet another RF signal, i.e., the second RF signal, to RFIO channel 522 of DBF 504. Second measurement path 544 divides the RF calibration signal between coupler 540 and coupler 542. Coupler 540 receives the RF calibration signal and couples it into signal path 518, where it propagates, as another RF signal, i.e., the third RF signal, to RFIO channel 516 of DBF 502. Coupler 542 receives the RF calibration signal and couples it into signal path 530, where it propagates, as another RF signal, i.e., the fourth RF signal, to RFIO channel 528 of DBF 506.

In such alternative embodiments, DBF 504 receives the second RF signal and down-converts it to baseband or IF using a LO signal distributed to or within DBF 504. DBF 504 digitizes the baseband or IF signal and extracts phase information for the second RF signal that is then communicated to DBF 502. DBF 506 receives the fourth RF signal and down-converts it to baseband or IF using a LO signal distributed to or within DBF 506. DBF 506 converts the baseband or IF signal to digital and extracts phase information for the fourth RF signal that is then communicated to DBF 502. DBF 502 receives the first RF signal and the third RF signal at RFIO channels 510 and 516, respectively, and down-converts them to baseband or IF using a LO signal distributed to or within DBF 502. DBF 502 digitizes the baseband or IF signal and extracts phase information for the first RF signal and the third RF signal.

In the embodiment shown in FIG. 5a, DBF 502 captures the samples of the RF signal from couplers 532, 534, 540, and 542 during idle time (i.e., when the phased array antenna system is not transmitting or receiving) and compares the phase of the sample captured from coupler 532 to the phase of the sample captured from coupler 534, both received at RFIO measurement channel 538. Likewise, DBF 502 compares the phase of the sample captured from coupler 540 to the phase of the sample capture from coupler 542, both also received at RFIO measurement channel 538. DBF 502 receives all RF samples via a single RFIO channel, RFIO measurement channel 538. The phase of each sample of the RF signal is an accumulation of the phase shift introduced by a given signal path's elements, including both active components like DBFs 502, 504, and 506 and passive elements like the microstrip traces propagating the RF signal. The phase of each sample of the RF signal also accumulates the phase shift introduced along the measurement network 500 itself. In particular, measurement paths 536 and 544 each introduce a phase shift in the samples captured by couplers 532, 534, 540, and 542.

DBF 502, in comparing the phase of the sample captured from coupler 532 to the phase of the sample captured from coupler 534, determines a phase difference between the RF calibration signal transmitted by DBF 502 from RFIO channel 510 and the RF calibration signal transmitted by DBF 504 from RFIO channel 522. Once the phase difference is known, a phase compensation can be applied to phase-align RF signals transmitted or received by DBF 502 and by DBF 504. Likewise, in comparing the phase of the sample captured from coupler 540 to the phase of the sample captured from coupler 542, DBF 502 determines a phase difference between the RF calibration signal transmitted by DBF 502 from RFIO channel 516 and the RF calibration signal transmitted by DBF 506 from RFIO channel 528. DBF 502 can then determine a phase compensation to be applied to phase-align RF signals transmitted or received by DBF 502 and by DBF 506. Such phase compensations can be determined during initial calibration; however, the phase differences can drift over time during operation due to temperature fluctuations in the phased array antenna system. Notably, samples of the RF signal are captured and compared during idle time when operating, enabling DBF 502 to adjust the phase compensation as temperatures fluctuate at DBFs 502, 504, and 506, and along signal paths 512, 518, 524, and 530, which results in phase drift among RF signals transmitted and received from serial distribution networks 508, 520, 514, and 526, respectively. Because RF signals transmitted or received at a given DBF are up-converted or down-converted, respectively, based on a LO signal, the temperature dependent phase drift is referred to as LO temperature drift. Moreover, in certain embodiments where a Tx LO signal is distinct from a Rx LO signal, the above-described process is repeated and phase compensations are computed for each LO channel frequency, e.g., for transmit and for receive.

The phase difference between the RF calibration signal transmitted by DBF 502 and the RF calibration signal transmitted by DBF 504, or the phase difference between the RF calibration signal transmitted by DBF 502 and the RF calibration signal transmitted by DBF 506, are approximated by subtracting the phase of one from the phase of the other. Each phase can be modeled as a sum of the phase contributions of each element in that phase's respective measurement path, e.g., measurement paths 536 or 544. For the purpose of modeling the measured phases, DBF 502 is referred to as a first DBF, DBF 504 is referred to as a second DBF, and DBF 506 is referred to as a third DBF; and measurement paths 536 and 544 are segmented into a series of lengths, L1, L2, L3, and L4. The phase of the RF calibration signal sampled by coupler 532 on signal path 512, $\theta_{DBF1 \to meas}$ , is modeled as:

$$\theta_{DBF1 \to meas} = \theta_{LO} + \theta_{DBF1} + \theta_{L1} + \theta_{L2} + \theta_{L3} + \theta_{L4} + \theta_{LO} + \theta_{meas}$$

Where,

$\theta_{LO}$ is the phase contribution of the LO signal distributed to or within DBF 502 and employed in up-converting a coded calibration signal to RF and in down-converting a received RF signal to baseband or IF,

$\theta_{DBF1}$ is the phase contribution of a transmit section, or slice, for RFIO channel 510 in DBF 502,

$\theta_{L1}$ is the phase contribution of a first segment of measurement path 536, L1,

$\theta_{L2}$ is the phase contribution of a second segment of measurement path 536, L2,

$\theta_{L3}$ is the phase contribution of a third segment of measurement path 536, L3,

$\theta_{L4}$ is the phase contribution of a fourth segment of measurement path 536, L4, and

$\theta_{me}$ is the phase contribution of a receive section, or slice, for RFIO measurement channel 538 that receives the sample of the RF calibration signal in DBF 502.

Notably, the phase contribution of the LO signal, $\theta_{LO1}$, occurs twice because it contributes both on the transmission of the RF calibration signal from RFIO channel 510 of DBF 502 and the receiving of the RF sample on RFIO measurement channel 538 of DBF 502. Likewise, the phase of the RF calibration signal sampled by coupler 534 on signal path 524, $\theta_{DBF2 \to meas1}$, is modeled as:

$$\theta_{DBF2 \to meas1} = \theta_{LO} + \theta_{DBF2} + \theta_{L1} + \theta_{L2} + \theta_{L3} + \theta_{L4} + \theta_{LO} + \theta_{meas}$$

Where,

$\theta_{LO}$ is the phase contribution of the LO signal distributed to or within DBF 504 and employed in up-converting a coded calibration signal to RF and down-converting a received RF signal to baseband or IF, and

$\theta_{DBF2}$ is the phase contribution of a transmit section, or slice, for RFIO channel 522 in DBF 504.

The phase difference, $\theta_{\Delta 12}$, between the RF calibration signal transmitted by DBF 502 and the RF calibration signal transmitted by DBF 504 is therefore:

$$\theta_{\Delta 12} = \theta_{DBF1 \to meas} - \theta_{DBF2 \to meas1}$$

OR

$$\theta_{\Delta 12} = (\theta_{LO1} - \theta_{LO}) + (\theta_{DBF1} - \theta_{DBF2})$$

Notably, the segments of measurement path 536 are presumed to be equal in path length and similar enough in phase coefficient versus temperature, and therefore cancel each other out when computing the phase difference. Likewise, the phase contribution of RFIO measurement channel 538, $\theta_{meas1}$, and the phase of the LO signal distributed to or within DBF 502 and employed in down-converting, $\theta_{LO1}$, cancel out when computing the phase difference. Accordingly, the remaining terms reduce to a difference in the phases of the respective LO signals in DBF 502 and DBF 504, and a difference in the phases of the respective transmit sections for RFIO channels on DBF 502 and DBF 504.

The phase of the RF calibration signal sampled by coupler 540 on signal path 518, $\theta_{DBF1 \rightarrow me}$, is modeled as:

$$\theta_{DBF1 \rightarrow meas1} = \theta_{LO} + \theta_{DBF1} + \theta_{L1} + \theta_{L2} + \theta_{L3} + \theta_{L4} + \theta_{LO} + \theta_{meas}$$

Where,

$\theta_{LO}$ is the phase contribution of the LO signal distributed to or within DBF 502 and employed in up-converting a coded calibration signal to RF and down-converting a received RF signal to baseband or IF,

$\theta_{DBF1}$ is the phase contribution of a transmit section, or slice, for RFIO channel 516 in DBF 502,

$\theta_{L1}$ is the phase contribution of a first segment of measurement path 544, L1,

$\theta_{L2}$ is the phase contribution of a second segment of measurement path 544, L2,

$\theta_{L3}$ is the phase contribution of a third segment of measurement path 544, L3,

$\theta_{L4}$ is the phase contribution of a fourth segment of measurement path 544, L4, and

$\theta_{meas}$ is the phase contribution of a receive section, or slice, for RFIO measurement channel 538 that receives the sample of the RF calibration signal in DBF 502.

Notably, the phase contribution of the LO signal, $\theta_{LO1}$, occurs twice because it contributes both on the transmission of the RF calibration signal from RFIO channel 516 of DBF 502 and the receiving of the RF sample on RFIO measurement channel 538 of DBF 502. Likewise, the phase of the RF calibration signal sampled by coupler 542 on signal path 530, $\theta_{DBF3 \rightarrow meas}$, is modeled as:

$$\theta_{DBF3 \rightarrow meas1} = \theta_{LO} + \theta_{DBF} + \theta_{L1} + \theta_{L2} + \theta_{L3} + \theta_{L4} + \theta_{LO} + \theta_{meas}$$

Where,

$\theta_{LO}$ is the phase contribution of the LO signal distributed to or within DBF 506 and employed in up-converting a coded calibration signal to RF and down-converting a received RF signal to baseband or IF, and

$\theta_{DBF3}$ is the phase contribution of a transmit section, or slice, for RFIO channel 528 on DBF 506.

The phase difference, $\theta_{\Delta13}$, between the RF calibration signal transmitted by DBF 502 and the RF calibration signal transmitted by DBF 506 is therefore:

$$\theta_{DBF1 \rightarrow me} - \theta_{DBF3 \rightarrow meas1}$$

OR

$$\theta_{\Delta13} = (\theta_{LO1} - \theta_{LO3}) + (\theta_{DBF1} - \theta_{DBF3})$$

Notably, the segments of measurement path 544 are presumed to be equal in path length and similar enough in phase coefficient versus temperature, and therefore cancel each other out when computing the phase difference. Likewise, the phase contribution of RFIO measurement channel 538, $\theta_{meas1}$, and the phase of the LO signal distributed to or within DBF 502 and employed in down-converting, $\theta_{LO1}$, cancel out when computing the phase difference. Accordingly, the remaining terms reduce to a difference in the phases of the respective LO signals in DBF 502 and DBF 506, and a difference in the phases of the respective transmit sections for RFIO channels on DBF 502 and DBF 506.

Each of the phase components (e.g., $\theta_{LO1}$, $\theta_{LO2}$, $\theta_{LO}$, $\theta_{DBF1}$, $\theta_{DBF}$, $\theta_{DBF3}$) listed above has a temperature-dependent phase value such that each phase component is a function of temperature (e.g., $\theta_{LO1}(t)$, $\theta_{LO2}(t)$, $\theta_{LO}(t)$, $\theta_{DBF1}(t)$, $\theta_{DBF2}(t)$, $\theta_{DBF3}(t)$.

During initial calibration, the phase differences can be measured at an initial calibration temperature ($t_{CAL}$). Accordingly, the phase differences $\theta_{\Delta12}$ and $\theta_{\Delta13}$ can be expressed for both the initial calibration temperature $t_{CAL}$ and at an operating temperature t.

A system of equations for determining a phase compensation for the relative LO phases $\theta_{LO1}(t)$, $\theta_{LO2}(t)$ at temperature t is shown below:

$$\theta_{\Delta12}(t) = (\theta_{LO1}(t) - \theta_{LO2}(t)) + (\theta_{DBF1}(t) - \theta_{DBF2}(t))$$

$$\theta_{\Delta12}(t_{CAL}) = (\theta_{LO}\ (t_{CAL}) - \theta_{LO}\ (t_{CAL})) + (\theta_{DBF1}(t_{CAL}) - \theta_{DBF2}(t_{CAL}))$$

The measured phase difference $\theta_{\Delta12}(t_{CAL})$ for DBF 502 and DBF 504 at temperature $t_{CAL}$ can be subtracted from the measured phase difference $\theta_{\Delta12}(t)$ for DBF 502 and DBF 504 at temperature t is shown below:

$$\theta_{\Delta12}(t) - \theta_{\Delta12}(t_{CAL}) = (\theta_{LO1}(t) - \theta_{LO}\ (t)) - (\theta_{LO}\ (t_{CAL}) - \theta_{LO2}(t_{CAL})) +$$
$$(\theta_{DBF1}(t) - \theta_{DBF2}(t)) - (\theta_{DB}\ (t_{CAL}) - \theta_{DBF2}(t_{CAL}))$$

The terms of the above equation can be re-arranged as follows:

$$\theta_{\Delta12}(t) - \theta_{\Delta12}(t_{CAL}) = \theta_{LO}\ (t) - \theta_{LO2}(t) - \theta_{LO}\ (t_{CAL}) + \theta_{LO}\ (t_{CAL}) +$$
$$(\theta_{DBF1}(t) - \theta_{DBF1}(t_{CAL})) - (\theta_{DBF2}(t)\ - \theta_{DBF2}(t_{CAL}))$$

Given physical proximity and efforts to match the measurement paths for DBF 502 and DBF 504, the transmit paths may be assumed to have the same temperature coefficients such that ($\theta_{DBF1}(t) - \theta_{DBF1}(t_{CAL})) \approx (\theta_{DBF2}(t) - \theta_{DBF2}(t_{CAL})$). This assumption can be used to simplify $\theta_{\Delta12}(t) - \theta_{\Delta12}(t_{CAL})$ to remove the phase contributions of the measurement paths for DBF 502 and DBF 504 as shown below:

$$\theta_{\Delta12}(t) - \theta_{\Delta12}(t_{CAL}) \approx \theta_{LO}\ (t) - \theta_{LO}\ (t) - \theta_{LO}\ (t_{CAL}) + \theta_{LO}\ (t_{CAL})$$

Accordingly, the change in measured phase difference at temperature t relative to the measured phased difference at temperature $t_{CAL}$ (e.g., phase drift $\theta_{\Delta12,drift}(t)$) approximates a net phase shift to be applied to the LO phases $\theta_{LO1}$, $\theta_{LO2}$.

Similarly, a system of equations for determining a phase compensation for the relative LO phases $\theta_{LO}(t)$, $\theta_{LO3}(t)$ is shown below:

$$\theta_{\Delta13}(t) = (\theta_{LO}\ (t) - \theta_{LO3}(t)) + (\theta_{DBF1}(t) - \theta_{DBF3}(t))$$

$$\theta_{\Delta13}(t_{CAL}) = (\theta_{LO}\ (t_{CAL}) - \theta_{LO3}(t_{CAL})) + (\theta_{DBF1}(t_{CAL}) - \theta_{DBF3}(t_{CAL}))$$

The measured phase difference $\theta_{\Delta13}(t_{CAL})$ for DBF 502 and DBF 506 at temperature $t_{CAL}$ can be subtracted from the measured phase difference $\theta_{\Delta13}(t)$ for DBF 502 and DBF 506 at temperature t is shown below:

$$\theta_{\Delta13}(t) - \theta_{\Delta13}(t_{CAL}) = (\theta_{LO}\ (t) - \theta_{LO3}(t)) - (\theta_{LO}\ (t_{CAL}) - \theta_{LO3}(t_{CAL})) +$$

$$(\theta_{DBF1}(t) - \theta_{DBF3}(t)) - (\theta_{DBF1}(t_{CAL}) - \theta_{DBF3}(t_{CAL}))$$

The terms of the above equation can be re-arranged as follows:

$$\theta_{\Delta13}(t) - \theta_{\Delta13}(t_{CAL}) = \theta_{LO}\ (t) - \theta_{LO3}(t) - \theta_{LO1}(t_{CAL}) + \theta_{LO}\ (t_{CAL}) +$$

$$(\theta_{DBF1}(t) - \theta_{DBF1}(t_{CAL})) - (\theta_{DBF3}(t)\ - \theta_{DBF3}(t_{CAL}))$$

Given physical proximity and efforts to match the measurement paths for DBF 502 and DBF 506, the transmit paths may be assumed to have the same temperature coefficients such that $(\theta_{DBF1}(t) - \theta_{DBF1}(t_{CAL})) \approx (\theta_{DBF3}(t) - \theta_{DBF3}(t_{CAL}))$ which simplifies $\theta_{\Delta13}(t) - \theta_{\Delta13}(t_{CAL})$ as shown below:

$$\theta_{\Delta13}(t) - \theta_{\Delta13}(t_{CAL}) \approx \theta_{LO}\ (t) - \theta_{LO}\ (t) - \theta_{LO1}(t_{CAL}) + \theta_{LO3}(t_{CAL})$$

Accordingly, the change in measured phase difference at temperature t relative to the measured phased difference at temperature $t_{CAL}$ (e.g., phase drift $\theta_{\Delta13,drift}(t)$) approximates a net phase shift to be applied to the LO phases $\theta_{LO1}$, $\theta_{LO3}$.

DBF 502 can apply the net phase shift within DBF 502 directly to the RF signal DBF 502 transmits from RFIO channels 510 and 516. For example, DBF 502 may apply the phase shift digitally at baseband or with an analog phase shifter. Alternatively, DBF 502, in certain embodiments, instructs, via a digital communication channel, each of its FEM series electrically coupled to serial distribution networks 508 and 514 to apply the net phase shift within each FEM. Similarly, DBF 502 instructs, via a digital communication channel, such as digital communication channel 314 shown in FIG. 3, DBFs 504 and 506 to apply the net phase shift either directly within DBF 504 and DBF 506, or by further instructing their corresponding FEM series electrically coupled to serial distribution networks 520 and 526, respectively.

In certain embodiments, measurement network 500 may be expanded to a fourth DBF (not shown) positioned, for example, adjacent to DBF 506. In such embodiments, DBF 506 performs similar functions as DBF 502 to determine a phase difference between RF calibration signals transmitted by DBF 506 and by the fourth DBF. Furthermore, measurement network 500 may be expanded to any number of DBF.

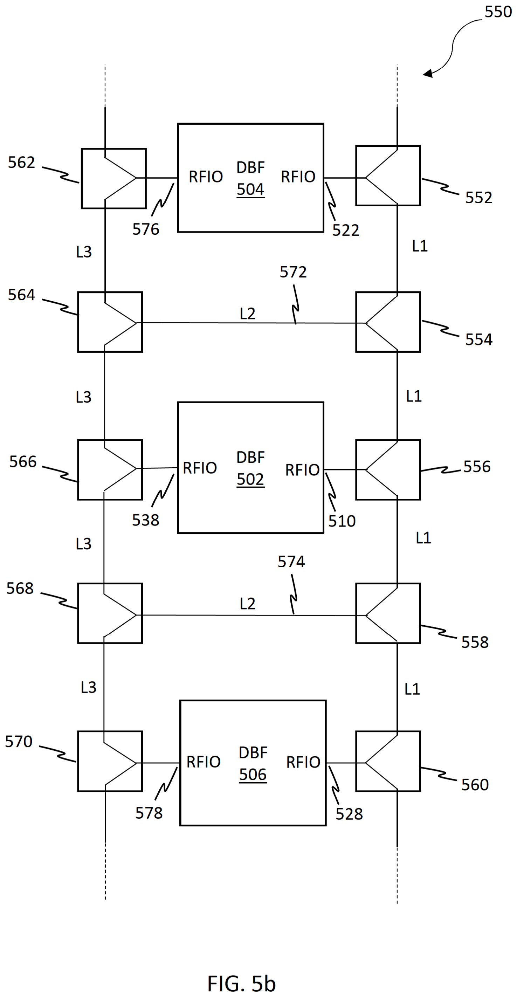

FIG. 5b is a schematic diagram of another example embodiment of a measurement network 550 for use with a phased array antenna system, such as phased array antenna system 100 shown in FIG. 1 or phased array antenna system 300 shown in FIG. 3. Measurement network 550 is a variation of measurement network 500 shown in FIG. 5a. FIG. 5b illustrates, for example, and without limitation, three DBF chips: DBF 502, DBF 504, and DBF 506. DBFs 502, 504, and 506 can be similar to and perform similar functions as the plurality of DBFs 104 shown in FIG. 1, the plurality of DBFs 304 shown in FIG. 3, or DBFs 402, 404, and 452 shown in FIG. 4a or FIG. 4b.

DBFs 502, 504, and 506, although they generally include identical components, the components may exhibit different phase coefficients versus temperature, i.e., they affect phase differently as a function of temperature at which the phased array is operating. More specifically, LO signal generation and/or distribution paths within DBF 502, DBF 504, and DBF 506 may be asymmetric and/or exhibit different phase-coefficient versus temperature. Consequently, LO signal generation and/or distribution paths to or within DBFs 502, 504, and 506, although they may be equal in path length, can introduce different phase shifts relative to each other, because each element in the path length, including DBFs 502, 504, and 506, exhibits a unique phase-coefficient versus temperature.

DBFs 502, 504, and 506 transmit respective RF calibration signals directly into measurement network 550. More specifically, RFIO channel 510 of DBF 502 is dedicated for calibration and transmits a first RF calibration signal into measurement network 550. Likewise, RFIO channel 522 of DBF 504 is dedicated for calibration and transmits a second RF calibration signal into measurement network 550, and RFIO channel 528 of DBF 506 is dedicated for calibration and transmits a third RF calibration signal into measurement network 550. In alternative embodiments, one or more of RFIO channels 510, 522, or 528 may be shared for beamforming and distributing RF signals to and from one or more FEMs electrically coupled to DBFs 502, 504, or 506, respectively.

Referring to the embodiment of FIG. 5b, each of DBFs 502, 504, and 506 electrically couples to measurement network 550 in a uniform manner. Measurement network 550 includes a network of shared measurement paths and RF splitter/combiners within which DBFs 502, 504, and 506 are positioned. Specifically, measurement network 550 includes RF splitter/combiners 552, 554, 556, 558, 560, 562, 564, 566, 568, and 570, and shared measurement paths 572 and 574. RF splitter/combiners 552, 554, 556, 558, 560, 562, 564, 566, 568, and 570 may be similar to and perform similar functions as RF splitter/combiner 412 shown in FIG. 4b, e.g., a Wilkinson splitter/combiner. Each of RF splitter/combiners 552, 554, 556, 558, 560, 562, 564, 566, 568, and 570 introduces a small, but non-zero, power loss to the signals divided or combined. For example, in certain embodiments, a given RF splitter/combiner exhibits a -3 dB loss into divided signals, i.e., effectively dividing the original signal power between the two output ports. DBF 502 is coupled between RF splitter/combiner 556 and RF splitter/combiner 566 via its RFIO channel 510 and RFIO measurement channel 538. Likewise, DBF 504 is coupled between RF splitter/combiner 552 and RF splitter/combiner 562 via its RFIO channel 522 and an RFIO measurement channel 576, and DBF 506 is coupled between RF splitter/combiner 560 and RF splitter/combiner 570 via its RFIO channel 528 and an RFIO measurement channel 578. Shared measurement path 572 is shared between DBF 502 and DBF 504, and shared measurement path 574 is shared between DBF 502 and DBF 506. In certain embodiments, measurement network 550 may extend to additional DBF with additional shared measurement paths and additional RF splitter/combiners, e.g., an additional DBF (not shown) adjacent to DBF 504, an additional shared measurement path (not shown) shared by DBF 504 and the additional DBF, and additional RF splitter/combiners (not shown) adjacent to RF splitter/combiner 552 and RF splitter/combiner 562.

RF calibration signals transmitted by each DBF into measurement network 550 are split and routed into measurement paths shared between two adjacent DBFs, and combined with RF calibration signals transmitted by adjacent DBFs. The combined RF calibration signals are then split and routed to RFIO measurement channels of each adjacent DBF. More specifically, for example, RFIO channel 510 of DBF 502 transmits the first RF calibration signal toward RF splitter/combiner 556 that divides the signal to be routed to RFIO measurement channels, e.g., RFIO measurement channels 538, 576, and 578. Likewise, RFIO channel 522 of DBF 504 transmits the second RF calibration signal toward RF splitter/combiner 552 that divides the signal to be routed to RFIO measurement channel 538 of DBF 502 and RFIO measurement channel 576 of DBF 504, and RFIO channel 528 of DBF 506 transmits the third RF calibration signal toward RF splitter/combiner 560 that divides the signal to be routed to RFIO measurement channel 538 of DBF 502 and RFIO measurement channel 578 of DBF 506.

The first and second RF calibration signals are combined at RF splitter/combiner 554 and coupled into shared measurement path 572. The combined signal is divided at RF splitter/combiner 564 and routed toward DBF 502 and DBF 504. The first and third RF calibration signals are combined at RF splitter/combiner 558 and coupled into shared measurement path 574. The combined signal is divided at RF splitter/combiner 568 and routed toward DBF 502 and DBF 506.

RFIO measurement channel 538 of DBF 502 is coupled to measurement network 550 via RF splitter/combiner 566, which combines the combined RF calibration signals from adjacent shared measurement paths 572 and 574. RFIO measurement channel 576 of DBF 504 is coupled to measurement network 550 via RF splitter/combiner 562, which, in certain embodiments, combines the combined RF calibration signals from shared measurement path 572 with combined RF calibration signals from another adjacent shared measurement path (not shown), e.g., shared with another adjacent DBF (not shown). As illustrated in FIG. 5b, no additional DBF or shared measurement path is shown, so the combined RF calibration signal from shared measurement path 572 is coupled into RFIO measurement channel 576 via RF splitter/combiner 562. Similarly, RFIO measurement channel 578 of DBF 506 is coupled to measurement network 550 via RF splitter/combiner 570, which, in certain embodiments, combines the combined RF calibration signals from shared measurement path 574 with combined RF calibration signals from another adjacent shared measurement path (not shown), e.g., shared with another adjacent DBF (not shown). As illustrated in FIG. 5b, no additional DBF or shared measurement path is shown, so the combined RF calibration signal from shared measurement path 574 is coupled into RFIO measurement channel 578 via RF splitter/combiner 570.

RFIO measurement channels 538, 576, and 578 each receives a sample of the RF calibration signals transmitted by adjacent DBFs, e.g., DBF 502, DBF 504, and DBF 506. The samples themselves are RF signals derived from the RF calibration signals, e.g., a version of the RF calibration signals that are reduced in power by each of the RF splitter/combiners through which the RF calibration signals are routed. For example, a measurement path from RFIO channel 510 of DBF 502 to RFIO measurement channel 576 propagates through RF splitter/combiner 556, RF splitter/combiner 554, RF splitter/combiner 564, and RF splitter/combiner 562. Each of the RF splitter/combiners may introduce, for example, -3 dB power loss to split RF calibration signals, i.e., when dividing the power between two output ports. In another example, a measurement path from RFIO channel 528 of DBF 506 to RFIO measurement channel 538 propagates through RF splitter/combiner 560, RF splitter/combiner 558, RF splitter/combiner 568, and RF splitter/combiner 566.

The first, second, and third RF calibration signals transmitted from DBF 502, DBF 504, and DBF 506 are distinct from each other to enable distinguishing the received RF signals, or samples, that are coupled into measurement network 550 and RFIO measurement channels 538, 576, and 578 through RF splitter/combiners 552, 554, 556, 558, 560, 562, 564, 566, 568, and 570. In certain embodiments, for example, RF calibration signals transmitted from RFIO channel 510 of DBF 502 and RFIO channel 522 of DBF 504 may be orthogonal (i.e., 90 degrees phase shift) relative to each other. The RF calibration signals may also employ different coding. For example, the first RF calibration signal transmitted from DBF 502 through RFIO channel 510 may be a first coded calibration signal that is up-converted to RF using a LO signal distributed to or within DBF 502. Likewise, the second RF calibration signal transmitted from DBF 504 through RFIO channel 522 may be a second coded calibration signal that is up-converted to RF using a LO signal distributed to or within DBF 504, and the third RF calibration signal transmitted from DBF 506 through RFIO channel 528 may be a third coded calibration signal that is up-converted to RF using the LO signal distributed to or within DBF 506. Notably, the generation and/or distribution of the LO signals to or within DBF 502, DBF 504, and DBF 506 may be asymmetric and/or may exhibit different phase coefficients versus temperature.

In some embodiments, the RF calibration signals transmitted from DBF 502, the RF calibration signal transmitted from DBF 504, and the RF calibration signal transmitted from DBF 506 may be transmitted at different times to enable distinguishing the four RF calibration signals.

Just as each of DBFs 502, 504, and 506 electrically couples to measurement network 550 in a uniform manner, each of DBFs 502, 504, and 506 processes received samples of the RF calibration signals received through respective RFIO measurement channels 538, 576, and 578. In particular, DBF 502 down-converts the RF signals received at RFIO measurement channel 538 and separates them by identifying the coded calibration signals from which they were derived. For example, RFIO measurement channel 538 receives a combination of RF signals, or samples, derived from the first, second, and third RF calibration signals transmitted by DBF 502, 504, and 506, respectively. RFIO measurement channel 576 receives a combination of RF signals, or samples, derived from the first and second RF calibration signals transmitted by DBF 502 and 504, respectively. And, DBF 506 down-converts the RF signals received at RFIO measurement channel 578 and separates them by identifying the coded calibration signals from which they were derived. RFIO measurement channel 578 receives a combination of RF signals, or samples, derived from the first and third RF calibration signals transmitted by DBF 502 and 506, respectively.

Once the RF calibration signals are separated, DBF 502, for example, determines the relative phase of the four RF calibration signals. In some embodiments, the determined phases of the down-converted RF signals may be directly compared to determine the relative phase. In some embodiments, a phase of each down-converted RF signal can be compared to a known phase reference.

DBFs 502, 504, and 506 perform calibration during idle time (i.e., when the phased array antenna system is not otherwise transmitting or receiving) and compares the phases of the samples captured. The phase of each RF signal, or sample, is an accumulation of the phase shift introduced by a given signal path's elements, including both active components like DBFs 502, 504, and 506 and passive elements like the transmission lines propagating the RF signal. The phase of each sample of the RF signal also accumulates the phase shift introduced along the measurement network 550 itself. In particular, shared measurement paths 572 and 574 each introduce a phase shift in the samples captured at DBFs 502, 504, and 506.

DBF 502 determines a phase difference by comparing the phase of the sample captured from the first RF calibration signal transmitted by DBF 502 to the phase of the sample captured from the second RF calibration signal transmitted by DBF 504. Once the phase difference is known, a phase compensation can be applied to phase-align RF signals transmitted or received by DBF 502 and by DBF 504. Similarly, DBF 504 determines the phase difference by comparing the sample captured from the first RF calibration signal transmitted by DBF 502 to the phase of the sample captured from the second RF calibration signal transmitted by DBF 504.

DBF 502, likewise, determines a phase difference by comparing the phase of the sample capture from the first RF calibration signal transmitted by DBF 502 to the phase of the sample captured from the third RF calibration signal transmitted by DBF 506. Once the phase difference is known, a phase compensation can be applied to phase-align RF signals transmitted or received by DBF 502 and by DBF 506. Similarly, DBF 506 determines the phase difference by comparing the sample captured from the first RF calibration signal transmitted by DBF 502 to the phase of the sample captured from the third RF calibration signal transmitted by DBF 506.

Phase compensations can be determined during initial calibration before operation; however, the phase differences can drift over time during operation due to temperature fluctuations in the phased array antenna system. Notably, samples of the RF calibration signals are captured and compared during idle time when operating, enabling DBFs 502, 504, and 506 to adjust the phase compensation as temperatures fluctuate at DBFs 502, 504, and 506, which results in phase drift among RF signals transmitted and received by DBFs 502, 504, 506. Because RF signals transmitted or received at a given DBF are up-converted or down-converted, respectively, based on a LO signal, the temperature dependent phase drift is referred to as LO temperature drift. Moreover, in certain embodiments where a Tx LO signal is distinct from a Rx LO signal, the above-described process is repeated and phase compensations are computed for each LO channel frequency, e.g., for transmit and for receive.

The phase difference between the first RF calibration signal transmitted by DBF 502 and the second RF calibration signal transmitted by DBF 504, or the phase difference between the first RF calibration signal transmitted by DBF 502 and the third RF calibration signal transmitted by DBF 506, are approximated by subtracting the phase of one from the phase of the other. Each phase can be modeled as a sum of the phase contributions of each element in that phase's respective signal path through DBFs 502, 504, 506, and measurement network 550. For the purpose of modeling the measured phases, DBF 502 is referred to as a first DBF, DBF 504 is referred to as a second DBF, and DBF 506 is referred to as a third DBF; and measurement network 550 is segmented into a series of lengths, L1, L2, and L3. The phase of a sample of the first RF calibration signal received at RFIO measurement channel 538 of DBF 502, $\theta_{DBF1 \rightarrow meas1}$, is

modeled as:

$$\theta_{DBF1\rightarrow me} \quad = \theta_{LO1} + \theta_{DBF1} + \theta_{L1} + \theta_{L2} + \theta_{L3} + \theta_{LO} + \theta_{meas1}$$

Where,

$\theta_{LO1}$ is the phase contribution of the LO signal distributed to or within DBF 502 and employed in up-converting a coded calibration signal to RF and in down-converting a received RF signal to baseband or IF,

$\theta_{DBF1}$ is the phase contribution of a transmit section, or slice, for RFIO channel 510 in DBF 502,

$\theta_{L1}$ is the phase contribution of a first segment of measurement network 550, L1,

$\theta_{L2}$ is the phase contribution of a second segment of measurement network 550, L2,

$\theta_{L3}$ is the phase contribution of a third segment of measurement network 550, L3, and

$\theta_{meas1}$ is the phase contribution of a receive section, or slice, for RFIO measurement channel 538 that receives the sample of the RF calibration signal in DBF 502.

Notably, the phase contribution of the LO signal, $\theta_{LO}$ , occurs twice because it contributes both on the transmission of the first RF calibration signal from RFIO channel 510 of DBF 502 and the receiving of the RF sample on RFIO measurement channel 538 of DBF 502. Likewise, the phase of a sample of the second RF calibration signal received at RFIO measurement channel 538 of DBF 502, $\theta_{DBF2\rightarrow meas1}$, is modeled as:

$$\theta_{DBF2\rightarrow meas1} = \theta_{LO} + \theta_{DBF2} + \theta_{L1} + \theta_{L2} + \theta_{L3} + \theta_{LO} + \theta_{me}$$

Where,

$\theta_{LO2}$ is the phase contribution of the LO signal distributed to or within DBF 504 and employed in up-converting a coded calibration signal to RF and down-converting a received RF signal to baseband or IF, and

$\theta_{DBF}$ is the phase contribution of a transmit section, or slice, for RFIO channel 522 in DBF 504.

The phase difference, $\theta_{\Delta12}$, between the first RF calibration signal transmitted by DBF 502 and the second RF calibration signal transmitted by DBF 504 is therefore:

$$\theta_{\Delta12} = \theta_{DBF1\rightarrow meas} - \theta_{DBF2\rightarrow meas1}$$

OR

$$\theta_{\Delta12} = (\theta_{LO1} - \theta_{LO2}) + (\theta_{DBF1} - \theta_{DBF2})$$

Notably, the segments of measurement network 550 are presumed to be equal in path length and similar enough in phase coefficient versus temperature, and therefore cancel each other out when computing the phase difference. Likewise, the phase contribution of RFIO measurement channel 538, $\theta_{meas}$ , and the phase of the LO signal distributed to or within DBF 502 and employed in down-converting, $\theta_{LO1}$, cancel out when computing the phase difference. Accordingly, the remaining terms reduce to a difference in the phases of the respective LO signals in DBF 502 and DBF 504, and a difference in the phases of the respective transmit sections for RFIO channels on DBF 502 and DBF 504.

Likewise, the phase of a sample of the third RF calibration signal received at RFIO measurement channel 538 of DBF 502, $\theta_{DBF3\rightarrow me}$, is modeled as:

$$\theta_{DBF3\rightarrow meas} = \theta_{LO3} + \theta_{DBF3} + \theta_{L1} + \theta_{L2} + \theta_{L3} + \theta_{LO1} + \theta_{meas}$$

Where,

$\theta_{LO3}$ is the phase contribution of the LO signal distributed to or within DBF 506 and employed in up-converting a coded calibration signal to RF and down-converting a received RF signal to baseband or IF, and

$\theta_{DBF3}$ is the phase contribution of a transmit section, or slice, for RFIO channel 528 on DBF 506.

The phase difference, $\theta_{\Delta13}$, between the RF calibration signal transmitted by DBF 502 and the RF calibration signal transmitted by DBF 506 is therefore:

$$\theta_{DBF1\rightarrow meas} - \theta_{DBF3\rightarrow meas}$$

OR

$$\theta_{\Delta13} = (\theta_{LO1} - \theta_{LO}) + (\theta_{DBF1} - \theta_{DB})$$

Notably, the segments of measurement network 550 are presumed to be equal in path length and similar enough in phase coefficient versus temperature, and therefore cancel each other out when computing the phase difference. Likewise, the phase contribution of RFIO measurement channel 538, $\theta_{meas1}$, and the phase of the LO signal distributed to or within DBF 502 and employed in down-converting, $\theta_{LO1}$, cancel out when computing the phase difference. Accordingly, the remaining terms reduce to a difference in the phases of the respective LO signals in DBF 502 and DBF 506, and a difference in the phases of the respective transmit sections for RFIO channels on DBF 502 and DBF 506.
Similarly, DBF 504 performs a parallel computation of phase difference between the first RF calibration signal transmitted by DBF 502 and the second RF calibration signal transmitted by DBF 504. The phase of a sample of the first RF calibration signal received at RFIO measurement channel 576 of DBF 504 via shared measurement path 572, $\theta_{DBF1\rightarrow meas2}$, is modeled as:

$$\theta_{DBF1\rightarrow meas} = \theta_{LO} + \theta_{DBF1} + \theta_{L1} + \theta_{L2} + \theta_{L3} + \theta_{LO} + \theta_{meas}$$

Where,

$\theta_{LO}$ is the phase contribution of the LO signal distributed to or within DBF 502 and employed in up-converting a coded calibration signal to RF and in down-converting a received RF signal to baseband or IF,

$\theta_{LO2}$ is the phase contribution of the LO signal distributed to or within DBF 504 and employed in up-converting a coded calibration signal to RF and in down-converting a received RF signal to baseband or IF,

$\theta_{DBF1}$ is the phase contribution of a transmit section, or slice, for RFIO channel 510 in DBF 502,

$\theta_{L1}$ is the phase contribution of a first segment of measurement network 550, L1,

$\theta_{L2}$ is the phase contribution of a second segment of measurement network 550, L2,

$\theta_{L3}$ is the phase contribution of a third segment of measurement network 550, L3, and

$\theta_{me}$ is the phase contribution of a receive section, or slice, for RFIO measurement channel 576 that receives the sample of the RF calibration signal in DBF 504.

Likewise, the phase of a sample of the second RF calibration signal received at RFIO measurement channel 576 of DBF 504, $\theta_{DBF2\rightarrow meas}$, is modeled as:

$$\theta_{DBF2 \to meas} = \theta_{LO} + \theta_{DB} + \theta_{L1} + \theta_{L2} + \theta_{L3} + \theta_{LO2} + \theta_{meas}$$

Where,

$\theta_{LO2}$ is the phase contribution of the LO signal distributed to or within DBF 504 and employed in up-converting a coded calibration signal to RF and down-converting a received RF signal to baseband or IF, and

$\theta_{DBF2}$ is the phase contribution of a transmit section, or slice, for RFIO channel 522 in DBF 504.

Notably, the phase contribution of the LO signal, $\theta_{LO2}$, occurs twice because it contributes both on the transmission of the second RF calibration signal from RFIO channel 522 of DBF 504 and the receiving of the RF sample on RFIO measurement channel 576 of DBF 504. The phase difference, $\theta_{\Delta12}$, between the first RF calibration signal transmitted by DBF 502 and the second RF calibration signal transmitted by DBF 504 is therefore:

$$\theta_{\Delta12} = \theta_{DBF1 \to meas2} - \theta_{DBF2 \to meas2}$$

OR

$$\theta_{\Delta12} = (\theta_{LO} - \theta_{LO}) + (\theta_{DBF1} - \theta_{DBF2})$$

Notably, the segments of measurement network 550 are presumed to be equal in path length and similar enough in phase coefficient versus temperature, and therefore cancel each other out when computing the phase difference. Likewise, the phase contribution of RFIO measurement channel 576, $\theta_{meas2}$, and the phase of the LO signal distributed to or within DBF 504 and employed in down-converting, $\theta_{LO2}$, cancel out when computing the phase difference. Accordingly, the remaining terms reduce to a difference in the phases of the respective LO signals in DBF 502 and DBF 504, and a difference in the phases of the respective transmit sections for RFIO channels on DBF 502 and DBF 504.

DBF 506 also performs a parallel computation of phase difference between the first RF calibration signal transmitted by DBF 502 and the third RF calibration signal transmitted by DBF 506. The phase of a sample of the first RF calibration signal received at RFIO measurement channel 578 of DBF 506 via shared measurement path 574, $\theta_{DBF1 \to meas3}$, is modeled as:

$$\theta_{DBF1 \to meas} = \theta_{LO} + \theta_{DBF1} + \theta_{L1} + \theta_{L2} + \theta_{L3} + \theta_{LO} + \theta_{me}$$

Where,

$\theta_{LO1}$ is the phase contribution of the LO signal distributed to or within DBF 502 and employed in up-converting a coded calibration signal to RF and in down-converting a received RF signal to baseband or IF,

$\theta_{LO}$ is the phase contribution of the LO signal distributed to or within DBF 506 and employed in up-converting a coded calibration signal to RF and in down-converting a received RF signal to baseband or IF,

$\theta_{DBF1}$ is the phase contribution of a transmit section, or slice, for RFIO channel 510 in DBF 502,

$\theta_{L1}$ is the phase contribution of a first segment of measurement network 550, L1,

$\theta_{L2}$ is the phase contribution of a second segment of measurement network 550, L2,

$\theta_{L3}$ is the phase contribution of a third segment of measurement network 550, L3, and

$\theta_{meas3}$ is the phase contribution of a receive section, or slice, for RFIO measurement channel 578 that receives the sample of the RF calibration signal in DBF 506.

Likewise, the phase of a sample of the third RF calibration signal received at RFIO measurement channel 578 of DBF 506, $\theta_{DBF3 \to me}$, is modeled as:

$$\theta_{DBF3\to meas3} = \theta_{LO3} + \theta_{DBF3} + \theta_{L1} + \theta_{L2} + \theta_{L3} + \theta_{LO} + \theta_{meas3}$$

Where,

$\theta_{LO3}$ is the phase contribution of the LO signal distributed to or within DBF 506 and employed in up-converting a coded calibration signal to RF and down-converting a received RF signal to baseband or IF, and

$\theta_{DB}$ is the phase contribution of a transmit section, or slice, for RFIO channel 528 in DBF 506.

Notably, the phase contribution of the LO signal, $\theta_{LO3}$, occurs twice because it contributes both on the transmission of the third RF calibration signal from RFIO channel 528 of DBF 506 and the receiving of the RF sample on RFIO measurement channel 578 of DBF 506. The phase difference, $\theta_{\Delta13}$, between the first RF calibration signal transmitted by DBF 502 and the third RF calibration signal transmitted by DBF 506 is therefore:

$$\theta_{\Delta13} = \theta_{DBF1\to me} \quad - \theta_{DBF3\to meas}$$

OR

$$\theta_{\Delta13} = (\theta_{LO} - \theta_{LO3}) + (\theta_{DBF1} - \theta_{DBF3})$$

Notably, the segments of measurement network 550 are presumed to be equal in path length and similar enough in phase coefficient versus temperature, and therefore cancel each other out when computing the phase difference. Likewise, the phase contribution of RFIO measurement channel 578, $\theta_{meas}$, and the phase of the LO signal distributed to or within DBF 506 and employed in down-converting, $\theta_{LO3}$, cancel out when computing the phase difference. Accordingly, the remaining terms reduce to a difference in the phases of the respective LO signals in DBF 502 and DBF 506, and a difference in the phases of the respective transmit sections for RFIO channels on DBF 502 and DBF 506.

Each of the phase components (e.g., $\theta_{LO1}$, $\theta_{LO}$, $\theta_{LO3}$, $\theta_{DBF1}$, $\theta_{DBF2}$, $\theta_{DBF3}$) listed above has a temperature-dependent phase value such that each phase component is a function of temperature (e.g., $\theta_{LO1}(t)$, $\theta_{LO}(t)$, $\theta_{LO3}(t)$, $\theta_{DB}(t)$, $\theta_{DB}(t)$, $\theta_{DBF3}(t)$.

During initial calibration, the phase differences can be measured at an initial calibration temperature $(t_{CAL})$. Accordingly, the phase differences $\theta_{\Delta12}$ and $\theta_{\Delta13}$ can be expressed for both the initial calibration temperature $t_{CAL}$ and at an operating temperature t.

A system of equations for determining a phase compensation for the relative LO phases $\theta_{LO}(t), \theta_{LO}(t)$ at temperature t is shown below:

$$\theta_{\Delta12}(t) = (\theta_{LO1}(t) - \theta_{LO}(t)) + (\theta_{DBF1}(t) - \theta_{DBF2}(t))$$

$$\theta_{\Delta12}(t_{CAL}) = (\theta_{LO1}(t_{CAL}) - \theta_{LO}(t_{CAL})) + (\theta_{DBF1}(t_{CAL}) - \theta_{DBF2}(t_{CAL}))$$

The measured phase difference $\theta_{\Delta12}(t_{CAL})$ for DBF 502 and DBF 504 at temperature $t_{CAL}$ can be subtracted from the measured phase difference $\theta_{\Delta12}(t)$ for DBF 502 and DBF 504 at temperature t is shown below:

$$\theta_{\Delta12}(t) - \theta_{\Delta12}(t_{CAL}) = (\theta_{LO}(t) - \theta_{LO}(t)) - (\theta_{LO}(t_{CAL}) - \theta_{LO2}(t_{CAL})) +$$

$$(\theta_{DBF}(t) - \theta_{DBF2}(t)) - (\theta_{DBF1}(t_{CAL}) - \theta_{DBF2}(t_{CAL}))$$

The terms of the above equation can be re-arranged as follows:

$$\theta_{\Delta12}(t) - \theta_{\Delta12}(t_{CAL}) = \theta_{LO1}(t) - \theta_{LO2}(t) - \theta_{LO1}(t_{CAL}) + \theta_{LO2}(t_{CAL}) +$$

$$(\theta_{DBF1}(t) - \theta_{DBF1}(t_{CAL})) - (\theta_{DBF2}(t) - \theta_{DBF2}(t_{CAL}))$$

Given physical proximity and efforts to match the measurement paths for DBF 502 and DBF 504, the transmit paths may be assumed to have the same temperature coefficients such that $(\theta_{DBF1}(t) - \theta_{DBF1}(t_{CAL})) \approx (\theta_{DBF2}(t) - \theta_{DBF2}(t_{CAL}))$. This assumption can be used to simplify $\theta_{\Delta12}(t) - \theta_{\Delta12}(t_{CAL})$ to remove the phase contributions of the measurement paths for DBF 502 and DBF 504 as shown below:

$$\theta_{\Delta12}(t) - \theta_{\Delta12}(t_{CAL}) \approx \theta_{LO1}(t) - \theta_{LO2}(t) - \theta_{LO}(t_{CAL}) + \theta_{LO2}(t_{CAL})$$

Accordingly, the change in measured phase difference at temperature t relative to the measured phased difference at temperature $t_{CAL}$ (e.g., phase drift $\theta_{\Delta12,drift}(t)$) approximates a net phase shift to be applied to the LO phases $\theta_{LO}$ , $\theta_{LO}$.

Similarly, a system of equations for determining a phase compensation for the relative LO phases $\theta_{LO}(t), \theta_{LO}(t)$ is shown below:

$$\theta_{\Delta13}(t) = (\theta_{LO}(t) - \theta_{LO}(t)) + (\theta_{DBF1}(t) - \theta_{DBF3}(t))$$

$$\theta_{\Delta13}(t_{CAL}) = (\theta_{LO}(t_{CAL}) - \theta_{LO}(t_{CAL})) + (\theta_{DBF1}(t_{CAL}) - \theta_{DBF3}(t_{CAL}))$$

The measured phase difference $\theta_{\Delta13}(t_{CAL})$ for DBF 502 and DBF 506 at temperature $t_{CAL}$ can be subtracted from the measured phase difference $\theta_{\Delta13}(t)$ for DBF 502 and DBF 506 at temperature t is shown below:

$$\theta_{\Delta13}(t) - \theta_{\Delta13}(t_{CAL}) = (\theta_{LO}(t) - \theta_{LO3}(t)) - (\theta_{LO1}(t_{CAL}) - \theta_{LO}(t_{CAL})) +$$

$$(\theta_{DBF1}(t) - \theta_{DBF3}(t)) - (\theta_{DBF1}(t_{CAL}) - \theta_{DBF3}(t_{CAL}))$$

The terms of the above equation can be re-arranged as follows:

$$\theta_{\Delta13}(t) - \theta_{\Delta13}(t_{CAL}) = \theta_{LO}(t) - \theta_{LO}(t) - \theta_{LO1}(t_{CAL}) + \theta_{LO}(t_{CAL}) +$$

$$(\theta_{DBF1}(t) - \theta_{DBF1}(t_{CAL})) - (\theta_{DBF3}(t) - \theta_{DBF3}(t_{CAL}))$$

Given physical proximity and efforts to match the measurement paths for DBF 502 and DBF 506, the transmit paths may be assumed to have the same temperature coefficients such that $(\theta_{DBF1}(t) - \theta_{DBF}(t_{CAL})) \approx (\theta_{DBF3}(t) - \theta_{DBF3}(t_{CAL}))$ which simplifies $\theta_{\Delta13}(t) - \theta_{\Delta13}(t_{CAL})$ as shown below:

$$\theta_{\Delta13}(t) - \theta_{\Delta13}(t_{CAL}) \approx \theta_{LO}(t) - \theta_{LO3}(t) - \theta_{LO}(t_{CAL}) + \theta_{LO3}(t_{CAL})$$

Accordingly, the change in measured phase difference at temperature t relative to the measured phased difference at temperature $t_{CAL}$ (e.g., phase drift $\theta_{\Delta13,drift}(t)$) approximates a net phase shift to be applied to the LO phases $\theta_{LO}$ , $\theta_{LO}$.

DBF 502, for example, can apply the net phase shift within DBF 502 directly to the RF signal DBF 502 transmits or receives over RFIO channels. For example, DBF 502 may apply the phase shift digitally at baseband or with an analog phase shifter. Alternatively, DBF 502, in certain embodiments, instructs, via a digital communication channel, each of its FEM series electrically coupled to RFIO channels of DBF 502 to apply the net phase shift within each FEM. Similarly, DBF 502 may communicate, via a digital communication channel, such as digital communication channel 314 shown in FIG. 3, DBFs 504 and 506 the net phase shift. DBF 504 and DBF 506 can apply the communicated net phase shift or a net phase shift computed within DBF 504 and DBF 506 directly, or by further instructing their corresponding FEM series electrically coupled to respective RFIO channels of DBF 504 and DBF 506.

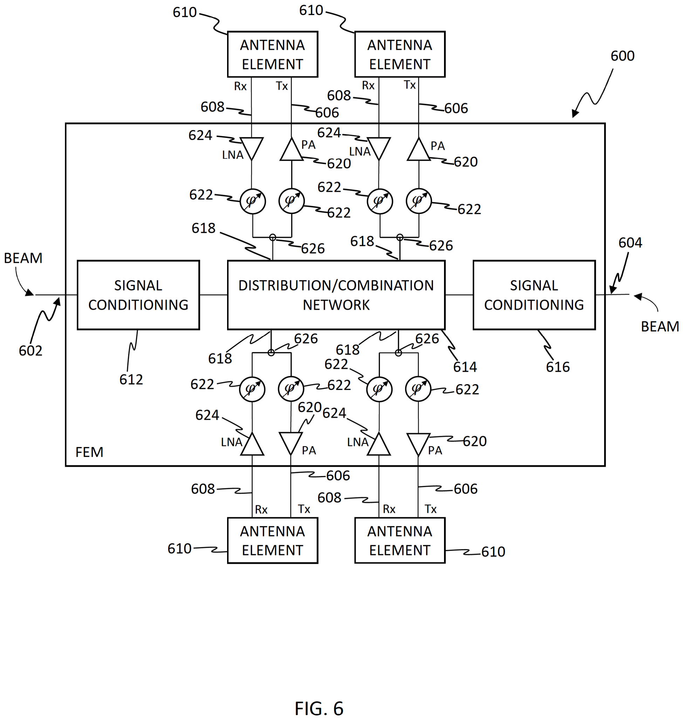

FIG. 6 is a functional block diagram of an example FEM 600 for use in a phased array antenna system such as phased array antenna system 100 shown in FIG. 1 or phased array antenna system 300 shown in FIG. 3. For example, FEM 600 may be included in a serially fed chain of FEMs, such as FEM series 112a or 112b shown in FIG. 1 or FEM series 306a, 306b, or 306c shown in FIG. 3. FEM 600 can assume any position within such a series, e.g., FEM 600 can be a first FEM in a series, a last FEM in a series, or FEM 600 can be any position in between. FEM 600 transmits and receives RF signals on the series via an RF serial port 602 and an RF serial port 604, which electrically couple FEM 600 with a prior or subsequent element in the series, e.g., a DBF such as one of the plurality of DBFs 104 shown in FIG. 1, one of the plurality of DBFs 304 shown in FIG. 3, DBF 402, 404, or 452 shown in FIG. 4a or 4b, or DBF 502, 504, or 506 shown in FIG. 5a or FIG. 5b. Similarly, FEM 600 includes transmit (Tx) ports 606 and receive (Rx) ports 608 through which RF signals are communicated to and from a plurality of antenna elements 610. The plurality of antenna elements 610 can be similar to and perform similar functions to the plurality of antenna elements 108 shown in FIG. 1 or antenna elements 202 shown in FIG. 2.

RF serial ports 602 and 604 of FEM 600 compose opposing ends of an RF serial channel through FEM 600 that further includes a signal conditioning stage 612, a distribution/combination network 614, and another signal conditioning stage 616. Distribution/combination network 614 can combine signals, in a receive (Rx) mode, received from the plurality of antenna elements 610 through distribution/combination ports 618, and distribute signals to be emitted by the plurality of antenna elements 610 through distribution/combination ports 618 in a transmit (Tx) mode.

In the transmit (Tx) mode, distribution/combination network 614 can distribute a signal received at RF serial port 602 of FEM 600 and conditioned by signal conditioning stage 612 to distribution/combination ports 618 and RF serial port 604 of FEM 600. The RF signals distributed through distribution/combination ports 618 can be amplified by PA 620 and/or phase shifted by phase shifters 622 before transmission through transmit (Tx) ports 606 to the plurality of antenna elements 610. Phase shifters 622 can apply a phase shift to the corresponding distributed signals to generate a coherently combined transmitted signal (i.e., emitted by the phased array) in a desired direction (e.g., the beam direction). The plurality of antenna elements 610 coupled to transmit (Tx) ports 606 emit, or radiate, the amplified and phase adjusted RF signal.

In the receive (Rx) mode, the distribution/combination network 614 can combine a signal received at the RF serial port 604 and conditioned by the signal conditioning stage 616 with signals received by each of the plurality of antenna elements 610 and routed through receive (Rx) ports 608 to distribution/combination ports 618. The signal from each of the plurality of antenna elements 610 can be amplified by low noise amplifiers (LNAs) 624 and/or phase shifted by phase shifters 622. In the illustrated example of FIG. 6, the Tx and Rx signal paths share a common distribution/combination port 618 and the paths are joined at a junction 626. In the example of FIG. 6, where the plurality of antenna elements 610 includes M antenna elements 610 coupled to FEM 600 and M=4, the distribution/combination network 614 operates as a 5-way RF distributor/combiner. In some cases, for any value of M, the distribution/combination network 614 can include an M+1-way distributor/combiner. In one illustrative example, the distribution/combination network 614 can include an M+1-way Wilkinson distributor/combiner.

Although the Rx signal path, as illustrated in FIG. 6, includes a single LNA 624 and a single phase shifter 622 coupled to each of the plurality of antenna elements 610, in some cases, a separate phase shifter 622 and/or LNA 624 can be coupled to each of the plurality of antenna elements 610 for each data beam to be received. Similarly, the Tx signal path, as illustrated in FIG. 6, includes a single phase shifter 622 and a single PA 620 coupled to each of the plurality of antenna elements 610. In some embodiments, a separate phase shifter 622 and/or PA 620 can be coupled to each of the plurality of antenna elements 610 for each data beam to be transmitted.

Signal conditioning stage 612 and signal conditioning stage 616, in certain example embodiments, may include components such as, for example, and without limitation, additional LNAs, PAs, variable gain amplifiers (VGAs), transformers, and/or phase shifters (e.g., for Rx and/or Tx). In some embodiments, the signal conditioning stage 612 and/or the signal conditioning stage 616 may be optional.

FEM 600 can be configured, e.g., utilizing signal conditioning stages 612 and 616, to provide an equal gain among each of the plurality of antenna elements 610 and a corresponding DBF RFIO channel (e.g., RFIO channel 110 of DBF 104 shown in FIG. 1, RFIO channels 320 of respective DBFs 304 shown in FIG. 3, RFIO channels 406 or 460 of DBF 402 shown in FIG. 4a or 4b, or RFIO channels 510 or 516 of DBF 502 shown in FIG. 5a or 5b).

While the FEM 600 of FIG. 6 illustrates single-ended signals at the RF serial ports 602, 604, Tx ports 606, Rx ports 608, and throughout the internal signal distribution, it should be understood that a FEM that utilizes fully differential signals and/or a combination of single-ended and differential signals may be used without departing form the scope of the present disclosure.

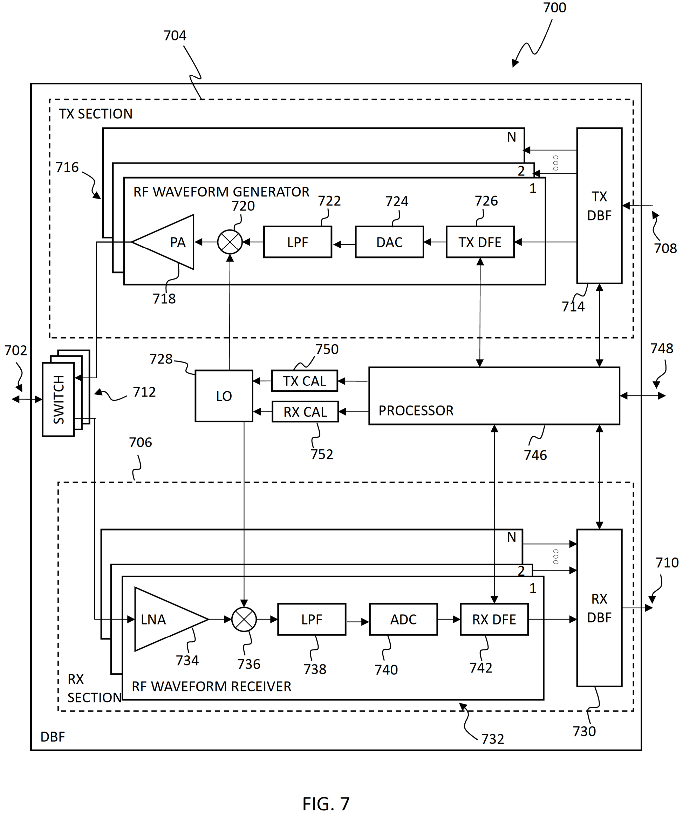

FIG. 7 is a functional block diagram of an example DBF 700 in accordance with some examples of the present disclosure. In some embodiments, DBF 700 is similar to and performs similar functions to the plurality of DBFs 104 shown in FIG. 1, the plurality of DBFs 304 shown in FIG. 3, DBFs 402, 404, 452 shown in FIG. 4a or 4b, or DBFs 502, 504, 506 shown in FIG. 5a or 5b.

Referring to FIG. 7, DBF 700 is configured to be communicatively coupled with a modem, such as modem 102 shown in FIG. 1 or modem 302 shown in FIG. 3, over one or more digital communication channels. The modem transmits data to DBF 700 for beamforming and eventual RF transmission from a phased array antenna, and receives data extracted from RF beams received by the phased array antenna. In certain embodiments, DBF 700 may also receive control instructions from the modem for performing beamforming and directing the phased array antenna for both transmitting and receiving.

DBF 700 is configured to serially feed one or more daisy chains of FEMs, such as FEM series 112a or 112b shown in FIG. 1, FEM series 306a, 306b, or 306c shown in FIG. 3, or one or more of FEM 600 shown in FIG. 6. DBF 700 communicatively couples to the FEMs via a plurality of RFIO channels 702 that establish an RF serial channel between a given RFIO channel of the plurality of RFIO channels 702 and a first FEM in a given FEM series, such as, for example, FEM 308a of FEM series 306a.

Referring to FIG. 7, DBF 700 is generally separable into a transmit (Tx) section 704 and a receive (Rx) section 706. Transmit (Tx) section 704 receives data from the modem over a digital communication channel 708 to be employed in beamforming and eventual RF transmission from one or more of the plurality of RFIO channels 702. Likewise, receive (Rx) section 706 receives an RF signal from one or more of the plurality of RFIO channels 702 and extracts data to be transmitted to the modem over a digital communication channel 710. Digital communication channels 708 and 710, as illustrated in FIG. 7, are separate digital communication channels established between DBF 700 and the modem. However, in alternative embodiments, digital communication channels 708 and 710 may be merged into a single bidirectional digital communication channel established between DBF 700 and the modem. Additionally, one or more additional digital communication channels may be established between DBF 700 and the modem, for example, for communicating control instructions for the phased array antenna. Similarly, each of the plurality of RFIO channels 702 of DBF 700 is a bidirectional RF channel that can be employed in transmitting or receiving RF signals. DBF 700 includes a plurality of switches 712 configured to electrically couple the transmit (Tx) section 704 or the receive (Rx) section 706 to a given channel of the plurality of RFIO channels 702 based on whether DBF 700 (and the larger phased array antenna) is in transmit mode or receive mode, respectively. The plurality of switches 712, as illustrated in FIG. 7, includes a separate switch for each RFIO channel of the plurality of RFIO channels 702, e.g., N switches for N RFIO channels. In alternative embodiments, DBF 700 may include a single switch for properly coupling transmit (Tx) section 704 and receive (Rx) section 706 to each of the plurality of RFIO channels 702.

Transmit (Tx) section 704 of DBF 700 includes a transmit DBF (Tx DBF) 714 and a plurality of RF waveform generators 716. DBF 700 and transmit (Tx) section 704, as illustrated in FIG. 7, include one RF waveform generator 716 for each of the plurality of RFIO channels 702, or RF transmit paths, e.g., N RF waveform generators 716 for N RFIO channels. Conversely, a single Tx DBF 714 performs digital beamforming for all beams generated by DBF 700 for transmission from the plurality of RFIO channels 702. Tx DBF 714, in certain embodiments, can include various components (e.g., digital and/or analog) such as, for example and without limitation, a VGA, a time delay filter, a filter, a gain control, one or more phase shifters, one or more up samplers, one or more IQ gain and phase compensators, and the like. Tx DBF 714 performs baseband processing on the data stream received from the modem over digital communication channel 708. Baseband processing may include, for example, encoding time delay, de-noising, amplification, phase shifting, up sampling, and/or gain and phase compensation. Tx DBF 714 generates N unique time-delayed and phase encoded digital signals conditioned for processing by the plurality of RF waveform generators 716.

Each RF waveform generator 716 includes various components (e.g., digital and/or analog). In the embodiment shown in FIG. 7, each RF waveform generator 716 includes a power amplifier (PA) 718, a mixer 720, a filter such as a low pass filter (LPF) 722, a DAC 724, and a transmit digital front end (Tx DFE) 726. The plurality of RF waveform generators 716 are configured to prepare the time delayed and phase encoded digital signals from TX DBF 714 for transmission.

Each Tx DFE 726 receives a respective time-delayed and phase encoded digital signal from Tx DBF 714. Tx DFE 726 is configured to bridge between the digital baseband processing in Tx DBF 714 and the analog RF processing in RF waveform generator 716. Tx DFE 726 may be responsible for one or more processing functions relating to channelization and/or sample rate conversion. Tx DFE 726 is configured to resample the input digital signal to a higher sample rate or density and provide the up sampled signal to DAC 724. For example, the input digital signal may be up sampled by a factor of four. DAC 724 is configured to convert the input digital signal into an analog signal. Thus, the time delayed and phase encoded digital signal is converted to a time delay and phase encoded analog signal. The analog signal is passed through LPF 722.

LPF 722 is configured to low pass filter or de-noise the analog signal, at baseband frequency, before up-converting to RF. Mixer 720 employs a transmit local oscillator (Tx LO) signal to perform frequency up-conversion to convert the (baseband) center frequency associated with the filtered analog signal to a carrier frequency (e.g., change from $f_{DC}$ to $f_{RF}$). The Tx LO signal is supplied by a LO 728, which may be a component of DBF 700 or, alternatively, may be a distribution network that supplies a Tx LO signal to DBF 700. The time delayed and phase encoded analog signal provided on a carrier frequency, also referred to as a RF signal, is power amplified by PA 718 before being transmitted over a corresponding channel of the plurality of RFIO channels 702.

Receive (Rx) section 706 of DBF 700 includes a receive DBF (Rx DBF) 730 and a plurality of RF waveform receivers 732. DBF 700 and receive (Rx) section 706, as illustrated in FIG. 7, include one RF waveform receiver 732 for each of the plurality of RFIO channels 702, or RF receive paths, e.g., N RF waveform receivers 732 for N RFIO channels.

Conversely, a single Rx DBF 730 performs digital beamforming for all beams received by DBF 700 from the plurality of RFIO channels 702.

Each RF waveform receiver 732 may include various components (e.g., digital and/or analog) such as, for example and without limitation, an LNA 734, a mixer 736, a LPF 738, an ADC 740, and a receive digital front end (Rx DFE) 742. LNA 734 performs amplification of an analog RF signal received at a corresponding channel of the plurality of RFIO channels 702 from, e.g., a respective antenna element. Mixer 736 employs a receive local oscillator (Rx LO) signal to perform frequency down-conversion to convert the center frequency associated with the amplified signal from the RF carrier frequency to the baseband frequency (or IF) (e.g., change from $f_{RF}$ to $f_{DC}$). The Rx LO signal is supplied by LO 728, which may be a component of DBF 700 or, alternatively, may be a distribution network that supplies a Rx LO signal to DBF 700. The resulting analog baseband signal is passed through LPF 738 to remove noise before passing to ADC 740. ADC 740 converts the analog baseband signal to a digital baseband signal.

Rx DFE 742 is configured to bridge between the RF processing in RF waveform receiver 732 and the digital baseband processing to be performed in RX DBF 730. Rx DFE 742 performs one or more processing functions relating to channelization and/or sample rate conversion. Rx DFE 742 is configured, for example, to resample the input digital signal to a lower sample rate or density and provide the down sampled signal to Rx DBF 730.

Each Rx DBF 730, in certain embodiments, can include various components (e.g., digital and/or analog) such as, for example and without limitation, a VGA, a time delay filter, a filter, an adder, one or more phase shifters, one or more down samplers, one or more filters, one or more IQ compensators, one or more direct current offset compensators (DCOCs), and the like. Rx DBF 730 performs baseband processing to prepare combine and condition received digital signals to be transmitted to the modem via digital communication channel 710.

The N digital signal received from the N RF waveform receivers 732 undergo various digital signal processing including, for example and without limitation, compensation for phase or amplitude impairment or propagation delays, down sampling, de-noising, and/or phase decoding. The multiple phase decoded signals are combined into a single phase digital signal that may be further filtered for noise and time delay before transmitting a digital data stream to the modem. In certain embodiments, Rx DBF 730 may further include one or more additional electrical components such as, for example, digital gain control to appropriately amplify or provide signal gain to the phase decoded signal.

In this manner, DBF 700 is configured to both digitally process a first data signal, stream, or beam of a single channel for transmission by a first plurality of antenna elements; to receive a second data signal, stream, or beam of a single channel using a second plurality of antenna elements; and to digitally recover/reconstitute the original data signal underlying the received signal. The first and second plurality of antenna elements may be the same or different from each other.

DBF 700 also includes a processor 746 communicatively coupled with transmit (Tx) section 704, receive (Rx) section 706, and the modem via a digital communication channel 748. Processor 746, for example, may be communicatively coupled with Tx DBF 714 or Tx DFE 726 within transmit (Tx) section 704, and may be communicatively coupled with Rx DBF 730 or Rx DFE 742 within receive (Rx) section 706. Processor 746 may include one or more processing units, each of which may include one or more processing cores, such as a digital signal processor (DSP), microprocessor, application specific integrated circuit (ASIC), field programmable gate array (FPGA), central processing unit (CPU), graphics processing unit (GPU), or other suitable processing device. Processor 746, in certain embodiments, may further incorporate one or more sections of memory, including, for example, flash memory, memory cache, read only memory (ROM), random access memory (RAM), or other suitable memory components. Such memory may be incorporated within a common chip package with processor 746 or may be provided separately.

Referring to FIGS. 4a and 4b, and 5a and 5b, multiple instances of a DBF are included. Each of DBFs 402, 404, and 452 shown in FIG. 4a and 4b may be embodied by DBF 700, and each of DBFs 502, 504, and 506 shown in FIG. 5a and 5b may be embodied by DBF 700. As described above, DBFs 402 and 502 are configured to receive phase measurements for RF signals transmitted by DBFs 402, 404, and 452; and DBFs 502, 504, and 506, respectively.

More specifically, referring to DBF 402 shown in FIG. 4a and 4b, which may be embodied by DBF 700 shown in FIG. 7, processor 746 is configured to receive phase measurements for RF signals transmitted from DBF 700, e.g., transmitted by DBF 402, via one or more of the plurality of RFIO channels 702, as well as phase measurements for RF signals transmitted from other DBFs, such as DBFs 404 and 452. Likewise, referring to DBF 502 shown in FIG. 5a and 5b, which may be embodied by DBF 700 shown in FIG. 7, processor 746 is configured to received phase measurements for RF signals transmitted from DBF 700, e.g., transmitted by DBF 502, as well as phase measurements for RF signals transmitted from other DBFs, such as DBFs, 504 and 506. Samples of the RF signal are received through one of the plurality of RFIO channels 702 and processed through Rx section 706. In certain embodiments, processor 746 receives the phase measurements from Rx section 706 and, more specifically, from Rx DFE 742. In alternative embodiments, processor 746 receives the phase measurements from Rx DBF 730. In further alternative embodiments, digital phase information for the RF signals is communicated to the modem over digital communication channel 710 and processor 746 receives the phase measurements from the modem.

Processor 746 processes received phase measurements as described above with respect to FIGS. 4a and 4b, and 5a and 5b to determine phase differences, e.g., between RF signals transmitted by DBF 402 and DBF 404, and between RF signals transmitted by DBF 402 and DBF 452. Processor 746 can communicate LO drift compensation values to other DBFs over a digital communication channel, such as digital communication channel 314 shown in FIG. 3. Referring again to DBF 700 shown in FIG. 7, processor 746 compares the phase differences to phase calibration data for both transmit and receive modes. DBF 700 includes a transmit calibration module (Tx Cal) 750 and a receive calibration module (Rx Cal) 752. In certain embodiments, Tx Cal 750 and Rx Cal 752 are configured to facilitate obtaining calibration measurements and to adjust Tx section 704 and Rx section 706, respectively, to compensate for phase shift and/or time delay mismatch produced by DBF 700, PCB traces, associated antenna elements, and/or associated antenna element circuitry. In certain embodiments, phase compensation values within Tx Cal 750 and Rx Cal 752 are updated according to the LO drift compensation computed by processor 746 based on phase measurements received, for example, from measurement network 400 shown in FIG. 4a, measurement network 450 shown in FIG. 4b, measurement network 500 shown in FIG. 5a, or measurement network 550 shown in FIG. 5b.

Alternatively, in certain embodiments, processor 746 communicates LO drift compensation values to Tx DBF 714 and Rx DBF 730. When transmitting, LO drift compensation values are encoded by Tx DBF 714 into the digital beam signals that are supplied to RF waveform generator 716 for transmission. When receiving, LO drift compensation values are applied by Rx DBF 730 when decoding phase before combining beams received from RF waveform receiver 732.

In further alternative embodiments, DBF 700 and, more specifically, processor 746 communicates LO drift compensation values to each FEM in the one or more chains of FEMs serially fed by DBF 700 via the plurality of RFIO channels 702. LO drift compensation values can be communicated over one or more control channels established between DBF 700 and the FEMs, such as FEM 600 shown in FIG. 6. Referring to FIG. 6, LO drift compensation values may be applied by phase shifters 622 for both transmit and receive modes.

In certain embodiments, DBF 700 includes one or more analog phase shifters within Tx section 704 and Rx section 706. In such embodiments, processor 746 may be further configured to control the analog phase shifters to apply the LO drift compensation to RF signals after up-conversion to RF, but before they are transmitted from the plurality of RFIO channels 702; or after RF signals are received by the plurality of RFIO channels 702 and before they are down-converted to baseband frequency.

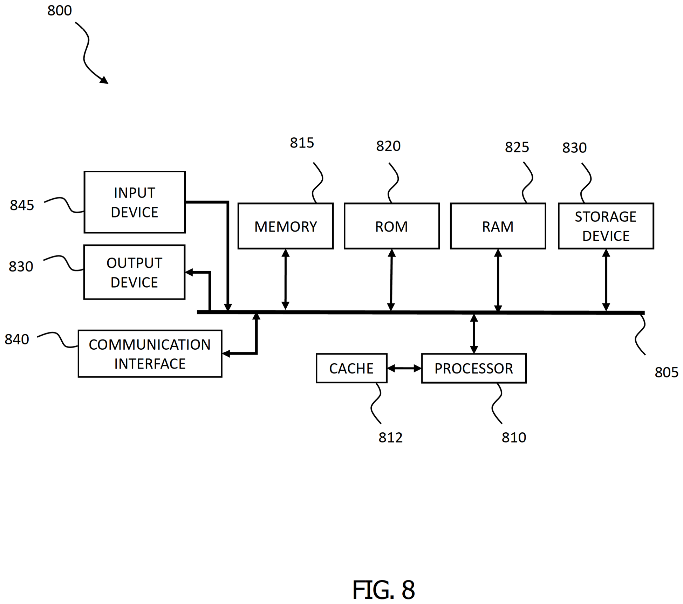

FIG. 8 illustrates an example computing device architecture 800 of an example computing device which can implement various techniques described herein. For example, the computing device architecture 800 can be used to perform at least some operations described herein. The components of the computing device architecture 800 are shown in electrical communication with each other using a connection 805, such as a bus. The example computing device architecture 800 includes a processing unit (CPU or processor) 810 and a computing device connection 805 that couples various computing device components including the computing device memory 815, such as read only memory (ROM) 820 and random access memory (RAM) 825, to the processor 810.

The computing device architecture 800 can include a cache of high-speed memory connected directly with, in close proximity to, or integrated as part of the processor 810. The computing device architecture 800 can copy data from the memory 815 and/or the storage device 830 to the cache 812 for quick access by the processor 810. In this way, the cache can provide a performance boost that avoids processor 810 delays while waiting for data. These and other modules can control or be configured to control the processor 810 to perform various actions. Other computing device memory 815 may be available for use as well. The memory 815 can include multiple different types of memory with different performance characteristics. The processor 810 can include any general purpose processor and a hardware or software service stored in storage device 830 and configured to control the processor 810 as well as a special-purpose processor where software instructions are incorporated into the processor design. The processor 810 may be a self-contained system, containing multiple cores or processors, a bus, memory controller, cache, etc. A multi-core processor may be symmetric or asymmetric.

To enable user interaction with the computing device architecture 800, an input device 845 can represent any number of input mechanisms, such as a microphone for speech, a touch-sensitive screen for gesture or graphical input, keyboard, mouse, motion input, speech and so forth. An output device 830 can also be one or more of a number of output mechanisms known to those of skill in the art, such as a display, projector, television, speaker device. In some instances, multimodal computing devices can enable a user to provide multiple types of input to communicate with the computing device architecture 800. The communication interface 840 can generally govern and manage the user input and computing device output. There is no restriction on operating on any particular hardware arrangement and therefore the basic features here may easily be substituted for improved hardware or firmware arrangements as they are developed.

Storage device 830 is a non-volatile memory and can be a hard disk or other types of computer readable media which can store data that are accessible by a computer, such as magnetic cassettes, flash memory cards, solid state memory devices, digital versatile disks, cartridges, random access memories (RAMs) 825, read only memory (ROM) 820, and hybrids thereof. The storage device 830 can include software, code, firmware, etc., for controlling the processor 810. Other hardware or software modules are contemplated. The storage device 830 can be connected to the computing device connection 805. In one aspect, a hardware module that performs a particular function can include the software component stored in a computer-readable medium in connection with the necessary hardware components, such as the processor 810, connection 805, output device 830, and so forth, to carry out the function.

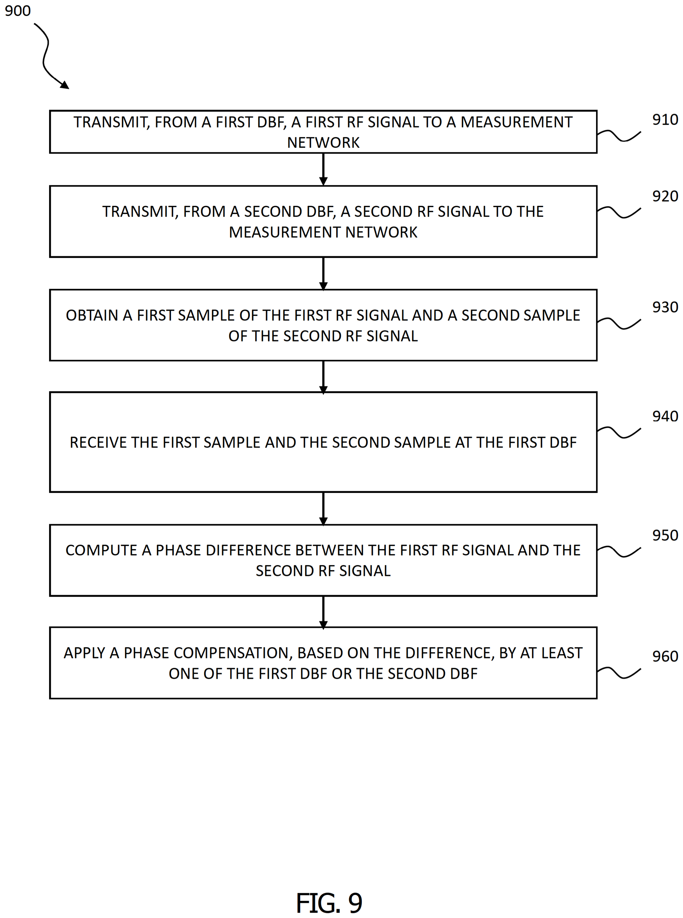

Having disclosed example systems, components and concepts, the disclosure now turns to an example method 900 for compensating for phase drift in a phased array antenna system having multiple DBFs, as shown in FIG. 9, and, in particular, compensating for LO temperature drift. The steps outlined herein are non-limiting examples provided for illustration purposes, and can be implemented in any combination thereof, including combinations that exclude, add, or modify certain steps.

In some examples, the method 900 may be performed by one or more computing devices or apparatuses. In one illustrative example, the method 900 can be performed by a phased array antenna system, such as phased array antenna system 100 shown in FIG. 1 or phased array antenna system 300 shown in FIG. 3. Alternatively, the process may be embodied in a measurement network, such as measurement network 400 shown in FIG. 4a, measurement network 450 shown in FIG. 4b, measurement network 500 shown in FIG. 5a, or measurement network 550 shown in FIG. 5b. Furthermore, the process may be further embodied in one or more processors such as processor 746 within DBF 700 shown in FIG. 7, and/or one or more computing devices with the computing device architecture 800 shown in FIG. 8. In some cases, such a computing device or apparatus may include a processor, microprocessor, microcomputer, or other component of a device that is configured to carry out the steps of the method 900. In some examples, such computing device or apparatus may include one or more antennas for sending and receiving RF signals. In some examples, such computing device or apparatus may include an antenna and a modem for sending, receiving, modulating, and demodulating RF signals, as previously described.

Referring to FIG. 4a and to FIG. 7, for example and without limitation, illustrating measurement network 400 and DBF 700, respectively, in which method 900 may be embodied, DBF 700, during operation, executes a schedule, or plan, for periodically transmitting, periodically receiving, and sometimes idle. When idle, i.e., neither transmitting nor receiving, method 900 begins by up-converting a first coded calibration signal to RF based on an LO signal and transmitting 910, from a first DBF, e.g., DBF 402 or DBF 700, a resulting RF calibration signal to a measurement network, such as measurement network 400. In certain embodiments the transmit and receive LO frequency may be the same. In other embodiments the transmit and receive LO frequency are distinct, in which case the method 900 may include transmitting 910 both an RF calibration signal that is up-converted based on a transmit LO signal and, at a different time, an RF calibration signal that up-converted based on a receive LO signal.

A second DBF, such as DBF 404 shown in FIG. 4a, up-converts a second coded calibration signal to RF based on an LO signal distributed to or within DBF 404 and transmits 920 a second resulting RF calibration signal to measurement network 400. Measurement network 400 routes the first and second RF calibration signals to, for example, the first DBF, e.g., DBF 402, at an RFIO measurement channel, such as RFIO measurement channel 410 shown in FIG. 4a. Measurement network 400 obtains 930 a first sample of the first RF calibration signal transmitted by DBF 402 and a second sample of the second RF calibration signal transmitted by DBF 404. The first and second samples are received 940 at DBF 402. More specifically, DBF 402 receives 940 the first and second samples at RFIO measurement channel 410.

Referring to DBF 700 shown in FIG. 7, in which DBF 402 is embodied, processor 746 computes 950 a phase difference between the RF signals transmitted by the first and second DBFs, e.g., DBF 402 and 404, respectively. DBF 700 computes a phase compensation based on the phase difference and applies 960 the phase compensation. For a given DBF, e.g., DBF 700 or DBF 402, the phase compensation may be applied, when transmitting, by including the phase compensation into the phase encoding applied at baseband to each beam, or, alternatively, applied by analog phase shifting at RF before transmission by the DBF. When receiving, the DBF can apply the phase compensation by employing the phase compensation when phase decoding received beams at baseband, or, alternatively, applied by analog phase shifting the received RF beams before down-conversion.

In certain embodiments, for a given DBF, e.g., DBF 700 or DBF 402, the phase compensation is communicated by the DBF to its corresponding one or more FEMs for application while transmitting or receiving. Referring to FIG. 6, for example, phase shifters 622 may be controlled according to the phase compensation received at each FEM, including both a transmit phase compensation and a receive phase compensation.

The following disclosure sets out certain aspects of the disclosed invention in the form of clauses corresponding to the claims. These clauses are provided to ensure explicit and literal support for the claims as filed, and for any future amendments, under the requirements of various jurisdictions. Each clause should be understood as forming part of the description and as an independent disclosure of inventive subject matter.

Clause 1. A phased array antenna system comprising: a measurement network; a first digital beamformer (DBF) coupled to the measurement network and configured to transmit a first radio frequency (RF) calibration signal onto the measurement network; and a second DBF coupled to the measurement network and configured to receive a first RF signal, derived from the first RF calibration signal, from the measurement network, the second DBF comprising a processor configured to: compute, based on the first RF signal, a phase difference between the first RF signal and a second RF signal; and compute a phase compensation to be applied by at least one of the first DBF or the second DBF based on the phase difference.

Clause 2. The phased array antenna system of clause 1, wherein the measurement network comprises: a first coupler configured to receive the first RF calibration signal transmitted by the first DBF and propagate the first RF signal into an RF input/output (RFIO) channel of the second DBF.

Clause 3. The phased array antenna system of clause 2, wherein the second DBF is further configured to: transmit a second RF calibration signal onto the measurement network; and receive the second RF signal, derived from the second RF calibration signal, from the measurement network; wherein the measurement network further comprises a second coupler configured to receive the second RF calibration signal and propagate the second RF signal into the RFIO channel of the second DBF.

Clause 4. The phased array antenna system of clause 2, wherein the measurement network further comprises a second coupler configured to receive the first RF calibration signal and propagate the second RF signal into an RFIO channel of the first DBF; wherein the first DBF is further configured to: receive the second RF signal, derived from the first RF calibration signal, from the measurement network; and transmit phase information for the second RF signal to the second DBF; wherein the second DBF is further configured to compute the phase difference between the first RF signal and the second RF signal based on the first RF signal and the phase information for the second RF signal.

Clause 5. The phased array antenna system of clause 1, wherein the second DBF comprises a phase shifter configured to apply the phase compensation.

Clause 6. The phased array antenna system of clause 1, wherein the second DBF is further configured to control an analog phase shifter to apply the phase compensation.

Clause 7. The phased array antenna system of clause 1 further comprising a digital control channel coupled between the first DBF and the second DBF, wherein the second DBF is further configured to communicate the phase compensation to the first DBF via the digital control channel to enable the first DBF to apply the phase compensation to RF signals transmitted by the first DBF.

Clause 8. The phased array antenna system of clause 7, wherein the first DBF is further configured to control an analog phase shifter to apply the phase compensation.

Clause 9. The phased array antenna system of clause 1, wherein a first local oscillator (LO) generation circuit or a first LO distribution circuit of the first DBF and a second LO generation circuit or a second LO distribution circuit of the second DBF exhibit different phase coefficients versus temperature with respect to each other.

Clause 10. The phased array antenna system of clause 9, wherein the first DBF is further configured to up-convert a first coded calibration signal to the first RF calibration signal based on a first local oscillator (LO) signal; wherein the second DBF is further configured to down-convert the first RF signal based on a second LO signal; and wherein the first LO generation circuit or the first LO distribution circuit for the first LO signal is asymmetric with respect to the second LO generation circuit or the second LO distribution circuit for the second LO signal.

Clause 11. The phased array antenna system of clause 10, wherein the second DBF is further configured to: up-convert a second coded calibration signal to a second RF calibration signal based on the second LO signal; transmit the second RF calibration signal onto the measurement network; receive the second RF signal, derived from the second RF calibration signal, from the measurement network; and down-convert the second RF signal based on the second LO signal.

Clause 12. The phased array antenna system of clause 1, wherein the phased array antenna system further comprises: a third DBF coupled to the measurement network and configured to transmit a fourth RF calibration signal on the measurement network; wherein the second DBF is further configured to: transmit a second RF calibration signal and a third RF calibration signal onto the measurement network; and receive the second RF signal, derived from the second RF calibration signal, a third RF signal, derived from the third RF calibration signal, and a fourth RF signal, derived form the fourth RF calibration signal, from the measurement network; and wherein the processor of the second DBF is further configured to: compute a phase difference between the third RF signal and a fourth RF signal; and compute a phase compensation to be applied by at least one of the second DBF or the third DBF based on the phase difference.

Clause 13. The phased array antenna system of clause 12, wherein a first local oscillator (LO) generation circuit or a first LO distribution circuit of the first DBF, a second LO generation circuit or a second LO distribution circuit of the second DBF, and a third LO generation circuit or a third LO distribution circuit of the third DBF exhibit different phase coefficients versus temperature with respect to each other.

Clause 14. The phased array antenna system of clause 1 further comprising a distribution network coupled to the first DBF, wherein the distribution network is configured to propagate RF signals (i) to be transmitted by the first DBF for transmission over the air by at least one antenna element, and (ii) to be received over the air by the at least one antenna element and routed to the first DBF.

Clause 15. The phased array antenna system of clause 14, wherein the measurement network and the distribution network are electrically coupled to a first RF input/output (RFIO) channel of the first DBF.

Clause 16. The phased array antenna system of clause 1 further comprising a distribution network coupled to the second DBF, wherein the distribution network is configured to propagate RF signals (i) to be transmitted by the second DBF for transmission over the air by at least one antenna element, and (ii) to be received over the air by the at least one antenna element and routed to the second DBF.

Clause 17. The phased array antenna system of clause 16, wherein the measurement network and the distribution network are electrically coupled to a first RF input/output (RFIO) channel of the second DBF.

Clause 18. A digital beamformer (DBF) comprising: a first radio frequency input/output (RFIO) channel electrically coupled to a measurement network and configured to receive a first radio frequency (RF) signal over the measurement network; and a processor configured to: compute, based on the first RF signal, a phase difference between the first RF signal and a second RF signal; and apply a phase compensation based on the phase difference to a third signal to be transmitted or received.

Clause 19. The DBF of clause 18, wherein the processor is further configured, in applying the phase compensation, to control a digital phase shifter to apply the phase compensation to the third signal at baseband.

Clause 20. The DBF of clause 18 further comprising an analog phase shifter configured to apply the phase compensation to the third signal.

Clause 21. The DBF of clause 18, wherein the processor is further configured, in applying the phase compensation, to communicate the phase compensation to an analog phase shifter for application to the third signal transmitted by or to be received by the DBF.

Clause 22. The DBF of clause 18 further comprising a second RFIO channel electrically coupled to the measurement network and configured to transmit a first RF calibration signal, from which the first RF signal is derived, onto the measurement network.

Clause 23. The DBF of clause 22, wherein the processor is further configured to: receive phase information for the second RF signal from a second DBF that received the second RF signal, derived from the first RF calibration signal; and compute the phase difference based on the first RF signal and the phase information for the second RF signal.

Clause 24. The DBF of clause 23, wherein the processor, in applying the phase compensation, is further configured to communicate the phase compensation to the second DBF for application to RF signals transmitted or received by the second DBF.

Clause 25. The DBF of clause 22, wherein the first RFIO channel is further configured to receive the second RF signal derived from a second RF calibration signal transmitted by a second DBF coupled to the measurement network.

Clause 26. The DBF of clause 25, wherein the processor, in applying the phase compensation, is further configured to communicate the phase compensation to the second DBF for application to RF signals transmitted or received by the second DBF.

Clause 27. The DBF of clause 18, wherein the first RFIO channel is further electrically coupled to a distribution network for RF signals (i) to be transmitted by the first RFIO channel for transmission over the air by at least one antenna element, and (ii) to be received over the air by the at least one antenna element and routed to the first RFIO channel.

Clause 28. A method of compensating for phase drift in a phased array antenna system, the method comprising: transmitting, from a first digital beamformer (DBF) of the phased array antenna system, a first RF signal to a measurement network; transmitting, from a second DBF of the phased array antenna system, a second RF signal to the measurement network; obtaining, by the measurement network, a first sample of the first RF signal and a second sample of the second RF signal; receiving the first sample and the second sample at the first DBF; computing a phase difference between the first RF signal and the second RF signal; and applying a phase compensation, based on the phase difference, by at least one of the first DBF or the second DBF.

Clause 29. The method of clause 28, wherein transmitting the first RF signal comprises upconverting, by the first DBF, a signal to be transmitted based on a transmit local oscillator (LO).

Clause 30. The method of clause 28, wherein transmitting the first RF signal comprises upconverting, by the first DBF, a signal to be transmitted based on a receive local oscillator (LO).

Clause 31. The method of clause 28, wherein transmitting the first RF signal comprises upconverting, by the first DBF, a first coded signal to be transmitted based on a first local oscillator (LO) signal distributed to the first DBF, and wherein transmitting the second RF signal comprises upconverting, by the second DBF, a second coded signal, distinct from the first coded signal, to be transmitted based on a second LO signal distributed to the second DBF.

Clause 32. The method of clause 28, wherein applying the phase compensation comprises: encoding, within the first DBF and the second DBF, the phase compensation into digital beam signals to be upconverted to RF and transmitted by the first DBF and the second DBF; and decoding, by the first DBF and the second DBF, phase of beams received over the air by the phased array antenna system employing the phase compensation.

Clause 33. The method of clause 28, wherein applying the phase compensation comprises: transmitting a third RF signal from the first DBF toward a first antenna element; phase shifting, by a first analog phase shifter, the third RF signal according to the phase compensation; transmitting a fourth RF signal form the second DBF toward a second antenna element; and phase shifting, by a second analog phase shifter, the fourth RF signal according to the phase compensation.

Clause 34. The method of clause 33, wherein applying the phase compensation further comprises: transmitting, by the first DBF, a first control signal including the phase compensation to the first analog phase shifter; and transmitting, by the second DBF, a second control signal including the phase compensation to the second analog phase shifter.

Clause 35. The method of clause 28, wherein applying the phase compensation comprises: receiving, over the air, a third RF signal at a first antenna element coupled with the first DBF; phase shifting, by a first analog phase shifter, the third RF signal according to the phase compensation; receiving, over the air, a fourth RF signal at a second antenna element coupled with the second DBF; and phase shifting, by a second analog phase shifter, the fourth RF signal according to the phase compensation.

Clause 36. The method of clause 35, wherein applying the phase compensation further comprises: transmitting, by the first DBF, a first control signal including the phase compensation to the first analog phase shifter; and transmitting, by the second DBF, a second control signal including the phase compensation to the second analog phase shifter.

Clause 37. The method of clause 28, wherein computing the phase difference comprises computing, by the first DBF, the phase difference, and wherein applying the phase compensation further comprises communicating, by the first DBF, the phase compensation to the second DBF.

The clauses above are provided for clarity of disclosure and support, and do not limit the scope of the appended claims. Features described in any one clause may be combined with features of any other clause, except where such combinations are clearly incompatible.

The components of the computing device can be implemented in circuitry. For example, the components can include and/or can be implemented using electronic circuits or other electronic hardware, which can include one or more programmable electronic circuits (e.g., microprocessors, graphics processing units (GPUs), digital signal processors (DSPs), central processing units (CPUs), and/or other suitable electronic circuits), and/or can include and/or be implemented using computer software, firmware, or any combination thereof, to perform the various operations described herein. The computing device may further include a display (as an example of the output device or in addition to the output device), a network interface configured to communicate and/or receive the data, any combination thereof, and/or other component(s). The network interface may be configured to communicate and/or receive Internet Protocol (IP) based data or other type of data.

The method 900 is illustrated as a logical flow diagram, the operations of which represent a sequence of operations that can be implemented in hardware, computer instructions, or a combination thereof. In the context of computer instructions, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular data types. The order in which the operations are described is not intended to be construed as a limitation, and any number of the described operations can be combined in any order and/or in parallel to implement the processes.

Additionally, the method 900 may be performed under the control of one or more computer systems configured with executable instructions and may be implemented as code (e.g., executable instructions, one or more computer programs, or one or more applications) executing collectively on one or more processors, by hardware, or combinations thereof. As noted above, the code may be stored on a computer-readable or machine-readable storage medium, for example, in the form of a computer program comprising a plurality of instructions executable by one or more processors. The computer-readable or machine-readable storage medium may be non-transitory.

The term "computer-readable medium" includes, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Specific details are provided in the description above to provide a thorough understanding of the embodiments and examples provided herein. However, it will be understood by one of ordinary skill in the art that the embodiments may be practiced without these specific details. For clarity of explanation, in some instances the present technology may be presented as including individual functional blocks comprising devices, device components, steps or routines in a method embodied in software, or combinations of hardware and software. Additional components may be used other than those shown in the figures and/or described herein. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Individual embodiments may be described above as a process or method which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in a figure. A process may correspond to a method, a function, a procedure, a subroutine, a subprogram, etc. When a process corresponds to a function, its termination can correspond to a return of the function to the calling function or the main function.

Processes and methods according to the above-described examples can be implemented using computer-executable instructions that are stored or otherwise available from computer-readable media. Such instructions can include, for example, instructions and data that cause or otherwise configure a general purpose computer, special purpose computer, or a processing device to perform a certain function or group of functions. Portions of computer resources used can be accessible over a network. The computer executable instructions may be, for example, binaries, intermediate format instructions such as assembly language, firmware, source code. Examples of computer-readable media that may be used to store instructions, information used, and/or information created during methods according to described examples include magnetic or optical disks, flash memory, USB devices provided with non-volatile memory, networked storage devices, and so on.

Devices implementing processes and methods according to these disclosures can include hardware, software, firmware, middleware, microcode, hardware description languages, or any combination thereof, and can take any of a variety of form factors. When implemented in software, firmware, middleware, or microcode, the program code or code segments to perform the necessary tasks (e.g., a computer-program product) may be stored in a computer-readable or machine-readable medium. A processor(s) may perform the necessary tasks. Typical examples of form factors include laptops, smart phones, mobile phones, tablet devices or other small form factor personal computers, personal digital assistants, rackmount devices, standalone devices, embedded systems, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are example means for providing the functions described in the disclosure.

Many embodiments of the technology described herein may take the form of computer- or controller-executable instructions, including routines executed by a programmable computer or controller. Those skilled in the relevant art will appreciate that the technology can be practiced on computer/controller systems other than those shown and described above. The technology can be embodied in a special-purpose computer, controller or data processor that is specifically programmed, configured or constructed to perform one or more of the computer-executable instructions described above. Accordingly, the terms "computer" and "controller" as generally used herein refer to any data processor and can include Internet appliances and hand-held devices (including palm-top computers, wearable computers, cellular or mobile phones, multi-processor systems, processor-based or programmable consumer electronics, network computers, mini computers and the like). Information handled by these computers can be presented at any suitable display medium, including an organic light emitting diode (OLED) display or liquid crystal display (LCD).

Although certain embodiments have been illustrated and described herein for purposes of description, a wide variety of alternate and/or equivalent embodiments or implementations calculated to achieve the same purposes may be substituted for the embodiments shown and described without departing from the scope of the present disclosure. This application is intended to cover any adaptations or variations of the embodiments discussed herein. Therefore, it is manifestly intended that embodiments described herein be limited only by the claims.

## Claims

1. A digital beamformer (DBF) comprising:

a first radio frequency input/output (RFIO) channel electrically coupled to a measurement network and configured to receive a first radio frequency (RF) signal over the measurement network; and
a processor configured to:

compute, based on the first RF signal, a phase difference between the first RF signal and a second RF signal;

and
apply a phase compensation based on the phase difference to a third signal to be transmitted or received.

2. The DBF of claim 1, wherein the processor is further configured, in applying the phase compensation, to control a digital phase shifter to apply the phase compensation to the third signal at baseband.

3. The DBF of claim 1 or claim 2 further comprising an analog phase shifter configured to apply the phase compensation to the third signal.

4. The DBF of any one of claims 1 to 3, wherein the processor is further configured, in applying the phase compensation, to communicate the phase compensation to an analog phase shifter for application to the third signal transmitted by or to be received by the DBF.

5. The DBF of any one of claims 1 to 4 further comprising a second RFIO channel electrically coupled to the measurement network and configured to transmit a first RF calibration signal, from which the first RF signal is derived, onto the measurement network.

6. The DBF of claim 5, wherein the processor is further configured to:

receive phase information for the second RF signal from a second DBF that received the second RF signal, derived from the first RF calibration signal; and
compute the phase difference based on the first RF signal and the phase information for the second RF signal.

7. The DBF of claim 6, wherein the processor, in applying the phase compensation, is further configured to communicate the phase compensation to the second DBF for application to RF signals transmitted or received by the second DBF.

8. The DBF of any one of claims 5 to 7, wherein the first RFIO channel is further configured to receive the second RF signal derived from a second RF calibration signal transmitted by a second DBF coupled to the measurement network.

9. The DBF of claim 8, wherein the processor, in applying the phase compensation, is further configured to communicate the phase compensation to the second DBF for application to RF signals transmitted or received by the second DBF.

10. The DBF of any one of claims 1 to 9, wherein the first RFIO channel is further electrically coupled to a distribution network for RF signals (i) to be transmitted by the first RFIO channel for transmission over the air by at least one antenna element, and (ii) to be received over the air by the at least one antenna element and routed to the first RFIO channel.

11. A phased array antenna system including the DBF of any of claims 1 to 10 as a second DBF, the phased array antenna system further comprising:

the measurement network; and
a first DBF coupled to the measurement network and configured to transmit the first RF calibration signal onto the measurement network.

12. The phased array antenna system of claim 11, wherein the measurement network comprises:
a first coupler configured to receive the first RF calibration signal transmitted by the first DBF and propagate the first RF signal into an RF input/output (RFIO) channel of the second DBF.

13. The phased array antenna system of claim 11 or claim 12, wherein a first local oscillator (LO) generation circuit or a first LO distribution circuit of the first DBF and a second LO generation circuit or a second LO distribution circuit of the second DBF exhibit different phase coefficients versus temperature with respect to each other.

14. The phased array antenna system of claim 13, wherein the first DBF is further configured to up-convert a first coded calibration signal to the first RF calibration signal based on a first local oscillator (LO) signal;

wherein the second DBF is further configured to down-convert the first RF signal based on a second LO signal; and
wherein the first LO generation circuit or the first LO distribution circuit for the first LO signal is asymmetric with respect to the second LO generation circuit or the second LO distribution circuit for the second LO signal.

**15.** The phased array antenna system of claim 14, wherein the second DBF is further configured to:

up-convert a second coded calibration signal to a second RF calibration signal based on the second LO signal;
transmit the second RF calibration signal onto the measurement network;
receive the second RF signal, derived from the second RF calibration signal, from the measurement network; and
down-convert the second RF signal based on the second LO signal.

**16.** The phased array antenna system of any one of claims 11 to 15, wherein the phased array antenna system further comprises:

a third DBF coupled to the measurement network and configured to transmit a fourth RF calibration signal on the measurement network;
wherein the second DBF is further configured to:

transmit a second RF calibration signal and a third RF calibration signal onto the measurement network; and
receive the second RF signal, derived from the second RF calibration signal, a third RF signal, derived from the third RF calibration signal, and a fourth RF signal, derived form the fourth RF calibration signal, from the measurement network; and

wherein the processor of the second DBF is further configured to:

compute a phase difference between the third RF signal and a fourth RF signal; and
compute a phase compensation to be applied by at least one of the second DBF or the third DBF based on the phase difference.

**17.** The phased array antenna system of claim 16, wherein a first local oscillator (LO) generation circuit or a first LO distribution circuit of the first DBF, a second LO generation circuit or a second LO distribution circuit of the second DBF, and a third LO generation circuit or a third LO distribution circuit of the third DBF exhibit different phase coefficients versus temperature with respect to each other.

**18.** A method of compensating for phase drift in the phased array antenna system of any of claims 11 to 17, the method comprising:

transmitting, from the first DBF, the first RF signal to the measurement network;
transmitting, from the second DBF, the second RF signal to the measurement network;
obtaining, by the measurement network, a first sample of the first RF signal and a second sample of the second RF signal;
receiving the first sample and the second sample at the first DBF;
computing the phase difference between the first RF signal and the second RF signal; and
applying the phase compensation, based on the phase difference, by at least one of the first DBF or the second DBF.

**19.** The method of claim 18, wherein applying the phase compensation comprises:

encoding, within the first DBF and the second DBF, the phase compensation into digital beam signals to be upconverted to RF and transmitted by the first DBF and the second DBF; and
decoding, by the first DBF and the second DBF, phase of beams received over the air by the phased array antenna system employing the phase compensation.

FIG. 1

FIG. 2

FIG. 3

FIG. 4a

FIG. 4b

FIG. 5a

FIG. 5b

FIG. 6

FIG. 7

FIG. 8

900

```
┌─────────────────────────────────────────────────────────┐
│   TRANSMIT, FROM A FIRST DBF, A FIRST RF SIGNAL TO A      │      910
│                MEASUREMENT NETWORK                        │
└─────────────────────────────────────────────────────────┘
                            │
                            ▼
┌─────────────────────────────────────────────────────────┐
│   TRANSMIT, FROM A SECOND DBF, A SECOND RF SIGNAL TO THE  │      920
│                MEASUREMENT NETWORK                        │
└─────────────────────────────────────────────────────────┘
                            │
                            ▼
┌─────────────────────────────────────────────────────────┐
│   OBTAIN A FIRST SAMPLE OF THE FIRST RF SIGNAL AND A      │      930
│   SECOND SAMPLE OF THE SECOND RF SIGNAL                   │
└─────────────────────────────────────────────────────────┘
                            │
                            ▼
┌─────────────────────────────────────────────────────────┐
│                                                          │
│   RECEIVE THE FIRST SAMPLE AND THE SECOND SAMPLE AT      │      940
│   THE FIRST DBF                                          │
│                                                          │
└─────────────────────────────────────────────────────────┘
                            │
                            ▼
┌─────────────────────────────────────────────────────────┐
│   COMPUTE A PHASE DIFFERENCE BETWEEN THE FIRST RF        │      950
│   SIGNAL AND THE SECOND RF SIGNAL                        │
└─────────────────────────────────────────────────────────┘
                            │
                            ▼
┌─────────────────────────────────────────────────────────┐
│   APPLY A PHASE COMPENSATION, BASED ON THE DIFFERENCE,   │      960
│   BY AT LEAST ONE OF THE FIRST DBF OR THE SECOND DBF     │
└─────────────────────────────────────────────────────────┘
```

FIG. 9

Europäisches
Patentamt
European
Patent Office
Office européen
des brevets

# EUROPEAN SEARCH REPORT

**Application Number**

EP 25 21 2787

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/131979 A1 (NILSSON MAGNUS [SE]) 2 May 2019 (2019-05-02) * paragraph [0001] - paragraph [0035]; figures 2,3 * ----- | 1-19 | INV. H04B17/12 H04W56/00 H04B7/06 |
| X | US 2015/124634 A1 (HAREL HAIM [US] ET AL) 7 May 2015 (2015-05-07) * paragraph [0027] - paragraph [0036]; figures 3,4 * ----- | 1-19 | |
| A | US 2009/251368 A1 (MCCUNE JR EARL W [US]) 8 October 2009 (2009-10-08) * paragraph [0033] * ----- | 2-4,19 | |
| A | US 2022/006185 A1 (YETISIR ERSIN [US]) 6 January 2022 (2022-01-06) * the whole document * ----- | 1-19 | |

|  |
|---|
| **TECHNICAL FIELDS SEARCHED (IPC)** |
| H04B H04W |

The present search report has been drawn up for all claims

| Place of search | Date of completion of the search | Examiner |
|---|---|---|
| Munich | 11 February 2026 | Epple, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 2787

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2026

| Patent document cited in search report | Publication date | Patent family member(s) | Publication date |
|---|---|---|---|
| US 2019131979 A1 | 02-05-2019 | BR 112018073571 A2 | 19-03-2019 |
| | | CA 3027577 A1 | 28-12-2017 |
| | | EP 3476049 A1 | 01-05-2019 |
| | | US 2019131979 A1 | 02-05-2019 |
| | | WO 2017220138 A1 | 28-12-2017 |
| US 2015124634 A1 | 07-05-2015 | NONE | |
| US 2009251368 A1 | 08-10-2009 | NONE | |
| US 2022006185 A1 | 06-01-2022 | DE 102021117170 A1 | 05-01-2022 |
| | | DE 102021117172 A1 | 05-01-2022 |
| | | US 2022006185 A1 | 06-01-2022 |
| | | US 2022352636 A1 | 03-11-2022 |
| | | US 2023091640 A1 | 23-03-2023 |
| | | US 2024072435 A1 | 29-02-2024 |
| | | US 2025174890 A1 | 29-05-2025 |
| | | US 2025210858 A1 | 26-06-2025 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 63715434